# EUROPEAN PATENT APPLICATION

(11) **EP 4 412 294 A1**
(43) Date of publication of application: **07.08.2024**
(21) Application number: 22876256.3
(22) Date of filing: 27.09.2022
(51) Int. Cl.: H04W 24/10, H04L 27/26, H04W 24/02, H04W 28/06

(54) **COMMUNICATION SYSTEM**

(30) Priority: 28.09.2021 JP 2021158264
(71) Applicant: MITSUBISHI ELECTRIC CORPORATION, Chiyoda-ku Tokyo 100-8310 (JP)
(72) Inventor: SHIMODA, Tadahiro, Tokyo 100-8310 (JP); MOCHIZUKI, Mitsuru, Tokyo 100-8310 (JP)
(74) Representative: Mewburn Ellis LLP
(86) International application number: PCT/JP2022/036008
(87) International publication number: WO 2023/054390

(57) **Abstract**

A communication system includes: a communication terminal (UE) capable of encoding data by using an encoding model that encodes and outputs data that has been input; and a base station including a central unit (CU) and one or more distributed units (DU), the distributed units decoding data encoded with the encoding model by using a decoding model that, when encoded data is input, decodes and outputs the data, and the central unit or the distributed units perform machine learning by using learning data including data transmitted by the communication terminal without performing encoding to generate the encoding model and the decoding model, and notify the communication terminal of a learning result of the encoding model.

## Description

### Field

The present disclosure relates to a radio communication technology.

### Background

The 3rd Generation Partnership Project (3GPP), which is a standard organization of mobile communication systems, has been studying a communication system called long term evolution (LTE) for radio sections and called system architecture evolution (SAE) for an entire system configuration including a core network and a radio access network (hereinafter, also collectively referred to as a network) (for example, Non Patent Literatures 1 to 5). The communication system is also referred to as a 3.9 generation (3.9 G) system.

As an access scheme of LTE, orthogonal frequency division multiplexing (OFDM) is used in a downlink direction, and single carrier frequency division multiple access (SC-FDMA) is used in an uplink direction. In addition, unlike wideband code division multiple access (W-CDMA), LTE does not provide circuit switching and provides only a packet communication system.

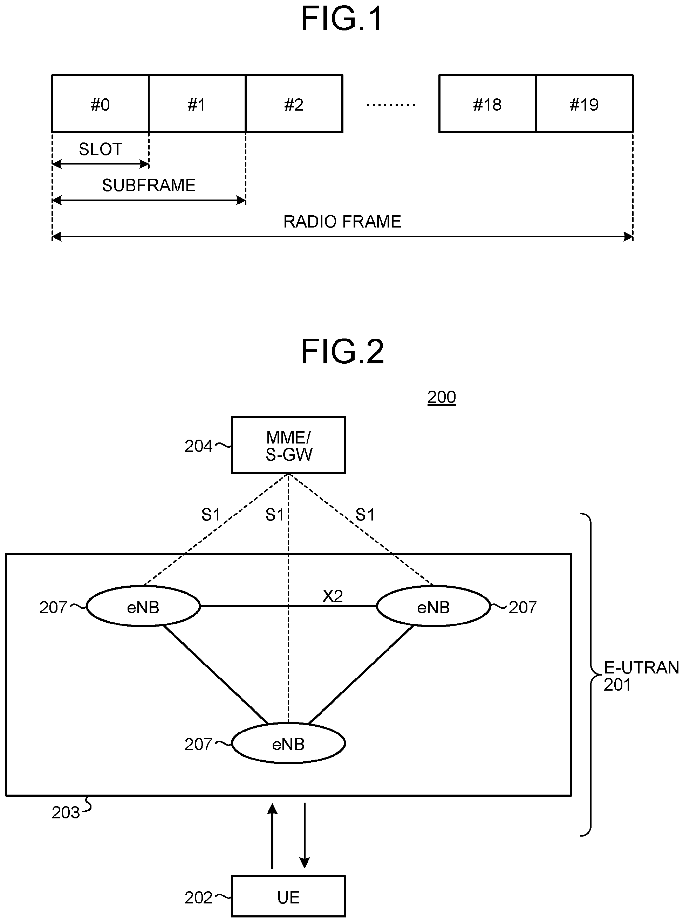

Decisions by 3GPP regarding a frame configuration in an LTE system described in Non Patent Literature 1 (Chapter 5) will be described with reference to FIG. 1. FIG. 1 is an explanatory diagram illustrating a configuration of a radio frame used in an LTE communication system. In FIG. 1, one radio frame is 10 ms. The radio frame is divided into 10 equally sized subframes. The subframe is divided into two equally sized slots. Downlink synchronization signals are included in first and sixth subframes in each radio frame. The synchronization signals are classified into a primary synchronization signal (P-SS) and a secondary synchronization signal (S-SS).

Decisions by 3GPP regarding a channel configuration in the LTE system are described in Non Patent Literature 1 (Chapter 5). It is assumed that also in a closed subscriber group (CSG) cell, the same channel configuration as that of a non-CSG cell is used.

A physical broadcast channel (PBCH) is a channel for downlink transmission from a base station device (hereinafter, sometimes simply referred to as a "base station") to a communication terminal device (hereinafter, sometimes simply referred to as a "communication terminal") such as a user equipment device (hereinafter, sometimes simply referred to as "user equipment"). A BCH transport block is mapped to four subframes in a 40-ms interval. There is no explicit signaling of 40-ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted on a per subframe basis.

A physical downlink control channel (PDCCH) is a channel for downlink transmission from a base station to a communication terminal. The PDCCH provides resource allocation information of a downlink shared channel (DL-SCH) which is one of transport channels to be described later, resource allocation information of a paging channel (PCH) which is one of the transport channels to be described later, and hybrid automatic repeat request (HARQ) information about the DL-SCH. The PDCCH carries an uplink scheduling grant. The PDCCH carries acknowledgement (Ack)/negative acknowledgement (Nack) which is a response signal to uplink transmission. The PDCCH is also referred to as an L1/L2 control signal.

A physical downlink shared channel (PDSCH) is a channel for downlink transmission from a base station to a communication terminal. The downlink shared channel (DL-SCH) which is a transport channel and the PCH which is a transport channel are mapped to the PDSCH.

A physical multicast channel (PMCH) is a channel for downlink transmission from a base station to a communication terminal. A multicast channel (MCH) which is a transport channel is mapped to the PMCH.

A physical uplink control channel (PUCCH) is a channel for uplink transmission from a communication terminal to a base station. The PUCCH carries Ack/Nack which is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in MIMO. The PMI is information on a precoding weight matrix used in MIMO. The CQI is quality information indicating quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) which is one of the transport channels is mapped to the PUSCH.

A physical hybrid ARQ (HARQ) indicator channel (PHICH) is a channel for downlink transmission from a base station to a communication terminal. The PHICH carries Ack/Nack which is a response signal to uplink transmission. A physical random access channel (PRACH) is a channel for uplink transmission from a communication terminal to a base station. The PRACH carries a random access preamble.

A downlink reference signal (RS) is a symbol known in the LTE communication system. The following five types of downlink reference signals are defined. The signals are cell-specific reference signal (CRS), an MBSFN reference signal, a data demodulation reference signal (DM-RS) which is a UE-specific reference signal, a positioning reference signal (PRS), and a channel state information reference signal (CSI-RS). As a measurement of a physical layer of a communication terminal, there is a measurement of reference signal received power (RSRP).

Similarly, an uplink reference signal is a symbol known in the LTE communication system. The following two types of uplink reference signals are defined. The signals are a data demodulation reference signal (DMRS) and a sounding reference signal (SRS).

Transport Channels described in Non Patent Literature 1 (Chapter 5) will be described. Among downlink transport channels, a broadcast channel (BCH) is broadcast in the entire coverage area of the base station (cell). The BCH is mapped to the physical broadcast channel (PBCH).

Retransmission control by hybrid ARQ (HARQ) is applied to the downlink shared channel (DL-SCH). The DL-SCH can be broadcast in the entire coverage area of the base station (cell). The DL-SCH supports dynamic or semi-static resource allocation. The semi-static resource allocation is also referred to as persistent scheduling. The DL-SCH supports discontinuous reception (DRX) of a communication terminal in order to reduce power consumption of the communication terminal. The DL-SCH is mapped to the physical downlink shared channel (PDSCH).

The paging channel (PCH) supports DRX of a communication terminal in order to enable the communication terminal to reduce power consumption. The PCH is required to be broadcast in the entire coverage area of the base station (cell). The PCH is mapped to a physical resource such as the physical downlink shared channel (PDSCH) that can be dynamically used for traffic.

A multicast channel (MCH) is used for broadcast in the entire coverage area of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control by hybrid ARQ (HARQ) is applied to the uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH has a risk of collision. The RACH is mapped to the physical random access channel (PRACH).

The HARQ will be described. The HARQ is a technology for improving communication quality of a transmission path by a combination of automatic repeat request (ARQ) and error correction (forward error correction). The HARQ has an advantage that error correction effectively functions by retransmission even for a transmission path whose communication quality changes. In particular, it is also possible to further improve the quality in retransmission by combining a reception result of first transmission and a reception result of the retransmission.

An example of a retransmission method will be described. In a case where a receiver cannot correctly decode received data, in other words, in a case where a cyclic redundancy check (CRC) error occurs (CRC=NG), "Nack" is transmitted from the receiver to a transmitter. The transmitter that has received "Nack" retransmits the data. In a case where the receiver can correctly decode received data, in other words, in a case where a CRC error does not occur (CRC=OK), "Ack" is transmitted from the receiver to the transmitter. The transmitter that has received "Ack" transmits next data.

A logical Channel described in Non Patent Literature 1 (Chapter 6) will be described. A broadcast control channel (BCCH) is a downlink channel for broadcast system control information. The BCCH which is a logical channel is mapped to the broadcast channel (BCH) or the downlink shared channel (DL-SCH) each of which is a transport channel.

A paging control channel (PCCH) is a downlink channel for transmitting changes in paging information and system information. The PCCH is used in a case when the network does not know the cell location of a communication terminal. The PCCH which is a logical channel is mapped to the paging channel (PCH) which is a transport channel.

A common control channel (CCCH) is a channel for transmission control information between a communication terminal and a base station. The CCCH is used in a case where the communication terminal has no RRC connection with the network. In the downlink direction, the CCCH is mapped to the downlink shared channel (DL-SCH) which is a transport channel. In the uplink direction, the CCCH is mapped to the uplink shared channel (UL-SCH) which is a transport channel.

A multicast control channel (MCCH) is a downlink channel for point-to-multipoint transmission. The MCCH is used for transmission of MBMS control information for one or several MTCHs from the network to a communication terminal. The MCCH is used only by a communication terminal that is receiving the MBMS. The MCCH is mapped to the multicast channel (MCH) which is a transport channel.

A dedicated control channel (DCCH) is a channel for transmitting dedicated control information between a communication terminal and the network on a point-to-point basis. The DCCH is used in a case where the communication terminal has an RRC connection. The DCCH is mapped to the uplink shared channel (UL-SCH) in uplink, and is mapped to the downlink shared channel (DL-SCH) in downlink.

A dedicated traffic channel (DTCH) is a point-to-point communication channel for transmitting user information to a dedicated communication terminal. The DTCH exists in both uplink and downlink. The DTCH is mapped to the uplink shared channel (UL-SCH) in uplink, and is mapped to the downlink shared channel (DL-SCH) in downlink.

A multicast traffic Channel (MTCH) is a downlink channel for transmitting traffic data from the network to a communication terminal. The MTCH is a channel used only by a communication terminal that is receiving the MBMS. The MTCH is mapped to the multicast channel (MCH).

CGI represents a cell global identifier. ECGI represents an E-UTRAN cell global identifier. A closed subscriber group (CSG) cell is introduced into LTE, long term evolution advanced (LTE-A) described later, and universal mobile telecommunication system (UMTS).

Location tracking of communication terminals is performed in units of areas each including one or more cells. The location tracking is performed in order to track the location of a communication terminal to call the communication terminal, in other words, in order to enable the communication terminal to receive an incoming call, even in an idle state. An area for the location tracking of communication terminals is referred to as a tracking area.

Furthermore, in 3GPP, as Release 10, formulation of long term evolution advanced (LTE-A) standard is in progress (see Non Patent Literatures 3 and 4). LTE-A is based on an LTE radio section communication system, and is configured by adding some new technologies to the system.

Regarding the LTE-A system, in order to support wider transmission bandwidths up to 100 MHz, carrier aggregation (CA) for aggregating two or more component carriers (CCs) is under study. The CA is described in Non Patent Literature 1.

In a case where the CA is configured, a UE which is a communication terminal has only one RRC connection with a network (NW). In the RRC connection, one serving cell provides NAS mobility information and security input. This cell is referred to as a primary cell (PCell). In downlink, a carrier corresponding to the PCell is a downlink primary component carrier (DL PCC). In uplink, a carrier corresponding to the PCell is an uplink primary component carrier (UL PCC).

Depending on the capability of the UE, a secondary cell (SCell) is configured to form a set of serving cells with the PCell. In downlink, a carrier corresponding to the SCell is a downlink secondary component carrier (DL SCC). In uplink, a carrier corresponding to the SCell is an uplink secondary component carrier (UL SCC).

A set of serving cells including one PCell and one or more SCells is configured for one UE.

In addition, new technologies in LTE-A include a technology for supporting wider bands (wider bandwidth extension), a coordinated multiple point transmission and reception (CoMP) technology. The CoMP studied for LTE-A in 3GPP is described in Non Patent Literature 1.

In addition, use of a small eNB (hereinafter, sometimes referred to as a "small-scale base station device") configuring a small cell has been studied in 3GPP in order to cope with enormous traffic in the future. For example, a technology is under study with which a large number of small eNBs are installed to configure a large number of small cells, thereby improving spectral efficiency to increase communication capacity. Specifically, there is dual connectivity (abbreviated as DC) with which a UE is connected to two eNBs to perform communication. The DC is described in Non Patent Literature 1.

One of the eNBs that perform dual connectivity (DC) may be referred to as a "master eNB (abbreviated as MeNB)", and the other thereof may be referred to as a "secondary eNB (abbreviated as SeNB)".

The traffic volume of a mobile network is on the increase, and the communication speed is also increasing. When operations of LTE and LTE-A are fully started, the communication speed is expected to be further increased.

Furthermore, for increasingly advanced mobile communication, a fifth generation (hereinafter, sometimes referred to as "5G") radio access system has been studied whose service is aimed to be launched in or after 2020. For example, in Europe, 5G requirements are compiled by an organization called METIS (see Non Patent Literature 5).

For the 5G radio access system, the followings are exemplified as requirements: as compared with the LTE system, the system capacity is 1000 times, the data transmission speed is 100 times, the data processing latency is one-tenth (1/10), the number of simultaneously connected communication terminals is 100 times, and further reduction in power consumption and reduction in device cost are achieved.

In order to satisfy such requirements, 5G standards have been studied as Release 15 in 3GPP (see Non Patent Literatures 6 to 19). The technology of 5G radio sections is referred to as "new radio access technology" ("new radio" is abbreviated as "NR").

An NR system has been studied on the basis of the LTE system and the LTE-A system, but includes additions and changes from the LTE system and the LTE-A system in the following points.

As an access scheme of NR, OFDM is used in the downlink direction, and OFDM and DFT-spread-OFDM (DFT-s-OFDM) are used in the uplink direction.

In NR, frequencies higher than those in LTE can be used to improve the transmission speed and to reduce the processing latency.

In NR, cell coverage is ensured by forming a narrow beam-shaped transmission/reception range (beamforming) and changing a direction of the beam (beam sweeping).

In a frame configuration of NR, various subcarrier spacings, that is, various numerologies, are supported. Regardless of the numerologies, one subframe is 1 millisecond long, and one slot includes 14 symbols in NR. In addition, the number of slots included in one subframe is one in a numerology with a subcarrier spacing of 15 kHz, and increases in proportion to subcarrier spacings in other numerologies (see Non Patent Literature 13 (3GPP TS38.211)).

A downlink synchronization signal in NR is transmitted as a synchronization signal burst (hereinafter, sometimes referred to as an SS burst) from a base station at a predetermined period for a predetermined duration. The SS burst includes a synchronization signal block (hereinafter, sometimes referred to as an SS block) for each beam of the base station.

The base station transmits the SS blocks of respective beams within the duration of the SS burst while changing the beams. The SS block includes the P-SS, the S-SS, and the PBCH.

In NR, a phase tracking reference signal (PTRS) is added as a downlink reference signal of NR, and thereby an influence of phase noise is reduced. Regarding an uplink reference signal as well, the PTRS is added similarly to the downlink.

In NR, a slot format indication (SFI) has been added to information included in the PDCCH in order to perform flexible switching between the DL and the UL in a slot.

Furthermore, in NR, the base station sets a part of a carrier frequency band (hereinafter, sometimes referred to as bandwidth part (BWP)) in advance for a UE, and the UE performs transmission and reception with the base station in the BWP, thereby reducing power consumption in the UE.

In 3GPP, as a form of the DC, DC performed by an LTE base station and an NR base station connected to an EPC, DC performed by NR base stations connected to a 5G core system, and DC performed by an LTE base station and an NR base station connected to the 5G core system have been studied (see Non Patent Literatures 12, 16, and 19).

In addition, in 3GPP, support of a service (which may be an application) using sidelink (SL) communication (also referred to as PC5 communication) in both an evolved packet system (EPS) to be described later and a 5G core system has been studied (see Non Patent Literatures 1, 16, 20, 21, 22, and 23). In the SL communication, communication is performed between terminals. Examples of the service using the SL communication include a vehicle-to-everything (V2X) service and a proximity service. In the SL communication, not only direct communication between terminals but also communication between a UE and an NW via a relay has been proposed (see Non Patent Literatures 20, 23, and 26) .

Furthermore, in 3GPP, integrated access and backhaul (IAB) has been studied in which both an access link which is a link between a UE and a base station and a backhaul link which is a link between base stations are performed by radio (see Non Patent Literatures 16 and 27).

In addition, several new technologies have been studied in 3GPP. For example, application of artificial intelligence (AI) and machine learning (ML) to PHY control of a RAN has been studied. Reduction in the number of transmission bits for a CSI report by encoding CSI using machine learning, improvement in beam quality by application of AI to beam control, reduction in communication overhead by optimization of a reference signal using AI, improvement in positioning performance by application of AI to positioning, and the like have been studied (see Non Patent Literatures 28 to 34).

### Citation List

### Non Patent Literature

Non Patent Literature 1: 3GPP TS 36.300 V16.5.0
Non Patent Literature 2: 3GPP S1-083461
Non Patent Literature 3: 3GPP TR 36.814 V9.2.0
Non Patent Literature 4: 3GPP TR 36.912 V16.0.0
Non Patent Literature 5: "Scenarios, requirements and KPIs for 5G mobile and wireless system", ICT-317669-METIS/D1.1
Non Patent Literature 6: 3GPP TR 23.799 V14.0.0
Non Patent Literature 7: 3GPP TR 38.801 V14.0.0
Non Patent Literature 8: 3GPP TR 38.802 V14.2.0
Non Patent Literature 9: 3GPP TR 38.804 V14.0.0
Non Patent Literature 10: 3GPP TR 38.912 V16.0.0
Non Patent Literature 11: 3GPP RP-172115
Non Patent Literature 12: 3GPP TS 37.340 V16.5.0
Non Patent Literature 13: 3GPP TS 38.211 V16.5.0
Non Patent Literature 14: 3GPP TS 38.213 V16.5.0
Non Patent Literature 15: 3GPP TS 38.214 V16.5.0
Non Patent Literature 16: 3GPP TS 38.300 V16.5.0
Non Patent Literature 17: 3GPP TS 38.321 V16.4.0
Non Patent Literature 18: 3GPP TS 38.212 V16.5.0
Non Patent Literature 19: 3GPP TS 38.331 V16.4.1
Non Patent Literature 20: 3GPP TR 23.703 V12.0.0
Non Patent Literature 21: 3GPP TS 23.501 V17.0.0
Non Patent Literature 22: 3GPP TS 23.287 V16.5.0
Non Patent Literature 23: 3GPP TS 23.303 V16.0.0
Non Patent Literature 24: 3GPP TS 38.305 V16.4.0
Non Patent Literature 25: 3GPP TS 23.273 V17.0.0
Non Patent Literature 26: 3GPP TR 38.836 V17.0.0
Non Patent Literature 27: 3GPP TS 38.401 V16.5.0
Non Patent Literature 28: 3GPP TR 37.817 V0.1.0
Non Patent Literature 29: 3GPP RP-201620
Non Patent Literature 30: 3GPP RWS-210038
Non Patent Literature 31: 3GPP RWS-210185
Non Patent Literature 32: 3GPP RWS-210235
Non Patent Literature 33: 3GPP RWS-210260
Non Patent Literature 34: 3GPP RWS-210198
Non Patent Literature 35: 3GPP TS 37.320 V16.5.0
Non Patent Literature 36: 3GPP TS 38.473 V16.6.0

### Summary of Invention

### Problem to be solved by the Invention

It has been proposed that a 5G base station and a 5G UE have part or whole of an AI model, and thus CSI from the UE is encoded and fed back to the base station (See Non Patent Literatures 30 and 34). However, a learning subject of the AI model and a subject having the AI model in a case where the base station is divided into a central unit (hereinafter, sometimes referred to as a CU) and a distributed unit (hereinafter, sometimes referred to as a DU) 219 are not disclosed. Therefore, there arises a problem in that encoding and decoding of a CSI report using the AI model cannot be realized in the base station in which the CU and the DU are separated.

In view of the above problem, an object of the present disclosure is to realize improvement in the efficiency of a communication system by enabling AI to be applied to encoding and decoding of data.

### Means to Solve the Problem

A communication system according to the present disclosure comprises: a communication terminal capable of encoding data by using an encoding model that encodes and outputs data that has been input; and a base station including a central unit and one or more distributed units, the distributed units decoding data encoded with the encoding model by using a decoding model that, when encoded data is input, decodes and outputs the data. The central unit or the distributed units perform machine learning by using learning data including data transmitted by the communication terminal without performing encoding to generate the encoding model and the decoding model, and notify the communication terminal of a learning result of the encoding model.

### Effects of the Invention

The present disclosure achieves an effect that it is possible to realize improvement in the efficiency of a communication system by enabling AI to be applied to encoding and decoding of data.

Objects, features, aspects, and advantages of the present disclosure will become more apparent from the following detailed description and the accompanying drawings.

### Brief Description of Drawings

FIG. 1 is an explanatory diagram illustrating a configuration of a radio frame used in an LTE communication system.
FIG. 2 is a block diagram illustrating an overall configuration of an LTE communication system 200 that has been discussed in 3GPP.
FIG. 3 is a block diagram illustrating an overall configuration of an NR communication system 210 that has been discussed in 3GPP.
FIG. 4 is a configuration diagram of DC performed by an eNB and a gNB connected to an EPC.
FIG. 5 is a configuration diagram of DC performed by gNBs connected to an NG core.
FIG. 6 is a configuration diagram of DC performed by an eNB and the gNB connected to the NG core.
FIG. 7 is a configuration diagram of DC performed by an eNB and the gNB connected to the NG core.
FIG. 8 is a block diagram illustrating a configuration of user equipment 202 illustrated in FIG. 2.
FIG. 9 is a block diagram illustrating a configuration of a base station 203 illustrated in FIG. 2.
FIG. 10 is a block diagram illustrating a configuration of an MME.
FIG. 11 is a block diagram illustrating a configuration of a 5GC unit.
FIG. 12 is a flowchart schematically illustrating a cell search to an idle state operation performed by a communication terminal (UE) in the LTE communication system.
FIG. 13 is a diagram illustrating an example of a configuration of a cell in an NR system.
FIG. 14 is a configuration diagram of a learning device related to a communication system in a first embodiment.
FIG. 15 is a diagram illustrating an example of a neural network used in learning of an encoding model and a decoding model in the first embodiment.
FIG. 16 is a flowchart regarding a learning process performed by the learning device in the first embodiment.
FIG. 17 is a configuration diagram of an inference device applied to an encoding device among inference devices related to the communication system in the first embodiment.
FIG. 18 is a diagram illustrating an example of a learned model used in an encoding unit in the first embodiment.
FIG. 19 is a flowchart regarding encoding in an inference process performed by the inference device in the first embodiment.
FIG. 20 is a configuration diagram of an inference device applied to a decoding device among inference devices related to the communication system in the first embodiment.
FIG. 21 is a diagram illustrating an example of a learned model used in a decoding unit in the first embodiment.
FIG. 22 is a flowchart regarding decoding in the inference process performed by the inference device in the first embodiment.
FIG. 23 is a sequence diagram illustrating a learning operation of encoding/decoding models of CSI and encoding/decoding operations using a learned model in the first embodiment.
FIG. 24 is a sequence diagram illustrating other examples of the learning operation of the encoding/decoding models of the CSI and the encoding/decoding operations using the learned model in the first embodiment.
FIG. 25 is a sequence diagram illustrating an example of switching of operation phases of the encoding/decoding models of the CSI in the first embodiment.
FIG. 26 is a diagram of a first half of a sequence illustrating an example of a relearning operation of encoding/decoding models of CSI in DUs and UEs under a CU in the first embodiment.
FIG. 27 is a diagram of a second half of the sequence illustrating the example of the relearning operation of the encoding/decoding models of the CSI in the DUs and the UEs under the CU in the first embodiment.
FIG. 28 is a diagram of a first half of a sequence illustrating an example of the relearning operation of the encoding/decoding models of the CSI in the DUs and the UEs under the CU in the first embodiment.
FIG. 29 is a diagram of a second half of the sequence illustrating the example of the relearning operation of the encoding/decoding models of the CSI in the DUs and the UEs under the CU in the first embodiment.
FIG. 30 is a diagram of a first half of a sequence illustrating another example of the relearning operation of the encoding/decoding models of the CSI in the DUs and the UEs under the CU in the first embodiment.
FIG. 31 is a diagram of a second half of the sequence illustrating the another example of the relearning operation of the encoding/decoding models of the CSI in the DUs and the UEs under the CU in the first embodiment.
FIG. 32 is a sequence diagram illustrating an operation of configuring encoding/decoding models in handover to a different DU under the same CU in a second embodiment.
FIG. 33 is a sequence diagram illustrating another example of the operation of configuring the encoding/decoding models in the handover to the different DU under the same CU in the second embodiment.
FIG. 34 is a sequence diagram illustrating another example of the operation of configuring the encoding/decoding models in the handover to the different DU under the same CU in the second embodiment.
FIG. 35 is a diagram illustrating an example of encoding/decoding models used in IAB base stations and UEs in a third embodiment.
FIG. 36 is a diagram illustrating other examples of the encoding/decoding models used in the IAB base stations and the UEs in the third embodiment.
FIG. 37 is a diagram illustrating other examples of the encoding/decoding models used in the IAB base stations and the UEs in the third embodiment.
FIG. 38 is a diagram illustrating other examples of the encoding/decoding models used in the IAB base stations and the UEs in the third embodiment.
FIG. 39 is a diagram illustrating other examples of the encoding/decoding models used in the IAB base stations and the UEs in the third embodiment.

### Description of Embodiments

### First Embodiment.

FIG. 2 is a block diagram illustrating an overall configuration of an LTE communication system 200 that has been discussed in 3GPP. FIG. 2 will be described. A radio access network is referred to as an evolved universal terrestrial radio access network (E-UTRAN) 201. A user equipment device (hereinafter referred to as "user equipment (UE)") 202 which is a communication terminal device can perform radio communication with a base station device (hereinafter referred to as "base station (E-UTRAN NodeB (eNB))") 203, and transmits and receives signals by radio communication.

Here, the "communication terminal device" includes not only a user equipment device such as a mobile phone terminal device that is movable, but also a non-moving device such as a sensor. In the following description, the "communication terminal device" may be simply referred to as a "communication terminal".

If a control protocol for the user equipment 202, for example, radio resource control (RRC), and a user plane (hereinafter, sometimes referred to as a U-plane), for example, a packet data convergence protocol (PDCP), radio link control (RLC), medium access control (MAC), or a physical layer (PHY), are terminated in the base station 203, the E-UTRAN includes one or a plurality of base stations 203.

Radio resource control (RRC) as a control protocol between the user equipment 202 and the base station 203 performs broadcast, paging, RRC connection management, and the like. As states of the base station 203 and the user equipment 202 in RRC, there are RRC_IDLE and RRC_CONNECTED.

In RRC_IDLE, public land mobile network (PLMN) selection, broadcast of system information (SI), paging, cell re-selection, mobility, and the like are performed. In RRC_CONNECTED, the user equipment has RRC connection and can transmit and receive data to and from a network. In addition, in RRC_CONNECTED, handover (HO), measurement of a neighbor cell, and the like are performed.

The base station 203 includes one or a plurality of eNBs 207. A system including an evolved packet core (EPC) which is a core network and the E-UTRAN 201 which is a radio access network is referred to as an evolved packet system (EPS). The EPC which is a core network and the E-UTRAN 201 which is a radio access network may be collectively referred to as a "network".

Each eNB 207 is connected via an S1 interface to an MME/S-GW unit (hereinafter, sometimes referred to as an "MME unit") 204 including a mobility management entity (MME) or a serving gateway (S-GW), or the MME and the S-GW, and control information is communicated between the eNB 207 and the MME unit 204. A plurality of MME units 204 may be connected to one eNB 207. The eNBs 207 are connected to each other via an X2 interface, and the control information is communicated between the eNBs 207.

The MME unit 204 is a higher-level device, specifically, a higher-level node, and controls connection between the eNB 207 which is a base station and the user equipment (UE) 202. The MME unit 204 configures the EPC which is a core network. The base station 203 configures the E-UTRAN 201.

The base station 203 may configure one cell or a plurality of cells. Each cell has a predetermined range as a coverage which is a range in which communication with the user equipment 202 is possible, and performs radio communication with the user equipment 202 within the coverage. In a case where one base station 203 configures a plurality of cells, each cell is configured to be able to communicate with the user equipment 202.

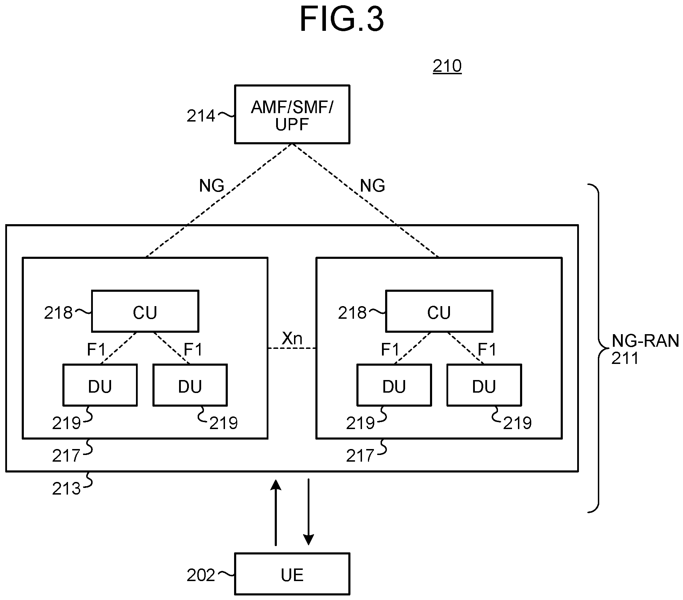

FIG. 3 is a block diagram illustrating an overall configuration of a 5G communication system 210 that has been discussed in 3GPP. FIG. 3 will be described. The radio access network is referred to as a next generation radio access network (NG-RAN) 211. The UE 202 can perform radio communication with an NR base station device (hereinafter referred to as an "NR base station (NG-RAN NodeB (gNB))") 213, and transmits and receives signals by radio communication. The core network is referred to as a 5G core (5GC).

If a control protocol for the UE 202, for example, radio resource control (RRC), and a user plane (hereinafter, sometimes referred to as a U-plane), for example, service data adaptation protocol (SDAP), packet data convergence protocol (PDCP), radio link control (RLC), medium access control (MAC), or physical layer (PHY), are terminated in the NR base station 213, the NG-R_AN includes one or a plurality of NR base stations 213.

A function of radio resource control (RRC) as a control protocol between the UE 202 and the NR base station 213 is similar to that of LTE. As states of the NR base station 213 and the UE 202 in RRC, there are RRC_IDLE, RRC_CONNECTED, and RRC_INACTIVE.

RRC_IDLE and RRC_CONNECTED are similar to those in the LTE system. In RRC_INACTIVE, broadcast of system information (SI), paging, cell re-selection, mobility, and the like are performed while connection between the 5G core and the NR base station 213 is maintained.

Each gNB 217 is connected via an NG interface to an AMF/SMF/UPF unit (hereinafter, sometimes referred to as a "5GC unit") 214 including an access and mobility management function (AMF), a session management function (SMF), or a user plane function (UPF), or the AMF, the SMF, and the UPF. Control information and/or user data is communicated between each gNB 217 and the 5GC unit 214. The NG interface is a generic term for an N2 interface between each gNB 217 and the AMF, an N3 interface between each gNB 217 and the UPF, an N11 interface between the AMF and the SMF, and an N4 interface between the UPF and the SMF. A plurality of 5GC units 214 may be connected to one gNB 217. The gNBs 217 are connected to each other via an Xn interface, and control information and/or user data is communicated between the gNBs 217.

The 5GC unit 214 is a higher-level device, specifically, a higher-level node, and distributes paging signals to one or a plurality of base stations 203 and/or base stations 213. In addition, the 5GC unit 214 performs mobility control in an idle state. The 5GC unit 214 manages a tracking area list when the user equipment 202 is in the idle state, an inactive state, and an active state. The 5GC unit 214 starts a paging protocol by transmitting a paging message to a cell belonging to a tracking area in which the user equipment 202 is registered.

The NR base station 213 may also configure one or a plurality of cells similarly to the base station 203. In a case where one NR base station 213 configures a plurality of cells, each cell is configured to be able to communicate with the UE 202.

The gNB 217 may be divided into a central unit (hereinafter, sometimes referred to as a CU) 218 and a distributed unit (hereinafter, sometimes referred to as a DU) 219. One CU 218 is configured in the gNB 217. One or a plurality of DUs 219 are configured in the gNB 217. The CU 218 is connected to the DU 219 via the F1 interface, and control information and/or user data is communicated between the CU 218 and the DU 219.

A unified data management (UDM) function and a policy control function (PCF) described in Non Patent Literature 21 (3GPP TS23.501) may be included in the 5G communication system. The UDM and/or the PCF may be included in the 5GC unit 214 in FIG. 3.

A location management function (LMF) described in Non Patent Literature 24 (3GPP TS 38.305) may be provided in the 5G communication system. The LMF may be connected to a base station via the AMF as disclosed in Non Patent Literature 25 (3GPP TS 23.273).

A non-3GPP interworking function (N3IWF) described in Non Patent Literature 21 (3GPP TS23.501) may be included in the 5G communication system. The N3IWF may terminate an access network (AN) with the UE in non-3GPP access with the UE.

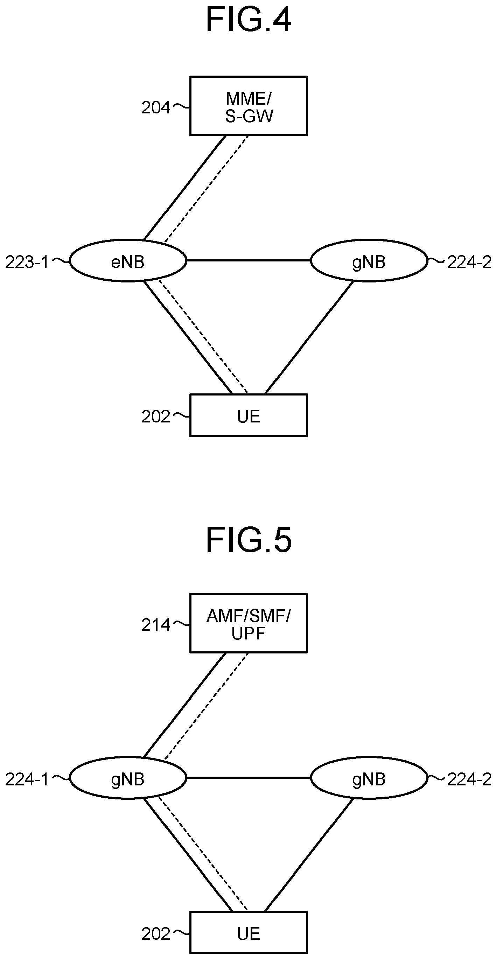

FIG. 4 is a diagram illustrating a configuration of DC performed by an eNB and a gNB connected to the EPC. In FIG. 4, solid lines each indicate U-plane connection, and broken lines each indicate C-plane connection. In FIG. 4, an eNB 223-1 serves as a master base station, and a gNB 224-2 serves as a secondary base station (this DC configuration is sometimes referred to as EN-DC). Although FIG. 4 illustrates an example in which the U-plane connection between the MME unit 204 and the gNB 224-2 is established via the eNB 223-1, the U-plane connection may be directly established between the MME unit 204 and the gNB 224-2.

FIG. 5 is a diagram illustrating a configuration of DC performed by gNBs connected to an NG core. In FIG. 5, solid lines each indicate U-plane connection, and broken lines each indicate C-plane connection. In FIG. 5, a gNB 224-1 serves as a master base station, and the gNB 224-2 serves as a secondary base station (this DC configuration is sometimes referred to as NR-DC). Although FIG. 5 illustrates an example in which the U-plane connection between the 5GC unit 214 and the gNB 224-2 is established via the gNB 224-1, the U-plane connection may be directly established between the 5GC unit 214 and the gNB 224-2.

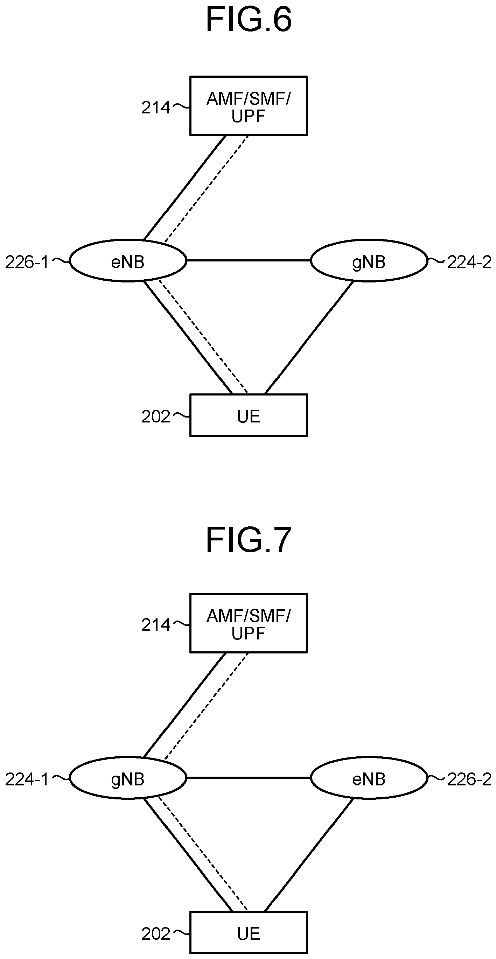

FIG. 6 is a diagram illustrating a configuration of DC performed by an eNB and the gNB connected to the NG core. In FIG. 6, solid lines each indicate U-plane connection, and broken lines each indicate C-plane connection. In FIG. 6, an eNB 226-1 serves as a master base station, and the gNB 224-2 serves as a secondary base station (this DC configuration is sometimes referred to as NG-EN-DC). Although FIG. 6 illustrates an example in which the U-plane connection between the 5GC unit 214 and the gNB 224-2 is established via the eNB 226-1, the U-plane connection may be directly established between the 5GC unit 214 and the gNB 224-2.

FIG. 7 is a diagram illustrating another configuration of DC performed by an eNB and the gNB connected to the NG core. In FIG. 7, solid lines each indicate U-plane connection, and broken lines each indicate C-plane connection. In FIG. 7, the gNB 224-1 serves as a master base station, and an eNB 226-2 serves as a secondary base station (this DC configuration is sometimes referred to as NE-DC). Although FIG. 7 illustrates an example in which the U-plane connection between the 5GC unit 214 and the eNB 226-2 is established via the gNB 224-1, the U-plane connection may be directly established between the 5GC unit 214 and the eNB 226-2.

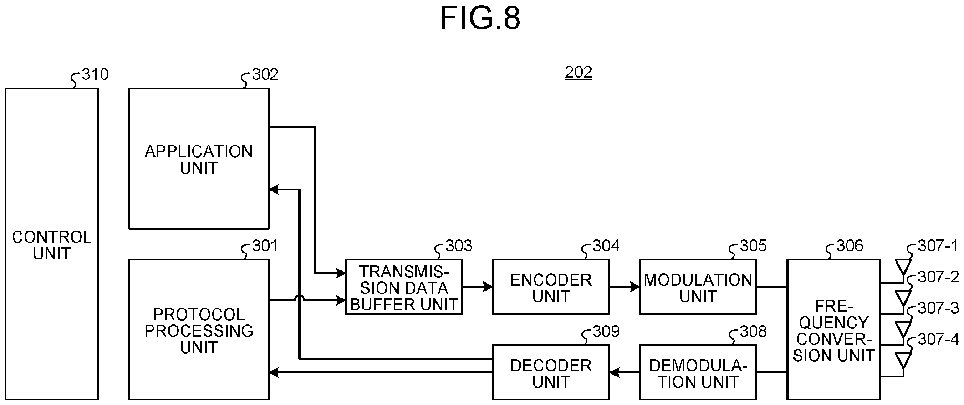

FIG. 8 is a block diagram illustrating a configuration of the user equipment 202 illustrated in FIG. 2. A transmission process performed by the user equipment 202 illustrated in FIG. 8 will be described. First, control data from a protocol processing unit 301 and user data from an application unit 302 are stored in a transmission data buffer unit 303. The data stored in the transmission data buffer unit 303 is passed to an encoder unit 304, and an encoding process such as error correction is performed thereon. There may be data output from the transmission data buffer unit 303 to a modulation unit 305 directly without being subjected to the encoding process. The data encoded by the encoder unit 304 is subjected to a modulation process by the modulation unit 305. The modulation unit 305 may perform precoding in MIMO. The modulated data is converted into a baseband signal, and then the baseband signal is output to a frequency conversion unit 306 to be converted into a radio transmission frequency. Thereafter, transmission signals are transmitted to the base station 203 from antennas 307-1 to 307-4. FIG. 8 exemplifies a case where the number of antennas is four, but the number of antennas is not limited to four.

The user equipment 202 executes a reception process as follows. A radio signal from the base station 203 is received by each of the antennas 307-1 to 307-4. The received signal is converted from a radio reception frequency into a baseband signal by the frequency conversion unit 306, and a demodulation process is performed thereon by a demodulation unit 308. The demodulation unit 308 may perform a weight calculation and a multiplication process. The demodulated data is passed to a decoder unit 309, and a decoding process such as error correction is performed thereon. Among pieces of the decoded data, the control data is passed to the protocol processing unit 301, and the user data is passed to the application unit 302. A series of processes of the user equipment 202 is controlled by a control unit 310. Therefore, although not illustrated in FIG. 8, the control unit 310 is connected to each of components 301 to 309. The control unit 310 is implemented by, for example, processing circuitry configured to include a processor and a memory. That is, the control unit 310 is implemented by the processor executing a program in which a series of processes of the user equipment 202 is described. The program in which a series of processes of the user equipment 202 is described is stored in the memory. Examples of the memory include a nonvolatile or volatile semiconductor memory such as a random access memory (RAM), a read only memory (ROM), or a flash memory. The control unit 310 may be implemented by dedicated processing circuitry such as a field programmable gate array (FPGA), an application specific integrated circuit (ASIC), or a digital signal processor (DSP). In FIG. 8, the number of antennas used by the user equipment 202 for transmission and the number of antennas used thereby for reception may be the same as or different from each other.

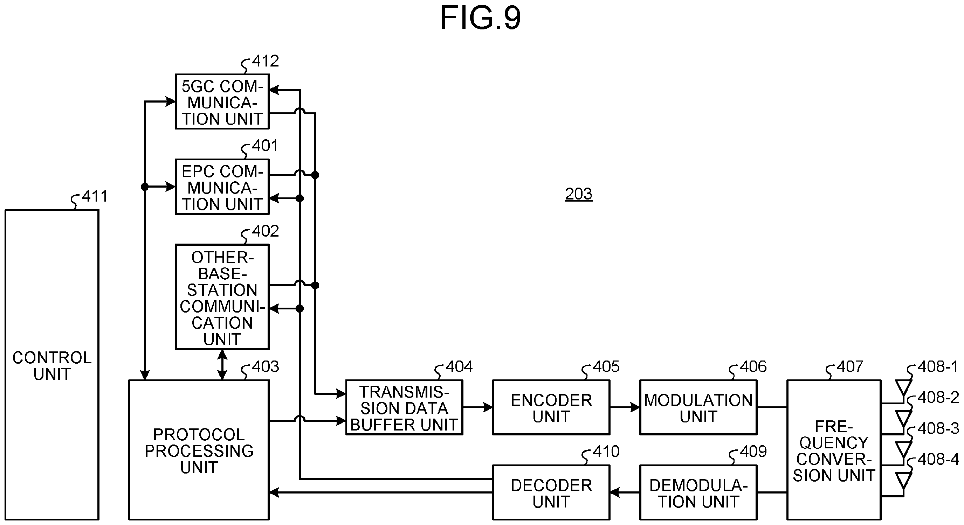

FIG. 9 is a block diagram illustrating a configuration of the base station 203 illustrated in FIG. 2. A transmission process performed by the base station 203 illustrated in FIG. 9 will be described. An EPC communication unit 401 transmits and receives data between the base station 203 and the EPC (such as the MME unit 204). A 5GC communication unit 412 transmits and receives data between the base station 203 and the 5GC (such as the 5GC unit 214). An other-base-station communication unit 402 transmits and receives data to and from other base stations. The EPC communication unit 401, the 5GC communication unit 412, and the other-base-station communication unit 402 each exchange information with a protocol processing unit 403. Control data from the protocol processing unit 403 and user data and control data from the EPC communication unit 401, the 5GC communication unit 412, and the other-base-station communication unit 402 are stored in a transmission data buffer unit 404.

The data stored in the transmission data buffer unit 404 is passed to an encoder unit 405, and an encoding process such as error correction is performed thereon. There may be data output from the transmission data buffer unit 404 to a modulation unit 406 directly without being subjected to the encoding process. The encoded data is subjected to a modulation process by the modulation unit 406. The modulation unit 406 may perform precoding in MIMO. The modulated data is converted into a baseband signal, and then the baseband signal is output to a frequency conversion unit 407 to be converted into a radio transmission frequency. Thereafter, transmission signals are transmitted from antennas 408-1 to 408-4 to one or a plurality of UEs 202. FIG. 9 exemplifies a case where the number of antennas is four, but the number of antennas is not limited to four.

The base station 203 executes a reception process as follows. Radio signals from one or a plurality of UEs 202 are received by the antennas 408. The received signals are each converted from a radio reception frequency into a baseband signal by the frequency conversion unit 407, and a demodulation process is performed thereon by a demodulation unit 409. The demodulated data is passed to a decoder unit 410, and a decoding process such as error correction is performed thereon. Among pieces of the decoded data, the control data is passed to the protocol processing unit 403, the 5GC communication unit 412, the EPC communication unit 401, or the other-base-station communication unit 402, and the user data is passed to the 5GC communication unit 412, the EPC communication unit 401, or the other-base-station communication unit 402. A series of processes of the base station 203 is controlled by a control unit 411. Therefore, although not illustrated in FIG. 9, the control unit 411 is connected to each of components 401 to 410, and 412. Similarly to the control unit 310 of the user equipment 202 described above, the control unit 411 is implemented by processing circuitry configured to include a processor and a memory, or dedicated processing circuitry such as an FPGA, an ASIC, or a DSP. In FIG. 9, the number of antennas used by the base station 203 for transmission and the number of antennas used thereby for reception may be the same as or different from each other.

FIG. 9 is a block diagram illustrating the configuration of the base station 203, but the base station 213 may have a configuration similar thereto. In addition, in FIGS. 8 and 9, the number of antennas of the user equipment 202 and the number of antennas of the base station 203 may be the same as or different from each other.

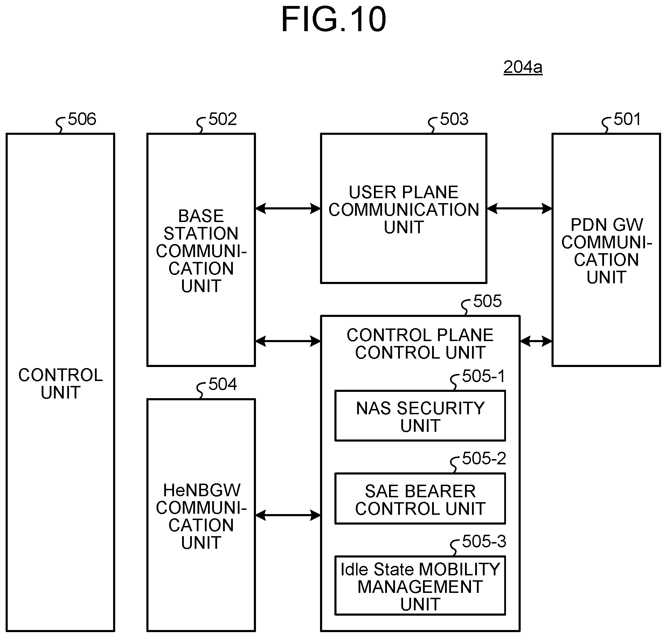

FIG. 10 is a block diagram illustrating a configuration of an MME. FIG. 10 illustrates a configuration of an MME 204a included in the MME unit 204 illustrated in FIG. 2 described above. A PDN GW communication unit 501 transmits and receives data between the MME 204a and a packet data network gate way (PDN GW). A base station communication unit 502 transmits and receives data between the MME 204a and the base station 203 via the S1 interface. In a case where data received from the PDN GW is user data, the user data is passed from the PDN GW communication unit 501 to the base station communication unit 502 via a user plane communication unit 503, and transmitted to one or a plurality of base stations 203. In a case where data received from the base station 203 is user data, the user data is passed from the base station communication unit 502 to the PDN GW communication unit 501 via the user plane communication unit 503, and transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

A HeNBGW communication unit 504 transmits and receives data between the MME 204a and a home-eNB gate way (HeNB GW). Control data received by the HeNBGW communication unit 504 from the HeNB GW is passed to the control plane control unit 505. The HeNBGW communication unit 504 transmits control data input from the control plane control unit 505 to the HeNB GW.

The control plane control unit 505 includes a NAS security unit 505-1, an SAE bearer control unit 505-2, an idle state mobility management unit 505-3, and the like, and performs overall processes on a control plane (hereinafter, sometimes referred to as a C-plane). The NAS security unit 505-1 provides security of a non-access stratum (NAS) message and the like. The SAE bearer control unit 505-2 performs management of system architecture evolution (SAE) bearers, and the like. The idle state mobility management unit 505-3 performs mobility management of an idle state (LTE-IDLE state or also simply referred to as idle), generation and control of a paging signal in the idle state, addition, deletion, update, and search of a tracking area of one or a plurality of UEs 202 under the management thereof, tracking area list management, and the like.

The MME 204a distributes paging signals to one or a plurality of base stations 203. In addition, the MME 204a performs mobility control in the idle state. The MME 204a manages a tracking area list when the user equipment 202 is in the idle state and an active state. The MME 204a starts a paging protocol by transmitting a paging message to a cell belonging to a tracking area in which the user equipment 202 is registered. The idle state mobility management unit 505-3 may manage CSG of the eNB 207 connected to the MME 204a, CSG IDs, and a whitelist.

A series of processes of the MME 204a is controlled by a control unit 506. Therefore, although not illustrated in FIG. 10, the control unit 506 is connected to each of components 501 to 505. Similarly to the control unit 310 of the user equipment 202 described above, the control unit 506 is implemented by processing circuitry configured to include a processor and a memory, or dedicated processing circuitry such as an FPGA, an ASIC, or a DSP.

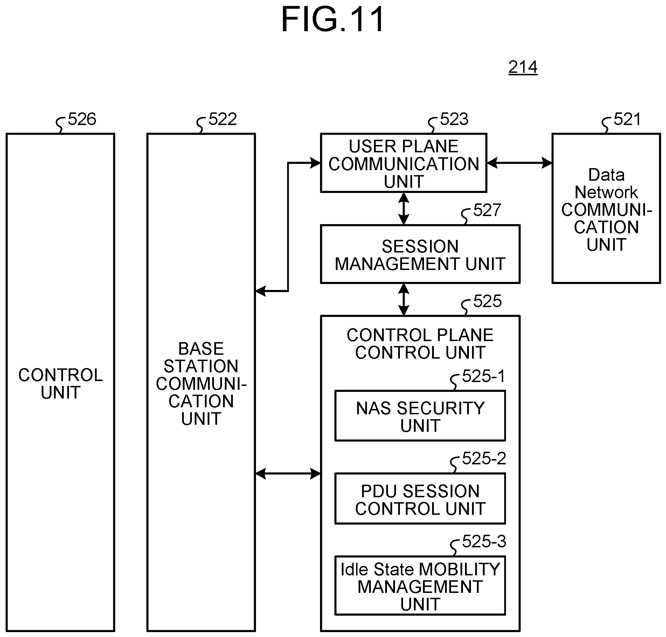

FIG. 11 is a block diagram illustrating a configuration of the 5GC unit. FIG. 11 illustrates a configuration of the 5GC unit 214 illustrated in FIG. 3 described above. FIG. 11 illustrates a case where a configuration of the AMF, a configuration of the SMF, and a configuration of the UPF are included in the 5GC unit 214 illustrated in FIG. 5. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213. In a case where data received from the data network is user data, the user data is passed from the data network communication unit 521 to the base station communication unit 522 via a user plane communication unit 523, and transmitted to one or a plurality of base stations 203 and/or base stations 213. In a case where data received from the base station 203 and/or the base station 213 is user data, the user data is passed from the base station communication unit 522 to the data network communication unit 521 via the user plane communication unit 523, and transmitted to the data network.

In a case where data received from the data network is control data, the control data is passed from the data network communication unit 521 to a session management unit 527 via the user plane communication unit 523. The session management unit 527 passes the control data to a control plane control unit 525. In a case where data received from the base station 203 and/or the base station 213 is control data, the control data is passed from the base station communication unit 522 to the control plane control unit 525. The control plane control unit 525 passes the control data to the session management unit 527.

The control plane control unit 525 includes a NAS security unit 525-1, a PDU session control unit 525-2, an idle state mobility management unit 525-3, and the like, and performs overall processes on a control plane (hereinafter, sometimes referred to as a C-plane). The NAS security unit 525-1 provides security of a non-access stratum (NAS) message, and the like. The PDU session control unit 525-2 performs management of a PDU session between the user equipment 202 and the 5GC unit 214, and the like. The idle state mobility management unit 525-3 performs mobility management of an idle state (RRC-IDLE state or also simply referred to as idle), generation and control of a paging signal in the idle state, addition, deletion, update, and search of a tracking area of one or a plurality of UEs 202 under the management thereof, tracking area list management, and the like.

A series of processes of the 5GC unit 214 is controlled by a control unit 526. Therefore, although not illustrated in FIG. 11, the control unit 526 is connected to each of components 521 to 523, 525, and 527. Similarly to the control unit 310 of the user equipment 202 described above, the control unit 526 is implemented by processing circuitry configured to include a processor and a memory, or dedicated processing circuitry such as an FPGA, an ASIC, or a DSP.

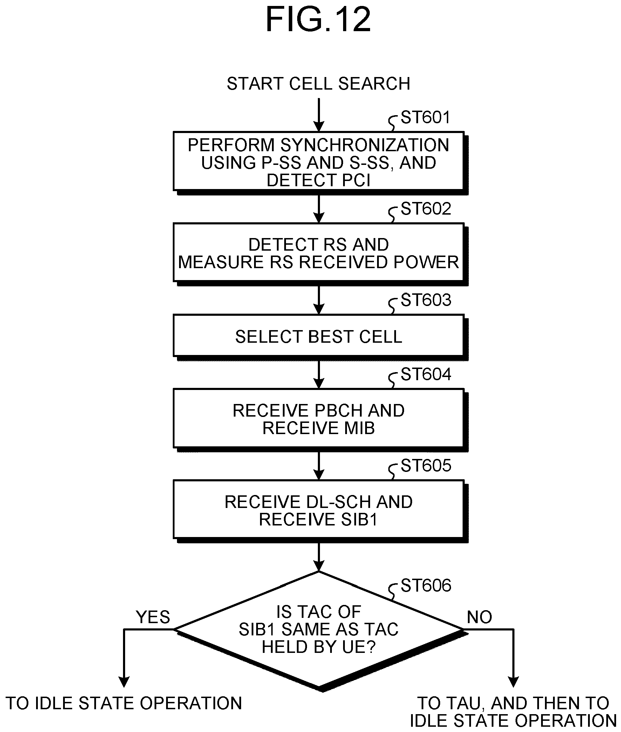

Next, an example of a cell search method in a communication system will be described. FIG. 12 is a flowchart schematically illustrating a cell search to an idle state operation performed by a communication terminal (UE) in the LTE communication system. When starting the cell search, in step ST601, the communication terminal synchronizes a slot timing and a frame timing using a primary synchronization signal (P-SS) and a secondary synchronization signal (S-SS) transmitted from a neighbor base station.

The P-SS and the S-SS are collectively referred to as a synchronization signal (SS). Synchronization codes that correspond one-to-one to PCIs are allocated to the synchronization signals (SSs), the PCIs being allocated on a per cell basis. As the number of PCIs, 504 different numbers are studied. The communication terminal performs synchronization using the 504 different numbers of PCIs and detects (specifies) a PCI of a synchronized cell.

Next, in step ST602, the communication terminal detects, for the synchronized cell, a cell-specific reference signal (CRS) which is a reference signal (RS) transmitted from the base station for each cell, and measures reference signal received power (RSRP). Codes that correspond one-to-one to the PCIs are used for reference signals (RSs). Separation from other cells can be performed by obtaining correlation using the codes. By deriving the code for the RS of the cell from the PCI specified in step ST601, it is possible to detect the RS and to measure the RS received power.

Next, in step ST603, the communication terminal selects a cell having the best RS reception quality, for example, a cell having the highest RS received power, that is, the best cell, from among the one or more cells detected up to step ST602.

Next, in step ST604, the communication terminal receives the PBCH of the best cell and obtains the BCCH which is broadcast information. A master information block (MIB) including cell configuration information is mapped to the BCCH on the PBCH. Accordingly, the MIB is obtained by receiving the PBCH to obtain the BCCH. Examples of the information of the MIB include a downlink (DL) system bandwidth (also referred to as transmission bandwidth configuration (dl-bandwidth)), the number of transmission antennas, and a system frame number (SFN).

Next, in step ST605, the communication terminal receives the DL-SCH of the cell on the basis of the cell configuration information of the MIB to obtain a system information block (SIB) 1 in the broadcast information BCCH. The SIB 1 includes information about access to the cell, information about cell selection, and scheduling information of other SIBs (SIB k; k is an integer equal to or greater than 2). The SIB 1 further includes a tracking area code (TAC).

Next, in step ST606, the communication terminal compares the TAC of the SIB 1 received in step ST605 with a TAC portion of a tracking area identity (TAI) in the tracking area list already held by the communication terminal. The tracking area list is also referred to as a TAI list. The TAI is identification information for identifying a tracking area, and includes a mobile country code (MCC), a mobile network code (MNC), and a tracking area code (TAC). The MCC is a country code. The MNC is a network code. The TAC is a code number of the tracking area.

If the TAC received in step ST605 is the same as the TAC included in the tracking area list as a result of the comparison in step ST606, the communication terminal enters an idle state operation in the cell. If the TAC received in step ST605 is not included in the tracking area list as a result of the comparison, the communication terminal requests, through the cell, a core network (EPC) including the MME or the like to change the tracking area in order to perform a tracking area update (TAU).

In the example illustrated in FIG. 12, from the cell search to the idle state operation in the LTE system are exemplified, but in the NR system, the best beam may be selected in addition to the best cell in step ST603. In addition, in the NR system, information on a beam, for example, a beam identifier may be acquired in step ST604. Furthermore, in the NR system, scheduling information of remaining minimum SI (RMSI) may be acquired in step ST604. In the NR system, the RMSI may be received in step ST605.

A device configuring a core network (hereinafter, sometimes referred to as a "core network-side device") updates the tracking area list on the basis of an identification number (such as a UE-ID) of a communication terminal transmitted from the communication terminal together with a TAU request signal. The core network-side device transmits the updated tracking area list to the communication terminal. The communication terminal rewrites (updates) the TAC list held by the communication terminal on the basis of the received tracking area list. Thereafter, the communication terminal enters an idle state operation in the cell.

The spread of smartphones and tablet terminal devices results in explosively increasing traffic in cellular radio communication, and there is a worldwide concern about a shortage of radio resources. In order to deal with the above to improve the spectral efficiency, downsizing of cells to advance spatial separation is under study.

In a conventional cell configuration, a cell configured by an eNB has a relatively wide range of coverage. A cell is conventionally configured to cover a certain area by such a relatively wide range of coverage of a plurality of cells configured by a plurality of eNBs.

In a case where cells are downsized, a cell configured by the eNB has a range of coverage narrower than the coverage of a cell configured by a conventional eNB. Accordingly, in order to cover a certain area similarly to conventional cases, a large number of eNBs configuring downsized cells as compared with the conventional eNBs are required.

In the following description, a cell having relatively large coverage such as the cell configured by a conventional eNB is referred to as a "macro cell", and an eNB configuring the macro cell is referred to as a "macro eNB". In addition, a cell having a relatively small coverage such as a downsized cell is referred to as a "small cell", and an eNB configuring the small cell is referred to as a "small eNB".

The macro eNB may be, for example, a "wide area base station" described in Non Patent Literature 7.

The small eNB may be, for example, a low power node, a local area node, a hotspot, or the like. In addition, the small eNB may be a pico eNB configuring a picocell, a femto eNB configuring a femtocell, a HeNB, a remote radio head (RRH), a remote radio unit (RRU), remote radio equipment (RRE), or a relay node (RN). Furthermore, the small eNB may be a "local area base station" or a "home base station" described in Non Patent Literature 7.

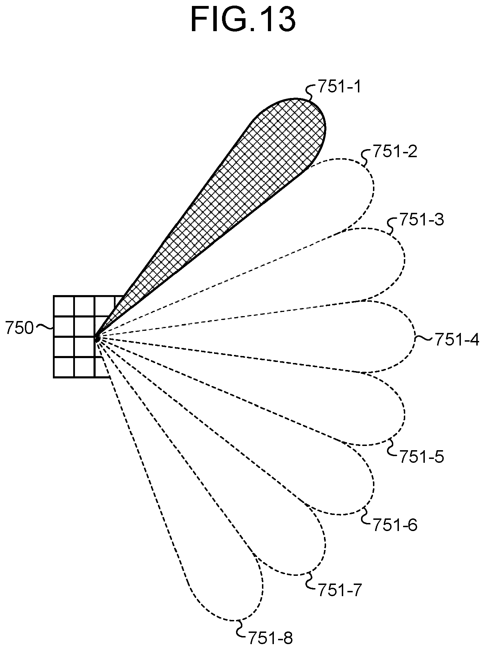

FIG. 13 illustrates an example of a configuration of a cell in NR. In the cell in NR, narrow beams are formed and transmitted in different directions. In the example illustrated in FIG. 13, a base station 750 performs transmission and reception to and from user equipment using a beam 751-1 at a certain time. The base station 750 performs transmission and reception to and from the user equipment using a beam 751-2 at another time. Thereafter, the base station 750 similarly performs transmission and reception to and from the user equipment using one or more of the beams 751-3 to 751-8. Thus, the base station 750 configures a cell with a wide range.

Although FIG. 13 illustrates an example in which the number of beams used by the base station 750 is eight, the number of beams may be different from eight. In addition, although the number of beams simultaneously used by the base station 750 is one in the example illustrated in FIG. 13, the number of beams may be two or more.

In 3GPP, sidelink (SL) is supported for device to device (D2D) communication and vehicle to vehicle (V2V) communication (see Non Patent Literatures 1 and 16). The SL is defined by a PC5 interface.

A physical channel (see Non Patent Literature 1) used for the SL will be described. A physical sidelink broadcast channel (PSBCH) carries information related to a system and synchronization, and is transmitted from a UE.

A physical sidelink discovery channel (PSDCH) carries a sidelink discovery message from a UE.

A physical sidelink control channel (PSCCH) carries control information from a UE for sidelink communication and V2X sidelink communication.

A physical sidelink shared channel (PSSCH) carries data from a UE for sidelink communication and V2X sidelink communication.

A physical sidelink feedback channel (PSFCH) carries HARQ feedback on the sidelink from a UE that has received PSSCH transmission to a UE that has transmitted the PSSCH.

A transport channel (see Non Patent Literature 1) used for the SL will be described. A sidelink broadcast channel (SL-BCH) has a predetermined transport format and is mapped to the PSBCH which is a physical channel.

A sidelink discovery channel (SL-DCH) has periodic broadcast transmission of a predetermined format having a fixed size. In addition, the SL-DCH supports both UE autonomous resource selection and resource allocation scheduled by eNB. In the UE autonomous resource selection, there is a collision risk, and when dedicated resources are allocated to a UE by an eNB, there is no collision. In addition, the SL-DCH supports HARQ combining but does not support HARQ feedback. The SL-DCH is mapped to the PSDCH which is a physical channel.

A sidelink shared channel (SL-SCH) supports broadcast transmission. The SL-SCH supports both UE autonomous resource selection and resource allocation scheduled by eNB. In the UE autonomous resource selection, there is a collision risk, and when dedicated resources are allocated to a UE by an eNB, there is no collision. In addition, the SL-SCH supports HARQ combining but does not support HARQ feedback. Furthermore, the SL-SCH supports dynamic link adaptation by changing transmission power, modulation, and coding. The SL-SCH is mapped to the PSSCH which is a physical channel.

A logical channel (see Non Patent Literature 1) used for the SL will be described. A sidelink broadcast control channel (SBCCH) is a sidelink channel for broadcasting sidelink system information from one UE to another UE. The SBCCH is mapped to the SL-BCH which is a transport channel.

A sidelink traffic channel (STCH) is a point-to-multipoint sidelink traffic channel for transmitting user information from one UE to another UE. The STCH is used only by a UE having a sidelink communication capability and a UE having a V2X sidelink communication capability. Point-to-point communication between two UEs having the sidelink communication capabilities is also implemented by using the STCH. The STCH is mapped to the SL-SCH which is a transport channel.

A sidelink control channel (SCCH) is a sidelink control channel for transmitting control information from one UE to another UE. The SCCH is mapped to the SL-SCH which is a transport channel.

In 3GPP, support of V2X communication also in NR has been studied. The study of the V2X communication in NR has been progressed on the basis of the LTE system and the LTE-A system, but there are additions and changes to and from the LTE system and the LTE-A system in the following points.

In LTE, the SL communication uses broadcast only. In NR, as the SL communication, support of unicast and groupcast in addition to broadcast has been studied (see Non Patent Literature 22 (3GPP TS 23.287)).

Support of HARQ feedback (Ack/Nack), a CSI reporting, and the like in unicast communication and groupcast communication has been studied.

In order to support unicast and groupcast in addition to broadcast in the SL communication, support of PC5-S signaling has been studied (see Non Patent Literature 22 (3GPP TS 23.287)). For example, PC5-S signaling is implemented to establish a link for implementing SL, i.e., PC5 communication. The link is implemented in a V2X layer and is also referred to as a layer 2 link.

In addition, support of RRC signaling in the SL communication has been studied (see Non Patent Literature 22 (3GPP TS 23.287)). The RRC signaling in the SL communication is also referred to as PC5 RRC signaling. For example, it has been proposed to perform notifications, between UEs that perform PC5 communication, of capability of each UE, and of an AS layer configuration for performing the V2X communication using the PC5 communication.

A learning device may be applied to communication control of NR, for example, PHY layer control. The learning device learns an encoding model and/or a decoding model in transmission and reception of information between a UE and a base station. As an example of information to which the encoding model and/or the decoding model is applied, there is CSI. As a specific example, the UE performs an encoding process of the information by using the learned encoding model. The encoded information is smaller in size than the original information. The UE transmits the encoded information to the base station. The base station decodes the encoded information received from the UE by using the learned decoding model. The base station performs communication control, for example, PHY layer control, by using the decoded information.

There are a learning phase and an inference phase in the learning device. Hereinafter, the learning phase will be described.

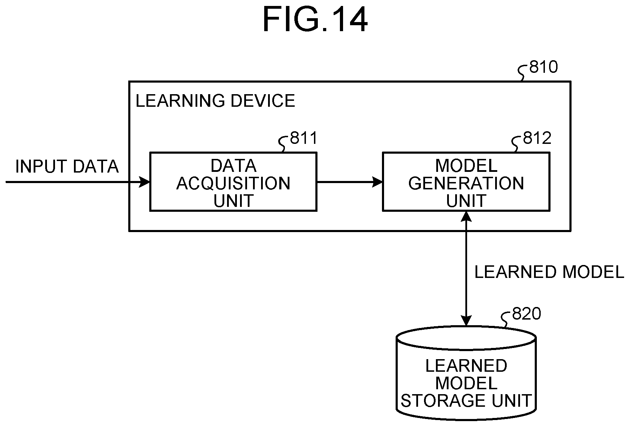

FIG. 14 is a configuration diagram of a learning device 810 related to the communication system. The learning device 810 includes a data acquisition unit 811 and a model generation unit 812. A learned model generated by the model generation unit 812 is stored in a learned model storage unit 820. The learned model storage unit 820 is present outside or inside the learning device 810. The learning device 810 illustrated in FIG. 14 is included in the base station and/or the UE. As another example, the learning device 810 is included in a core network device, for example, an AMF, an SMF, a UPF, an LMF, and/or a network data analytics function (NWDAF) (see Non Patent Literature 21 (3GPP TS 23.501)).

The data acquisition unit 811 acquires, as learning data, information to be encoded and/or decoded.

The model generation unit 812 learns the encoding model and the decoding model by using information output from the data acquisition unit 811. That is, an optimal encoding model and an optimal decoding model are generated with which the UE can encode and transmit the information to the base station, and the base station can perform restoration to the original information. Here, the encoded information is smaller in size than the original information. In addition, the learning data is the information itself acquired by the UE. As another example, the learning data may include information about a process of the base station based on the information, for example, information about transmission power control and information about scheduling.

Note that the learning device 810 is used to learn the encoding model and the decoding model of the information, but may be, for example, a device that is connected via a network to a communication system device, for example, the base station and/or the UE, and is separate from the communication system device. Alternatively, the learning device 810 may be included in the communication system device. Further alternatively, the learning device 810 may be present on a cloud server. Although the example of the relationship between the learning device 810 and the communication system device has been described, the same applies to a relationship between an inference device to be described later and the communication system device.

As a learning algorithm used by the model generation unit 812, a known algorithm such as supervised learning, unsupervised learning, or reinforcement learning can be used. As one example, a case will be described where a neural network is applied.

The model generation unit 812 learns the encoding model and the decoding model by so-called supervised learning in accordance with, for example, a neural network model. Here, supervised learning is a method in which sets of data each including an input and a result (label) are given to a learning device, and thereby characteristics reside in the learning data are learned and results are inferred from inputs. In the learning of the encoding model and the decoding model, the input data itself may be used as data of the results.

A neural network includes an input layer including a plurality of neurons, an intermediate layer (hidden layer) including a plurality of neurons, and an output layer including a plurality of neurons. The intermediate layer may be one layer or two or more layers. As another example, the intermediate layer may not be present. Consequently, for example, it is possible to reduce the amount of processing of the communication system.

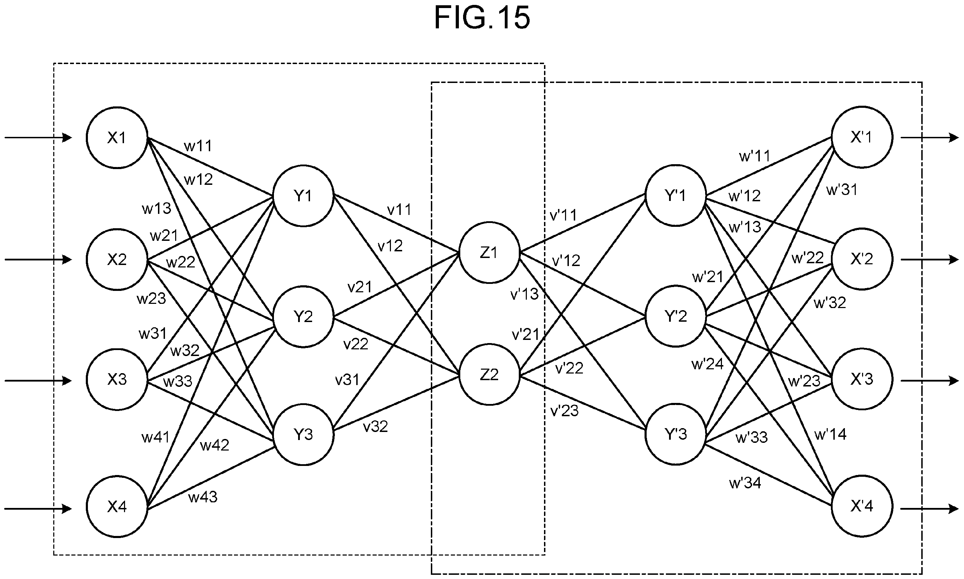

FIG. 15 illustrates an example of a neural network used in the learning of the encoding model and the decoding model. In the example illustrated in FIG. 15, layers surrounded by a broken line correspond to the encoding model used in an encoding unit, and layers surrounded by an alternate long and short dash line correspond to the decoding model used in a decoding unit. In the example illustrated in FIG. 15, when a plurality of input values, for example, pieces of CSI in different frequency bands are input to an input layer (X1 to X4), values thereof are multiplied by weights W1 (w11 to w43) and input to an intermediate layer (Y1 to Y3), and results thereof are further multiplied by weights V1 (v11 to v32) and input to an intermediate layer (Z1 to Z2). Results thereof vary depending on values of the weights W1 and the weights V1. The values of the intermediate layer (Z1 to Z2) are multiplied by weights V'1 (v'11 to v'23) and input to an intermediate layer (Y'1 to Y'3), and results thereof are further multiplied by weights W'1 (w'11 to w'34) and input to an output layer (X'1 to X'4). The output results vary depending on values of the weights W1, V1, V'1, and W'1.

The values input to the intermediate layers (Y1 to Y3), (Z1 to Z2), and (Y'1 to Y'3) and/or the output layer (X'1 to X'4) are subjected to calculation by a predetermined function. The results of the calculation in the intermediate layers are multiplied by the weights V1, V'1, and W'1 described above. For the predetermined function, for example, a sigmoid function may be used, a hyperbolic tangent function may be used, or another function may be used.

In the present application, the neural network learns the encoding model and the decoding model by so-called supervised learning in accordance with the learning data created on the basis of the input of the information acquired by the data acquisition unit 811.

That is, the encoding model and the decoding model, for example, the weights W1, V1, V'1, and W'1, are learned such that the values of the output layer (X'1 to X'4) are the same as the values of the input layer (X1 to X4) .

The model generation unit 812 generates a learned model by executing learning as described above, and outputs the learned model.

The learned model storage unit 820 stores the learned model output from the model generation unit 812. The learned model storage unit 820 notifies another communication system device, for example, the UE of the learned model.

The learned model storage unit 820 is included in the same device as that including the learning device. The learned model storage unit 820 may be included in a device different therefrom, for example, a base station, or a core NW device (e.g., AMF).

The learned model storage unit 820 may be included in a plurality of devices. For example, the learned model storage unit 820 is included in each of the same device as that including the learning device and a device different therefrom. For example, each of the base station and the UE includes the learned model storage unit 820. A plurality of devices may store the same learned model. The number of learned models stored in the learned model storage unit 820 may be one, or may be two or more. For example, the base station and the UE may perform switching of models to be used from among a plurality of learned models, and use the models.

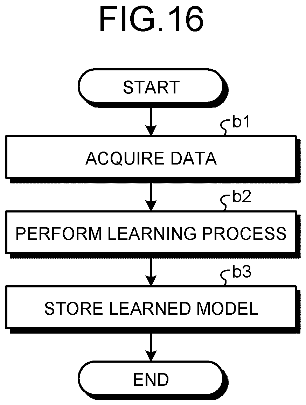

Next, a process of learning by the learning device 810 will be described with reference to FIG. 16. FIG. 16 is a flowchart regarding a learning process performed by the learning device 810.

In step b1, the data acquisition unit 811 acquires input data, for example, a CSI report. Note that the acquisition of the input data may be performed a plurality of times. In addition, the acquisitions of respective pieces of the input data may be performed at the same timing, or may be performed at different timings.

In step b2, the model generation unit 812 learns the encoding model and the decoding model by so-called supervised learning in accordance with the learning data created on the basis of the input data acquired by the data acquisition unit 811, for example, the CSI report, and generates a learned model.

In step b3, the learned model storage unit 820 stores the learned model generated by the model generation unit 812. The learned model storage unit 820 may notify another communication system device, for example, the UE of the learned model, for example, the encoding model and/or the decoding model.

Next, the inference phase (utilization phase) will be described.

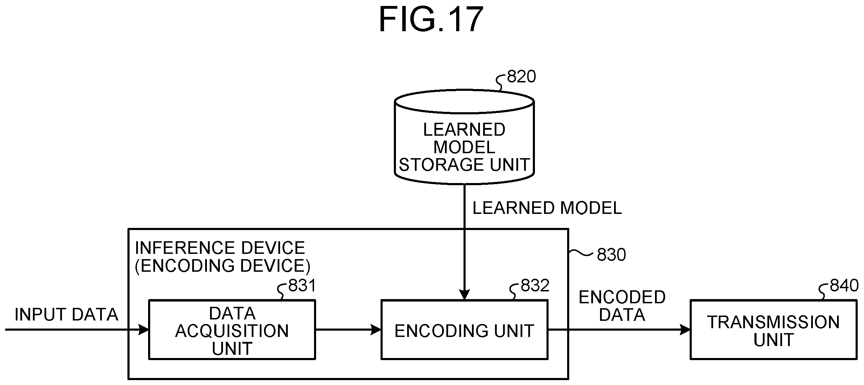

FIG. 17 is a configuration diagram of an inference device 830 applied to an encoding device among inference devices related to the communication system. The inference device 830 includes a data acquisition unit 831 and an encoding unit 832. The inference device 830 is applied to, for example, the UE. Note that the learned model storage unit 820 is the same as the learned model storage unit 820 illustrated in FIG. 14.

The data acquisition unit 831 acquires input data.

The encoding unit 832 encodes the input data by using the learned model. That is, by inputting the input data acquired by the data acquisition unit 831 to the learned model, encoded data can be output. The encoding unit 832 outputs the encoded data to a transmission unit 840.

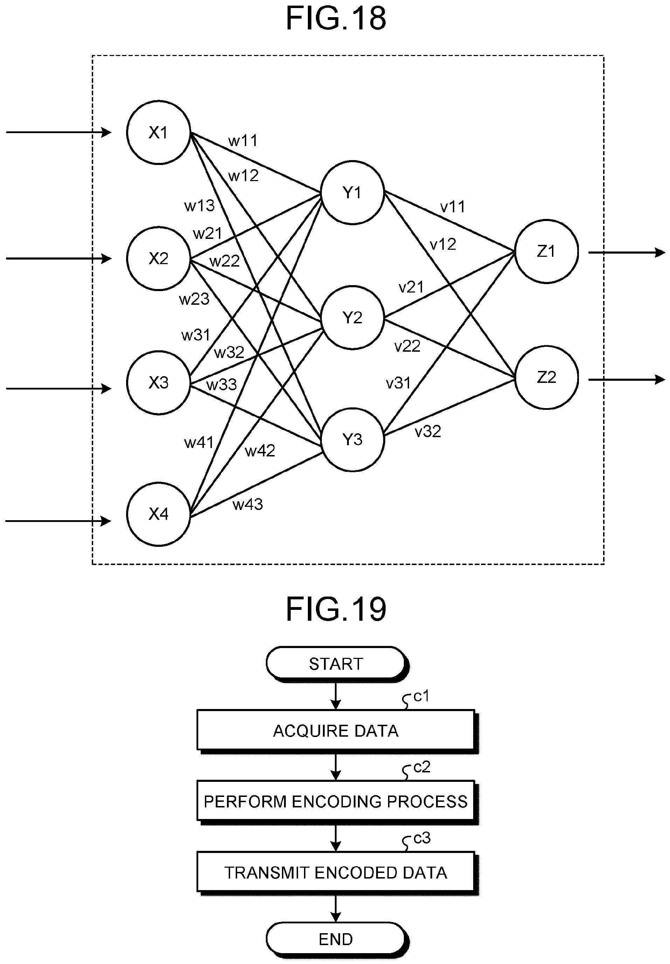

FIG. 18 illustrates an example of the learned model used in the encoding unit 832. The learned model illustrated in FIG. 18 is the same as the broken line part of the model illustrated in FIG. 15. When the input data acquired by the data acquisition unit 831 is input to the learned model illustrated in FIG. 18, the learned model outputs data obtained by encoding the input data.

Note that, in the present embodiment, although it has been described that the inference device 830 outputs the encoded data encoded by using the learned model learned by the model generation unit 812 included in the learning device 810 of the communication system, a learned model may be acquired from outside, for example, another communication system device, and the encoded data may be output on the basis of the learned model.

Next, a process for obtaining an output of encoded data by using the inference device 830 will be described with reference to FIG. 19. FIG. 19 is a flowchart regarding encoding in an inference process performed by the inference device 830.

In step c1, the data acquisition unit 831 acquires input data.

In step c2, the encoding unit 832 inputs the input data to the learned model stored in the learned model storage unit 820, and obtains encoded data output by the learned model.

In step c3, the encoding unit 832 transmits the encoded data obtained from the learned model to the base station. That is, the encoding unit 832 outputs the encoded data to the transmission unit 840, and the transmission unit 840 transmits the encoded data to the base station.

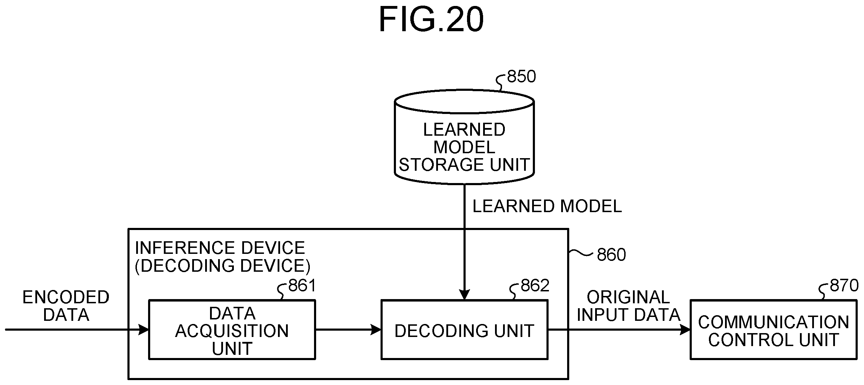

FIG. 20 is a configuration diagram of an inference device 860 applied to a decoding device among inference devices related to the communication system. The inference device 860 includes a data acquisition unit 861 and a decoding unit 862. The inference device 860 is applied to, for example, the base station. A learned model storage unit 850 stores the decoding model generated by the model generation unit 812 of the learning device 810 described above as a learned model. Although FIG. 20 illustrates the configuration example in which the learned model storage unit 850 is present outside the inference device 860, the learned model storage unit 850 may be configured to be included in the inference device 860. Similarly, for a communication control unit 870 that performs communication control of the base station on the basis of a result of decoding by the decoding unit 862, the communication control unit 870 may be configured not to be present outside the inference device 860, but to be included in the inference device 860. Control performed by the communication control unit 870 is, for example, control in a PHY layer.

The data acquisition unit 861 acquires the encoded data transmitted from the UE.

The decoding unit 862 decodes the encoded data by using the learned model. That is, by inputting the encoded data acquired by the data acquisition unit 861 to the learned model, the original input data before being encoded can be output.

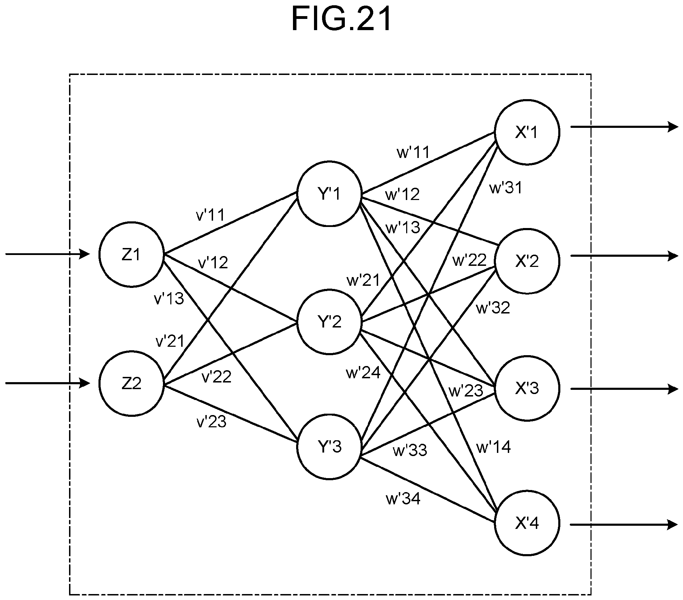

FIG. 21 illustrates an example of the learned model used in the decoding unit 862. The learned model illustrated in FIG. 21 is the same as the alternate long and short dash line part of the model illustrated in FIG. 15. When the encoded data acquired by the data acquisition unit 861 is input to the learned model illustrated in FIG. 21, the learned model outputs the original input data.

Note that, in the present embodiment, although it has been described that the inference device 860 outputs the decoded data decoded by using the learned model learned by the model generation unit 812 included in the learning device 810 of the communication system, a learned model may be acquired from outside, for example, another communication system device, and the decoded data may be output on the basis of the learned model.

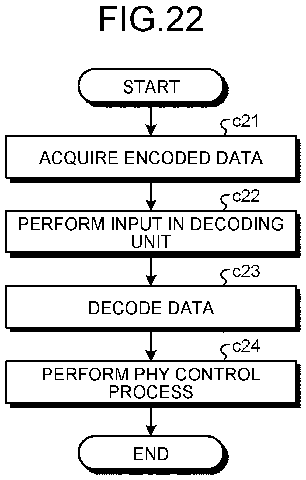

Next, a process for obtaining an output of decoded data by using the inference device 860 will be described with reference to FIG. 22. FIG. 22 is a flowchart regarding decoding in the inference process performed by the inference device 860.

In step c21, the data acquisition unit 861 acquires encoded data.

In step c22, the decoding unit 862 inputs the encoded data to the learned model stored in the learned model storage unit 850.

In step c23, the decoding unit 862 obtains a decoding result of the encoded data output by the learned model.

In step c24, the communication control unit 870 performs communication control of the base station by using the original input data obtained by the learned model. The control is, for example, control in the PHY layer.

The encoding model and/or the decoding model learned by using the learning device may be applied to the transmission of CSI from the UE to the base station. The UE acquires CSI from a CSI-RS from the base station. The UE may encode the obtained CSI. The above encoding model may be used for the encoding. The UE may transmit the encoded CSI to the base station. The base station may decode the encoded CSI. The above decoding model may be used for the decoding in the base station. The base station may perform control of the base station, for example, beam control, scheduling, or the like, by using the decoded CSI.

In applying the encoding model and/or the decoding model to the transmission and reception of the CSI between the base station and the UE, the following problem occurs. That is, a subject that learns the encoding model and/or the decoding model (hereinafter, sometimes referred to as encoding/decoding models) and a subject that decodes encoded information transmitted from the UE in the base station divided into the CU and the DU are not disclosed. Therefore, the UE cannot apply the encoding/decoding models between the base station divided into the CU and the DU and the UE, and there arises a problem that efficiency of the communication system is reduced.

The first embodiment discloses a method for solving the above problem.

In order to solve the above problem, in the communication system according to the present embodiment, the CU learns the encoding/decoding models.

The DU may have the decoding model. The DU may decode the encoded data from the UE. Consequently, for example, it is possible to reduce the amount of processing of the CU.

The CU may have the decoding model. The CU may decode the encoded data from the UE. Consequently, for example, it is possible to reduce the amount of processing of the DU, and to reduce memory usage of the DU.

Both the DU and the CU may have the decoding model. For example, the DU may have a part of the decoding model and the CU may have the rest thereof. As another example, the DU may have a part of the decoding model, the CU may have another part thereof, and the core NW device, for example, the AMF and/or the LMF may have the rest thereof. Consequently, for example, in a case where encoded information includes a plurality of pieces of information, the DU, the CU, and/or the core NW device can each decode and use necessary information, and as a result, the amount of signaling in the communication system can be reduced.

A subject having the decoding model may be determined on the basis of information to be encoded/decoded. For example, the DU may decode the CSI. Consequently, for example, the DU can perform PHY control, for example, scheduling, by using the decoded CSI, and as a result, it is possible to avoid complexity in control in the communication system.

The encoding/decoding models using the learning device may be used for transmission and reception of a report of a beam measurement result. For example, the UE may encode all or some of measurement results of received beams and transmit the encoded measurement results to the DU and/or the CU. The DU and/or the CU may perform beam control for the UE by using the information. Consequently, for example, the UE can transmit many beam measurement results.

The encoding/decoding models using the learning device may be used for transmission and reception of position information and/or a positioning signal reception result. As another example of the case where the subject having the decoding model is determined on the basis of the information to be encoded/decoded, the position information and/or the positioning signal reception result may be decoded by the CU, or may be decoded by the LMF. Consequently, for example, in the communication system, many pieces of learning data pertaining to the position information and/or the positioning signal reception result can be used, and as a result, the positioning accuracy can be improved. In addition, the amount of processing of the DU can be reduced.

The encoding/decoding models using the learning device may be used for minimization of drive tests (MDT) (Non Patent Literature 35 (3GPP TS 37.320)). The encoding/decoding models may be used for transmission of a measurement result of the MDT from the UE to the CU. The learning device may be included in the DU, the CU, or the core NW device. The CU may notify the UE of the learned model. As another example, the core NW device may transmit the learned model to the CU, the DU, and/or the UE. The UE may encode the measurement result of the MDT by using the learned model. The DU and/or the CU may decode the encoded measurement result received from the UE by using the learned model. Consequently, for example, it is possible to improve efficiency in a notification of information about the measurement result of the MDT.

The subject may be determined in advance in a standard, may be determined by the CU, or may be determined by the core NW device, for example, the AMF, and the AMF may notify the CU thereof.

The CU requests the UE to perform a notification of the learning data. For the request from the CU to the UE, RRC signaling, for example, RRCReconfiguration may be used. New RRC signaling may be provided and used.

The request from the CU to the UE may be made via the DU. For the request from the CU to the DU, for example, an F1 interface may be used. New F1 signaling may be provided. The new F1 signaling may be used for the request from the CU to the DU. MAC signaling or L1/L2 signaling may be used for the request from the DU to the UE.

The request from the CU to the UE may be aperiodic. As another example, the request may be made periodically. The request may include information about a learning start timing, information about a learning end timing, or information about a learning period.

The request may include information about the learning data. The information may include a configuration for acquisition of the learning data. For example, the configuration may include a configuration for a CSI-RS. In a case where the learning data is the CSI, the CU may include the configuration for the CSI-RS in the information and notify the UE thereof. As another example, the configuration may include information about a positioning signal, for example, a positioning reference signal (PRS) (see Non Patent Literature 13 (3GPP TS 38.211)). In a case where the learning data is the position information and/or the positioning signal reception result, the CU may include a configuration for the PRS in the information and notify the UE thereof. The UE may acquire the learning data by using the information. Consequently, for example, the UE can efficiently acquire the learning data.

The UE may acquire the learning data. The UE may acquire the learning data as triggered by the request. The UE may notify the CU of the learning data. RRC signaling may be used for the notification of the learning data from the UE to the CU. RRCReconfigurationComplete may be used, or new RRC signaling may be provided and used. The UE may include the learning data in RRC signaling and notify the CU thereof. The learning data included in RRC signaling may be data acquired by the UE. The data may be one piece of data, or a plurality of pieces of data. The data may be, for example, the CSI, the position information and/or the positioning signal reception result, or the beam measurement result. The data may be data acquired by the UE by one measurement or a plurality of measurements. For example, by including the data acquired by the UE by the plurality of measurements in RRC signaling, the amount of signaling from the UE to the CU can be reduced. The CU may learn the encoding/decoding models by using the learning data acquired from the UE.

The notification of the learning data from the UE to the CU may be performed via the DU. The UE may notify the DU of the learning data, for example, un-encoded CSI. The notification from the UE to the DU may be performed by using, for example, L1/L2 signaling or MAC signaling, or may be performed by being included in the PUSCH. The DU may notify the CU of the learning data. For the notification from the DU to the CU, for example, an F1 interface may be used. New F1 signaling may be provided. The new F1 signaling may be used for the notification from the DU to the CU. The DU may perform control of the base station, for example, scheduling by using the learning data which the DU has notified the CU of. Consequently, for example, it is possible to improve the efficiency of the communication system.

An operation of the learning phase may be performed during the execution of communication between the UE and the base station. For example, the DU may perform control of the base station, for example, scheduling by using the learning data of the CSI which the UE notifies the DU of, and the CU may calculate the position of the UE by using the learning data of the positioning signal reception result which the UE notifies the CU of. Consequently, for example, it is possible to improve the efficiency of the communication system.

The CU notifies the UE of information about the encoding model. The notification from the CU to the UE may include information about the decoding model. RRC signaling may be used for the notification. The RRC signaling may be, for example, RRCReconfiguration, RRCResume, or RRCSetup. As another example, MAC signaling may be used for the notification. Consequently, for example, the notification can be promptly executed. As another example, L1/L2 signaling may be used for the notification. Consequently, for example, the notification can be more promptly executed. The UE configures the encoding model by using the information included in the notification.

The following (1) to (12) will be disclosed as examples of information included in the notification from the CU to the UE.
(1) Type of input value.
(2) The number of nodes in the input layer.
(3) Depth of the hidden layer.
(4) The number of nodes in the hidden layer.
(5) A function applied to each node of the hidden layer.
(6) The number of nodes in the output layer.
(7) A function applied to each node of the output layer.
(8) Weighting coefficients for branches.
(9) Information about nodes to which branches join.
(10) Information about a default operation mode of the learning device.
(11) Binary information of a model.
(12) A combination of (1) to (11) described above.

The above (1) may be, for example, information indicating that it is CSI. The information may include details of the CSI to be input, for example, information about resources (time, frequency, antenna port, and the like) of a CSI-RS to be measured. The UE may perform an encoding process of the CSI by using the information. Consequently, for example, it is possible to avoid malfunction due to recognition inconsistency in input information between the base station and the UE.

The above (1) may include information about the type of CSI-RS to be measured. The information may be, for example, a zero-power CSI-RS (ZP-CSI-RS) or a non-zero-power CSI-RS (NZP-CSI-RS) (see Non Patent Literature 13 (3GPP TS 38.211)), or channel state information-interference measurement (CSI-IM) (see Non Patent Literature 15 (3GPP TS 38.214)). Consequently, for example, it is possible to improve the flexibility of channel measurement.

The above (1) may be information about another input value. For example, the above (1) may be information about a positioning signal reception result. Consequently, for example, the another input value can also be encoded/decoded, and as a result, efficiency in the communication system can be improved.

The above (2) may be, for example, the number of nodes itself in the input layer, or an identifier indicating the number of nodes in the input layer. The association between the number of nodes in the input layer and the identifier may be determined in advance in a standard, may be determined by the base station and the base station may notify the UE thereof, or may be determined by the core NW device (e.g., AMF) and the core NW device may notify the base station and/or the UE thereof. The UE may configure the input layer of the encoding model by using the information. Consequently, for example, it is possible to construct the encoding model in the UE.

The above (3) may be information about the depth of the hidden layer in the encoding unit. In the example illustrated in FIG. 18, the depth of the hidden layer may be 1, that is, the hidden layer may be a layer including Y1 to Y3. The UE may construct the encoding model by using the information. Consequently, for example, it is possible to construct the encoding model in the UE.

The above (4) may include information about the number of nodes in each hidden layer. An identifier indicating the number of nodes may be used instead of the information about the number of nodes itself. The association between the number of nodes in the hidden layer and the identifier may be determined in advance in a standard, may be determined by the base station, for example, the CU, and the CU may notify the UE thereof, or may be determined by the core NW device (e.g., AMF) and the core NW device may notify the base station and/or the UE thereof. The UE may configure the hidden layer of the encoding model by using the information. Consequently, for example, it is possible to construct the encoding model in the UE.

The above (5) may include information about a function to be applied to an input value of each hidden layer. The function may be, for example, a sigmoid function or a hyperbolic tangent function. As another example, the function may be a linear function, or the function may not be applied, that is, an input value to the hidden layer and an output value therefrom may be equal. The UE may configure the hidden layer of the encoding model by using the information. For example, the flexibility of the encoding model and/or the decoding model can be improved by the information of the above (5).

The above (5) may include information about an offset to be added to the input value of each hidden layer. The offset may be, for example, a value to be added to a result obtained by adding, for each branch, a product of a weighting coefficient input to each hidden layer and a value of a previous layer. For example, the flexibility of the encoding model and/or the decoding model can be improved by the information.

Information about the above (5) may be given for each node. Consequently, for example, the flexibility of the encoding model and/or the decoding model can be improved. As another example, the information may be given for each hidden layer. That is, the information may be shared between nodes of the same layer. Consequently, for example, it is possible to reduce the amount of signaling of the information. As another example, the information may be shared between nodes. Consequently, for example, it is possible to further reduce the amount of signaling of the information.

The above (6) may include information about the number of nodes in the output layer. In the example illustrated in FIG. 18, the nodes in the output layer may be Z1 and Z2. An identifier indicating the number of nodes may be used instead of the information about the number of nodes itself. The association between the number of nodes in the output layer and the identifier may be determined in advance in a standard, may be determined by the base station, for example, the CU, and the CU may notify the UE thereof, or may be determined by the core NW device (e.g., AMF) and the core NW device may notify the base station and/or the UE thereof. The UE may configure the output layer of the encoding model by using the information. Consequently, for example, it is possible to construct the encoding model in the UE.

The above (7) may be information similar to the above (5). Consequently, an effect similar to that of the above (5) is obtained.

Information about the above (7) may be given for each node. Consequently, for example, the flexibility of the encoding model and/or the decoding model can be improved. As another example, the information may be shared between nodes. Consequently, for example, it is possible to reduce the amount of signaling of the information.

Information of the above (8) may be given for each branch. The information may be respective values of w11 to w43 and v11 to v32 in the example illustrated in FIG. 18. The UE may configure branches between nodes by using the information. Consequently, for example, it is possible to construct the encoding model in the UE.

The information of the above (9) may include information about nodes at both ends of branches. The information about the nodes may be given by using, for example, an identifier of the entirety of the nodes, or a combination of information for identifying a layer and information for identifying a node in the layer. The UE may configure branches between nodes by using the information. Consequently, for example, it is possible to construct the encoding model in the UE.

Regarding the above (9), one or more layers may be present between both ends of a branch. For example, in the example illustrated in FIG. 18, there may be a branch that connects any one of X1 to X4 and any one of Z1 and Z2. As another example, both ends of a branch may be nodes of the same layer, or may be connected to the same node. Consequently, for example, it is possible to improve the flexibility of the encoding model.

The information of the above (10) may include information about an operating state of the encoding unit of the UE after the notification. The information may be, for example, information indicating that encoding is performed or information indicating that encoding is not performed. With the use of the information, the UE may perform or not perform the encoding. Consequently, for example, inconsistency in the operation mode of the learning device between the base station and the UE can be prevented, and as a result, malfunction in the communication system can be prevented.

Regarding the information of the above (11), a notification thereof may be performed, for example, in a case where the base station and the UE use the same platform. The UE may configure the encoding model by using the information. Consequently, for example, it is possible to reduce the amount of signaling between the base station and the UE.

The CU may notify the DU of the information about the decoding model. The notification may be performed, for example, in a case where the DU have the decoding model. The notification from the CU to the DU may include the information about the encoding model. For the notification, an F1 interface may be used. New F1 signaling may be provided. For the notification, the new F1 signaling may be used, or existing F1 signaling may be used. Information included in the notification from the CU to the DU may be similar to the above (1) to (12). The DU may configure the decoding model by using the notification.

The notification of the information about the encoding model from the CU to the UE may be performed via the DU. The notification of the information performed via the DU may be included, for example, in the notification of the information about the decoding model from the CU to the DU. The DU may extract the information about the encoding model and notify the UE thereof. The DU may extract the information about the decoding model and configure the decoding model for the DU. Consequently, it is possible to reduce the amount of signaling in the communication system.

The notification of the information about the encoding model from the CU to the UE and the notification of the information about the decoding model from the CU to the DU may be included in the same signaling. The signaling may be performed from the CU to the DU, or may be performed from the CU to the UE via the DU. The DU may extract the decoding model to be used by the DU from the signaling and use the decoding model. The DU may notify the UE of the information about the encoding model and the decoding model, or may extract the information about the encoding model and notify the UE thereof. Consequently, for example, it is possible to reduce the amount of signaling between the CU and the DU.

As another example, the notification of the information performed via the DU may be performed by using, for example, signaling different from that used for the notification of the information about the decoding model from the CU to the DU. Consequently, for example, it is possible to avoid complexity in the communication system.

The UE notifies the CU of completion of the configuration of the encoding model. RRC signaling, for example, RRCReconfigurationComplete may be used for the notification. As another example, MAC signaling or L1/L2 signaling may be used.

The DU may notify the CU of completion of the configuration of the decoding model. For the notification, an F1 interface may be used. New F1 signaling may be provided. For the notification, the new F1 signaling may be used, or existing F1 signaling may be used.

The notification of the completion of the configuration of the encoding model from the UE to the CU may be performed via the DU. MAC signaling or L1/L2 signaling may be used for the notification from the UE to the DU. The DU may notify the CU of the completion of the configuration of the encoding model of the UE. For the notification, an F1 interface may be used. New F1 signaling may be provided. For the notification, the new F1 signaling may be used, or existing F1 signaling may be used. The notification from the DU to the CU may include the information about the completion of the configuration of the decoding model in the DU, or the notification from the DU to the CU of the completion of the configuration of the decoding model in the DU may include the information about the completion of the configuration of the encoding model of the UE. The DU may perform the notification of the completion of the configuration of the encoding model of the UE as triggered by the completion of the configuration of the decoding model in the DU. Consequently, for example, it is possible to reduce the amount of signaling in the F1 interface.

The CU may instruct the UE to start encoding. RRC signaling may be used for the instruction. The RRC signaling may be, for example, RRCReconfiguration, RRCResume, or RRCSetup. As another example, MAC signaling may be used for the instruction. The instruction may be given via the DU. The CU may instruct the DU to transmit MAC signaling to the UE. Consequently, for example, the instruction can be promptly executed. As another example, L1/L2 signaling may be used for the instruction. The instruction may be given via the DU. The CU may instruct the DU to transmit L1/L2 signaling to the UE. Consequently, for example, the instruction can be more promptly executed. The UE starts encoding as triggered by the instruction.

The instruction may include information about the above (1). The UE may start encoding of information to be encoded/decoded by using the information. Consequently, for example, in a case where there is a plurality of targets to be encoded/decoded, it is possible to prevent a recognition inconsistency in information to be encoded/decoded between the CU and/or the DU and the UE, and as a result, it is possible to prevent malfunction in the communication system.

The instruction may include information about an encoding start timing. The information may be information indicating an encoding start time, or information using a frame number, a subframe number, a slot number, and/or a symbol number. The instruction may include information about a period leading up to the start of encoding. The UE may start the encoding by using the information. Consequently, for example, in a case where there is a plurality of targets to be encoded/decoded, it is possible to prevent a recognition inconsistency in encoding/decoding start timings between the CU and/or the DU and the UE, and as a result, it is possible to prevent malfunction in the communication system.

An encoding start instruction from the CU to the UE may be given via the DU. For a notification of the instruction from the CU to the DU, for example, an F1 interface may be used. New F1 signaling may be provided. For the notification, the new F1 signaling may be used, or existing F1 signaling, for example, UE CONTEXT MODIFICATION REQUEST may be used. For a notification of the instruction from the DU to the UE, RRC signaling, MAC signaling, or L1/L2 signaling may be used.

The encoding start instruction from the CU to the UE may be included in a notification of the encoding model. As another example, the UE may start the encoding as triggered by the notification of the encoding model from the CU. Consequently, for example, the encoding can be promptly started, and the amount of signaling between the CU and the UE can be reduced.

The CU may instruct the DU to start decoding. For the instruction, an F1 interface may be used. New F1 signaling may be provided. For the notification, the new F1 signaling may be used, or existing F1 signaling may be used. The DU may start the decoding by using the instruction.

The instruction from the CU to the DU may include the information about the above (1). The DU may start decoding of information to be encoded/decoded by using the information. Consequently, for example, in a case where there is a plurality of targets to be encoded/decoded, it is possible to prevent a recognition inconsistency in information to be encoded/decoded between the DU and the UE, and as a result, it is possible to prevent malfunction in the communication system.

The instruction may include information about a decoding start timing. The information may be information indicating an encoding start time, or information using a frame number, a subframe number, a slot number, and/or a symbol number. The instruction may include information about a period leading up to the start of encoding. The DU may start the decoding by using the information. Consequently, for example, in a case where there is a plurality of targets to be encoded/decoded, it is possible to prevent a recognition inconsistency in encoding/decoding start timings between the DU and the UE, and as a result, it is possible to prevent malfunction in the communication system.

A decoding start instruction from the CU to the DU may be included in the encoding start instruction from the CU to the UE. For example, the decoding start instruction may be included in the encoding start instruction directed to the UE which the CU notifies the DU of. The DU may start the decoding as triggered by the encoding start instruction which the CU notifies the UE via the DU of. Consequently, for example, it is possible to reduce the amount of signaling in the communication system.

The decoding start instruction from the CU to the DU may be included in a notification of the decoding model from the CU to the DU. The DU may start the decoding as triggered by the notification. Consequently, for example, the decoding can be promptly started, and the amount of signaling between the CU and the DU can be reduced.

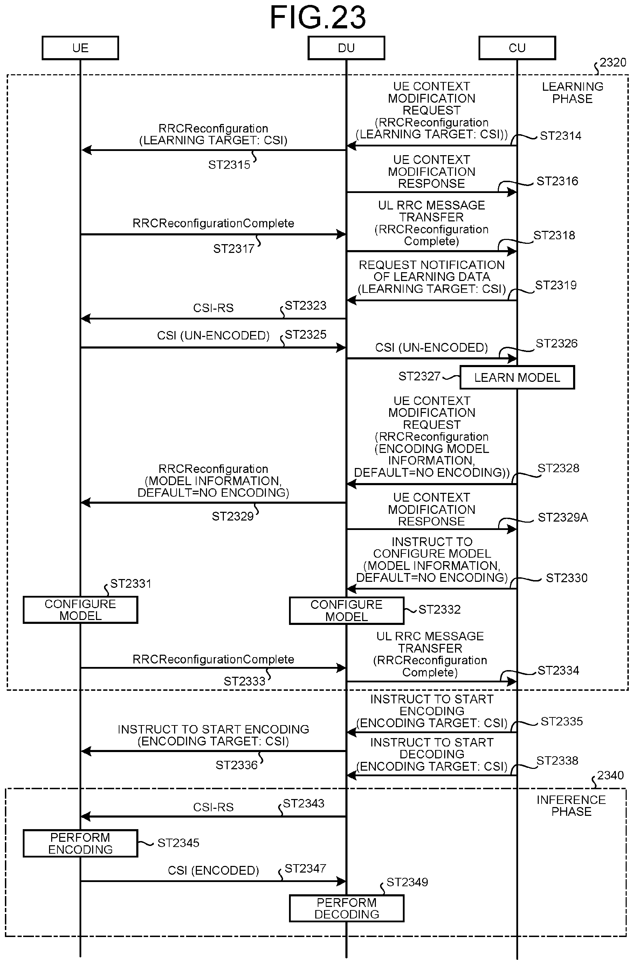

FIG. 23 is a sequence diagram illustrating a learning operation of encoding/decoding models of CSI and encoding/decoding operations using a learned model. FIG. 23 illustrates an example in which the CU learns the encoding/decoding models, the UE performs encoding, and the DU performs decoding.

Procedure 2320 illustrated in FIG. 23 is a procedure indicating the learning phase of the encoding/decoding models.

In steps ST2314 and ST2315 illustrated in FIG. 23, the CU instructs the UE to start learning of the encoding/decoding models. The instruction is given via the DU. Signaling of RRCReconfiguration may be used for the instruction. Step ST2314 indicates signaling from the CU to the DU, and step ST2315 indicates signaling from the DU to the UE. In step ST2314, signaling of UE CONTEXT MODIFICATION REQUEST may be used. The signaling of step ST2314 may include the signaling of step ST2315. Information about the learning data may be included in the signalings of steps ST2314 and ST2315. The CU may transmit the information to the UE via the DU. The example illustrated in FIG. 23 includes information indicating that the learning data is CSI. The signalings of steps ST2314 and ST2315 may include a configuration of a CSI-RS to be transmitted to the UE. The CU may determine information about the configuration and transmit the information to the UE via the DU. As another example, the DU may determine the information about the configuration and transmit the information to the UE. In a case where the DU determines the information about the configuration, the information about the configuration may be included only in step ST2315. In step ST2316, the DU transmits, to the CU, a response to step ST2314. For the transmission of the response, for example, signaling of UE CONTEXT MODIFICATION RESPONSE may be used.

The UE configures transmission of the learning data of the encoding/decoding models of the CSI. The UE may perform the configuration as triggered by the reception in step ST2315. In steps ST2317 and ST2318 illustrated in FIG. 23, the UE notifies the CU of completion of the configuration of the learning data transmission. Signaling of RRCReconfigurationComplete may be used for the instruction. Step ST2317 indicates signaling from the UE to the DU, and step ST2318 indicates signaling from the DU to the CU. In step ST2318, signaling of UL RRC MESSAGE TRANSFER may be used. The signaling of step ST2318 may include the signaling of step ST2317.

In step ST2319 illustrated in FIG. 23, the CU requests the DU to perform a notification of the learning data. For example, an F1 interface may be used for the request. New F1 signaling may be provided. For the request from the CU to the DU, the new F1 signaling may be used, existing F1 signaling, for example, UE CONTEXT MODIFICATION REQUEST may be used, or another existing signaling may be used. The request may include the information about the learning data. The example illustrated in FIG. 23 includes information indicating that the learning data is CSI. The request may include information about the CSI-RS to be transmitted from the DU to the UE. With the use of the notification, the DU may transmit the CSI-RS to the UE, may transmit CSI received from the UE to the CU, or may perform both of the above.

The signaling of step ST2319 illustrated in FIG. 23 may be included in step ST2314. As another example, as triggered by the reception in step ST2314, the DU may notify the CU of the learning data, or may perform an operation serving as a trigger for transmission of the learning data from the UE. For example, the DU may transmit the CSI-RS to the UE, may transmit the CSI received from the UE to the CU, or may perform both of the above. Consequently, for example, it is possible to reduce the amount of signaling between the CU and the DU.

In step ST2323 illustrated in FIG. 23, the DU transmits the CSI-RS to the UE. The CSI-RS may be a zero-power CSI-RS (ZP-CSI-RS) or a non-zero-power CSI-RS (NZP-CSI-RS) (see Non Patent Literature 13 (3GPP TS 38.211)), or channel state information-interference measurement (CSI-IM) (see Non Patent Literature 15 (3GPP TS 38.214)). The UE receives the CSI-RS from the DU and transmits CSI to the DU in step ST2325. The CSI included in step ST2325 is un-encoded CSI. Step ST2323 and/or step ST2325 may be performed a plurality of times.

In step ST2326 illustrated in FIG. 23, the DU transmits, to the CU, the CSI received in step ST2325. For example, an F1 interface may be used for the transmission. New F1 signaling may be provided. The new F1 signaling may be, for example, signaling pertaining to a notification of the learning data. For the transmission from the DU to the CU, the new F1 signaling may be used, existing F1 signaling, for example, UE CONTEXT MODIFICATION RESPONSE may be used, or another existing signaling may be used. The transmission may include one piece of CSI or a plurality of pieces of CSI. In step ST2327, the CU learns the encoding/decoding models of the CSI report. In the example illustrated in FIG. 23, the CSI received in step ST2326 is used for the learning.

In steps ST2328 and ST2329 illustrated in FIG. 23, the CU notifies the UE of information about the learned encoding model. The notification is performed via the DU. Signaling of RRCReconfiguration may be used for the notification. Step ST2328 indicates signaling from the CU to the DU, and step ST2329 indicates signaling from the DU to the UE. In step ST2328, signaling of UE CONTEXT MODIFICATION REQUEST may be used. The signaling of step ST2328 may include the signaling of step ST2329. The notification may include, for example, the information indicated in the above (1) to (12). In the example illustrated in FIG. 23, a default operation phase of the encoding model is no encoding. In step ST2331, the UE configures the encoding model. For the configuration, the information included in step ST2329 may be used. In the example illustrated in FIG. 23, the UE may employ no encoding as an initial operation of the encoding model after the model configuration. That is, the UE may transmit the un-encoded CSI to the DU immediately after step ST2331. In step ST2329A, the DU transmits, to the CU, a response to step ST2328. For the transmission of the response, for example, signaling of UE CONTEXT MODIFICATION RESPONSE may be used.

In step ST2330 illustrated in FIG. 23, the CU notifies the DU of information about the learned decoding model. For example, an F1 interface may be used for the notification. New F1 signaling may be provided. For the notification from the CU to the DU, the new F1 signaling may be used, existing F1 signaling, for example, UE CONTEXT MODIFICATION REQUEST may be used, or another existing signaling may be used. The notification may include, for example, the information indicated in the above (1) to (12). In the example illustrated in FIG. 23, a default operation phase of the decoding model is no encoding. In step ST2332, the DU configures the decoding model.

The signaling of step ST2330 may be included in step ST2328. For example, step ST2328 may include information about the decoding model of the DU. The DU may configure the decoding model of the DU as triggered by the reception in step ST2328. Consequently, for example, the necessity of the signaling of step ST2330 is eliminated, and as a result, it is possible to reduce the amount of signaling in the communication system.

In steps ST2335 and ST2336 illustrated in FIG. 23, the CU instructs the UE to start encoding. The instruction is given via the DU. Signaling of RRCReconfiguration may be used for the instruction. Step ST2335 indicates signaling from the CU to the DU, and step ST2336 indicates signaling from the DU to the UE. In step ST2335, signaling of UE CONTEXT MODIFICATION REQUEST may be used. The signaling of step ST2335 may include the signaling of step ST2336. Information about data to be encoded may be included in the signalings of steps ST2335 and ST2336. The example illustrated in FIG. 23 includes information indicating that a target to be encoded is CSI. The UE may start the encoding process as triggered by step ST2336.

MAC signaling or L1/L2 signaling may be used in step ST2336 illustrated in FIG. 23. Consequently, for example, it is possible for the DU to promptly transmit the encoding start instruction to the UE.

In step ST2338 illustrated in FIG. 23, the CU instructs the DU to start decoding. For example, an F1 interface may be used for the instruction. New F1 signaling may be provided. For the instruction from the CU to the DU, the new F1 signaling may be used, existing F1 signaling, for example, UE CONTEXT MODIFICATION REQUEST may be used, or another existing signaling may be used. The instruction may include information about data to be decoded. The example illustrated in FIG. 23 includes information indicating that a target to be decoded is CSI. The DU may start a decoding process as triggered by step ST2338.

The signaling of step ST2338 may be included in step ST2335. For example, step ST2335 may include the decoding start instruction to the DU. The DU may start decoding as triggered by the reception in step ST2335. Consequently, for example, the necessity of the signaling of step ST2338 is eliminated, and as a result, it is possible to reduce the amount of signaling in the communication system.

The information included in step ST2330, the information included in step ST2335 and/or step ST2336, the information included in step ST2338, or the plurality of pieces of information described above may be included in the signaling of step ST2328 and/or step ST2339. The UE may start encoding as triggered by the reception in step ST2329. As triggered by the reception in step ST2328, the DU may configure the decoding model, or may start decoding. Consequently, for example, it is possible to reduce the amount of signaling in the communication system.

Procedure 2340 illustrated in FIG. 23 is a procedure indicating the inference phase of the encoding/decoding models.

In step ST2343 illustrated in FIG. 23, the DU transmits a CSI-RS to the UE. The UE acquires CSI by reception of the CSI-RS from the DU, and encodes the CSI in step ST2345. In step ST2347, the UE transmits the encoded CSI to the DU. In step ST2349, the DU decodes the encoded CSI to generate the original CSI. The DU performs communication control, for example, PHY layer control, by using the CSI output in step ST2349.

FIG. 23 illustrates a case where steps ST2328 and ST2335 as well as steps ST2329 and ST2336 are signalings different from each other, but steps ST2328 and ST2335 as well as steps ST2329 and ST2336 may be the same signaling. For example, step ST2335 may be included in step ST2328, or step ST2336 may be included in step ST2329. Consequently, for example, the UE and the DU can promptly start the encoding and the decoding.

As another example, the UE may start the encoding as triggered by the reception in step ST2329. Consequently, for example, the UE can promptly start the encoding.

Although the example has been described in which signaling of RRCReconfiguration is used in step ST2315 illustrated in FIG. 23, signaling of RRCResume may be used. The signaling may be used, for example, when the UE is in an RRC_INACTIVE state. Consequently, for example, the UE can promptly start the learning phase after returning from the RRC_INACTIVE state, and the amount of signaling in the communication system can be reduced. As another example, signaling of RRCSetup may be used. The signaling may be used, for example, when the UE is in an RRC_IDLE state. Consequently, for example, the UE can promptly start the learning phase after transition from the RRC_IDLE state to an RRC_CONNECTED state, and the amount of signaling in the communication system can be reduced.

The DU may determine to start and/or stop encoding, or to start and/or stop decoding. In the example illustrated in FIG. 23, the DU may determine to start and/or stop decoding, or the DU may transmit the encoding start instruction in step ST2336. Consequently, for example, encoding/decoding of data (for example, CSI) using the encoding/decoding models can be promptly started. Criteria for determining whether to start and/or stop encoding, or to start and/or stop decoding may be defined in a standard, may be determined by the CU and the CU may notify the DU thereof, or may be determined by the core NW, for example, the AMF, and the AMF may notify the DU via the CU thereof.

The encoding/decoding models may be commonly used between DUs under the CU. Consequently, for example, it is possible to reduce the amount of processing of the CU. As another example, the encoding/decoding models may be individually provided for each DU. Consequently, for example, an optimal learning result can be obtained for each DU, and as a result, efficiency in communication between the UE and the DUs can be improved.

A group including one or a plurality of DUs (hereinafter, sometimes referred to as a DU group) may be provided. The encoding/decoding models may be commonly used in the DU group. Consequently, for example, an optimal learning result can be obtained for each DU group while enabling the amount of processing of the CU to be reduced, and as a result, efficiency in communication between the UE and the DUs can be improved.

The DU group may be determined by using positions of DUs. For example, neighbor DUs may be included in the same DU group. The CU may notify the DUs of the information about the DU group. For the notification, an F1 interface may be used. New F1 signaling may be provided. For the notification, the new F1 signaling may be used, or existing F1 signaling may be used. The DUs may acquire the information about the DU group by using the notification.

The CU may notify the UE of information about encoding/decoding models to be used by the UE and/or the DUs. The notification may be performed by the DUs. The notification may include, for example, information about use, in a DU, of encoding/decoding models common to other DUs. The information may include, for example, information about whether DUs under the CU use common encoding/decoding models, or may include information about the DU group. Consequently, for example, in intra-CU inter-DU mobility, it is possible to promptly start using the encoding/decoding models in a destination DU.

A decoding model corresponding to encoding models of a plurality of UEs may be provided. The encoding models of respective UEs may be different from each other. The decoding model may commonly correspond to, for example, a plurality of encoding models different from each other. Consequently, for example, it is possible to improve the efficiency of the communication system by using an optimal learning result for each UE while enabling memory usage to be reduced in a subject of the learning and/or a subject of the decoding.

Information about the UE may be used for decoding using the decoding model. The information about the UE may be used in the learning of the encoding/decoding models described above. In the example illustrated in FIG. 15, a plurality of encoding models may be provided, each of the encoding models being identical with the encoding model surrounded by the broken line. In the example illustrated in FIG. 15, the number of decoding models surrounded by the alternate long and short dash line may be one. In the example illustrated in FIG. 15, the information about the UE may be used. The information about the UE may be used as an input to the decoding model.

The DU may notify the CU of information about the capability of the encoding/decoding models. The information may include information about the capability in the DU, may include information about the capability in the UE, or may include both of the above. The CU may learn the encoding/decoding models by using the information. Consequently, for example, an increase in the amount of processing of the UE and/or the DU can be prevented, and as a result, malfunction in the communication system can be prevented.

The following (A) to (N) will be disclosed as examples of the information about the capability of the encoding/decoding models which the DU notifies the CU of.
(A) The maximum number of nodes.
(B) The maximum number of input layers.
(C) The maximum number of hidden layers.
(D) The maximum number of depths of the hidden layer.
(E) The maximum number of output layers.
(F) Applicability of a function to the hidden layer and/or the output layer.
(G) Maximum precision of values of nodes.
(H) The maximum number of branches.
(I) Maximum precision of weight values of branches.
(J) Processing speed.
(K) A memory amount of the learning device.
(L) Information about the category of the learning device.
(M) Information about a subject having a capability of the encoding/decoding models.
(N) A combination of the above (A) to (M).

The above (A) may be, for example, the maximum number of nodes itself in the input layer, the hidden layer, and the output layer, in total, or an identifier indicating the maximum number of nodes. The association between the maximum number of nodes and the identifier may be determined in advance in a standard, may be determined by the CU and the CU may notify the DU and/or the UE thereof, or may be determined by the core NW device (e.g., AMF) and the core NW device may notify the CU, the DU, and/or the UE thereof. The CU may determine the size of the encoding model by using the information. Consequently, for example, memory overflow in the DU and/or the UE can be prevented, and as a result, malfunction of the DU and/or the UE can be prevented.

The above (B) may include information about the maximum number of nodes in the input layer. An identifier indicating the maximum number of nodes may be used instead of the information about the maximum number of nodes itself. The association between the maximum number of nodes and the identifier may be determined in advance in a standard, may be determined by the CU and the CU may notify the DU and/or the UE thereof, or may be determined by the core NW device (e.g., AMF) and the core NW device may notify the CU, the DU, and/or the UE thereof. The CU may configure the input layer of the encoding model by using the information. Consequently, for example, the CU can construct an encoding model usable in the DU and/or the UE, as well.

The above (C) may include information about the maximum number of nodes in the entirety of the hidden layers. An identifier indicating the maximum number of nodes may be used instead of the information about the maximum number of nodes itself. The association between the maximum number of nodes in the hidden layers and the identifier may be determined in advance in a standard, may be determined by the CU and the CU may notify the DU and/or the UE thereof, or may be determined by the core NW device (e.g., AMF) and the core NW device may notify the CU, the DU, and/or the UE thereof. The CU may configure the hidden layers of the encoding model by using the information. Consequently, for example, the CU can construct an encoding model usable in the DU and/or the UE, as well.

The above (D) may be information about the maximum number of depths of the hidden layer in the encoding unit. The CU may construct the hidden layer by using the information. Consequently, for example, an effect similar to that described above is obtained.

The above (E) may include information about the maximum number of nodes in the output layer. An identifier indicating the maximum number of nodes may be used instead of the information about the maximum number of nodes itself. The association between the maximum number of nodes in the output layer and the identifier may be determined in advance in a standard, may be determined by the CU and the CU may notify the DU and/or the UE thereof, or may be determined by the core NW device (e.g., AMF) and the core NW device may notify the CU, the DU, and/or the UE thereof. The CU may configure the output layer of the encoding model by using the information. Consequently, for example, it is possible to construct the encoding model in the DU and/or the UE.

The above (F) may include information about a function applicable to an input value of each hidden layer and/or the output layer. The function may be, for example, a sigmoid function, a hyperbolic tangent function, or a linear function. Applicability may be given for each function. The CU may determine a function to be applied to the encoding model by using the information. By the information of the above (F), for example, the CU can construct the encoding model executable in the DU and/or the UE.

For example, the information about the above (G) may be given as the number of bits, or may be given as a value type (e.g., single precision real number, or double precision real number). The compatibility of each value type may be given. The CU may determine the accuracy of values of nodes by using the information. Consequently, for example, memory overflow in the DU and/or the UE can be prevented, and as a result, malfunction of the UE can be prevented.

The above (H) may include information about the maximum number of branches usable in the encoding/decoding models. The above (H) may be an identifier indicating the maximum number of branches. The association between the maximum number of branches and the identifier may be determined in advance in a standard, may be determined by the CU and the CU may notify the DU and/or the UE thereof, or may be determined by the core NW device (e.g., AMF) and the core NW device may notify the CU, the DU, and/or the UE thereof. The CU may determine the size of the encoding model by using the information. Consequently, for example, memory overflow in the DU and/or the UE can be prevented, and as a result, malfunction of the DU and/or the UE can be prevented.

The information about the above (I) may be given similarly to the above (G), for example. Consequently, for example, an effect similar to that of the above (G) is obtained.

The above (J) may include information about a calculation speed of an encoding process performed by the DU and/or the UE. The CU may determine the size of the encoding model by using the information. The CU may use, for the determination, an encoding processing time allowed in the DU and/or the UE. Consequently, for example, it is possible to prevent malfunction due to a delay of the encoding process performed by the DU and/or the UE.

The above (K) may be a memory amount itself usable for the encoding process or an identifier indicating the memory amount. The association between the memory amount and the identifier may be determined in advance in a standard, may be determined by the CU and the CU may notify the DU and/or the UE thereof, or may be determined by the core NW device (e.g., AMF) and the core NW device may notify the CU, the DU, and/or the UE thereof. The CU may determine the size of the encoding model by using the information. Consequently, for example, memory overflow in the DU and/or the UE can be prevented, and as a result, malfunction of the DU and/or the UE can be prevented.

The above (L) may be, for example, information indicating the size of the encoding model usable by the DU and/or the UE. The CU may determine the size of the encoding model by using the information. Consequently, for example, the amount of signaling among the CU, the DU, and/or the UE can be reduced, and the CU can promptly determine the encoding model.

The above (M) may be, for example, information for identifying the UE (e.g., an identifier of the UE) or information for identifying the DU (e.g., an identifier of the DU). The above (M) may include information for identifying an IAB-node described later. Consequently, for example, the CU can promptly know information about the capability of the encoding/decoding models of the DU and/or the UE.

F1 signaling, for example, F1 SETUP REQUEST (see Non Patent Literature 36 (3GPP TS 38.473)) may be used for the notification of the information about the capability from the DU to the CU. Consequently, for example, the CU can acquire the information about the capability in advance, and as a result, the learning of the encoding/decoding models can be promptly started.

As another example, UE CONTEXT MODIFICATION RESPONSE may be used. Consequently, for example, the size of signaling in establishment of connection between the CU and the DU can be reduced, and as a result, the establishment of connection between the CU and the DU can be promptly performed.

As another example, another existing F1 signaling may be used, or new F1 signaling may be provided and used.

The CU may make a request to the DU for information about the capability of the encoding/decoding models. The DU may perform a notification of the information about the capability as triggered by the request.

For the request for the information about the capability from the CU to the DU, F1 signaling, for example, UE CONTEXT MODIFICATION REQUEST may be used, another existing F1 signaling may be used, or new F1 signaling may be provided and used.

The request for the information about the capability from the CU to the DU may include information about the type of the requested capability, or may include information about a device pertaining to the request. The information about the type may be, for example, information indicating which one of the above (A) to (L) the type is. The information about the device may be, for example, the information about the above (M). The DU may use the information about the type and/or the information about the device in the notification of the information about the capability to the CU. For example, the DU may notify the CU of only the information about the type of the capability requested from the CU. Consequently, for example, since the DU does not transmit information unnecessary for the CU, the size of signaling from the DU to the CU can be reduced.

Another solution will be disclosed. The DU learns the encoding/decoding models.

The DU may have the decoding model. The DU may decode the encoded data from the UE. Consequently, for example, it is possible to reduce the amount of processing of the CU.

The CU may request the UE to perform a notification of the learning data. The request from the CU to the UE may be made by a method similar to that described above, for example, via the DU.

The CU instructs the DU to start learning of the encoding/decoding models. For the instruction, an F1 interface may be used. New F1 signaling may be provided. For the notification, the new F1 signaling may be used, or existing F1 signaling may be used. The instruction may include information about a learning end condition. The learning end condition may include information about a threshold of error, for example, information about a threshold of error between decoded data (e.g., X'1 to X'4 in FIG. 15) and original input data (e.g., X1 to X4 in FIG. 15), information about a learning time, or information about the number of pieces of the learning data. The DU learns the encoding/decoding models by using the instruction.

The instruction from the CU to the DU may include information about the encoding/decoding models to be learned. For example, information about the above (1) to (12) may be included. Consequently, for example, the DU can promptly execute the learning.

The DU notifies the CU of completion of the learning. For the notification, an F1 interface may be used. New F1 signaling may be provided. For the notification, the new F1 signaling may be used, or existing F1 signaling may be used. The notification may include information about the learned encoding/decoding models. The information may include, for example, information of the above (1) to (12). As triggered by the notification, the CU may recognize the completion of the learning, or may acquire the information about the learned encoding/decoding models.

The CU notifies the UE of information about the learned encoding model. The notification may be performed similarly to the above, for example, via the DU. The UE may configure the encoding model by using the information.

The notification to the UE may be performed by the DU. The notification by the DU may be performed without being triggered by, for example, a notification and/or an instruction from the CU. For example, the DU may perform the notification by using MAC signaling or may perform the notification by using L1/L2 signaling. MAC signaling and/or L1/L2 signaling used for a notification of the encoding model may be newly provided. Consequently, for example, it is possible to reduce the amount of processing of the CU, and to reduce F1 signaling.

The CU may instruct the DU to configure the decoding model. For the instruction, an F1 interface may be used. New F1 signaling may be provided. For the notification, the new F1 signaling may be used, or existing F1 signaling may be used. The DU may configure the decoding model by using the information.

As another example, the DU may configure the decoding model. For example, the DU may configure the decoding model as triggered by completion of the encoding/decoding models. Consequently, for example, it is possible to reduce signaling over the F1 interface.

The UE may notify the CU of completion of the configuration of the encoding model. The notification may be performed similarly to the above.

The DU may notify the CU of completion of the configuration of the decoding model. The notification may be performed similarly to the above.

The CU may instruct the UE to start encoding. The instruction may be given similarly to the above.

The CU may instruct the DU to start decoding. The instruction may be given similarly to the above.

As another example of the start of encoding/decoding, the DU may determine the start of the encoding/decoding. The DU may instruct the UE to start encoding. MAC signaling or L1/L2 signaling may be used for the instruction. The UE may start the encoding as triggered by the instruction. Consequently, for example, it is possible to reduce the amount of signaling in the F1 interface.

The DU may autonomously start learning. The DU may instruct the UE to start learning or to start encoding. Consequently, for example, it is possible to reduce the amount of signaling in the F1 interface.

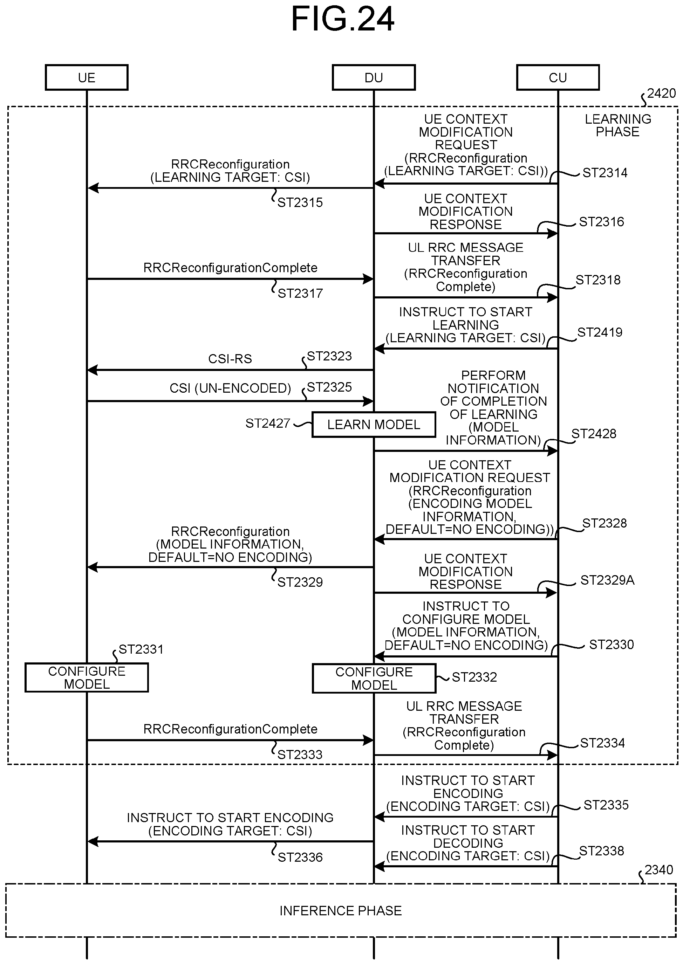

FIG. 24 is a sequence diagram illustrating examples of the learning operation of the encoding/decoding models of the CSI and encoding/decoding operations using the learned model. FIG. 24 illustrates an example in which the UE performs encoding, and the DU learns the encoding/decoding models and performs decoding. In FIG. 24, processes similar to those in FIG. 23 are denoted by the same numbers as those therein, and a common description will be omitted.

Procedure 2420 illustrated in FIG. 24 is a procedure indicating the learning phase of the encoding/decoding models.

Steps ST2314 to ST2318 illustrated in FIG. 24 are similar to those in FIG. 23.

In step ST2419 illustrated in FIG. 24, the CU instructs the DU to start learning of the encoding/decoding models. For example, an F1 interface may be used for the instruction. New F1 signaling may be provided. For the instruction from the CU to the DU, the new F1 signaling may be used, existing F1 signaling, for example, UE CONTEXT MODIFICATION REQUEST may be used, or another existing signaling may be used. The instruction may include information about the learning data. The example illustrated in FIG. 24 includes information indicating the learning data as CSI. The instruction may include information about a learning end condition. The learning end condition may include information about a threshold of error, for example, information about a threshold of error between decoded data (e.g., X'1 to X'4 in FIG. 15) and original input data (e.g., X1 to X4 in FIG. 15), information about a learning time, or information about the number of pieces of the learning data. The instruction may include information about the encoding/decoding models to be learned. For example, the information about the above (1) to (12) may be included. The instruction may include information about the CSI-RS to be transmitted from the DU to the UE. As triggered by the notification, the DU may transmit the CSI-RS to the UE, may transmit CSI received from the UE to the CU, or may perform both of the above.

Steps ST2323 and ST2325 illustrated in FIG. 24 are similar to those in FIG. 23.

In step ST2427 illustrated in FIG. 24, the DU learns the encoding/decoding models of the CSI. In the example illustrated in FIG. 24, the CSI received in step ST2325 is used for the learning.

In step ST2428 illustrated in FIG. 24, the DU notifies the CU of completion of the learning of the encoding/decoding models. For example, an F1 interface may be used for the notification. New F1 signaling may be provided. For the notification from the DU to the CU, the new F1 signaling may be used, existing F1 signaling, for example, UE CONTEXT MODIFICATION RESPONSE may be used, or another existing signaling may be used. The notification may include information about the encoding/decoding models, for example, the information of the above (1) to (12).

Steps ST2328 to ST2338 illustrated in FIG. 24 are similar to those in FIG. 23.

Procedure 2340 illustrated in FIG. 24 is similar to that in FIG. 23.

A subject of the learning of the encoding/decoding models may be determined on the basis of data to be encoded/decoded. The subject of the learning of the encoding/decoding models may be the same as the subject using the data to be decoded after decoding. For example, a subject of learning of the encoding/decoding models of the CSI may be the DU, and a subject of learning of the encoding/decoding models of a positioning signal reception result may be the CU and/or the LMF. Consequently, for example, it is possible to avoid complexity regarding learning of the encoding/decoding models.

The CU may determine to start and/or stop encoding/decoding. The CU may determine switching of phases of the encoding/decoding. The CU may instruct the UE to stop the encoding. The instruction may be an instruction to perform switching of phases of the encoding/decoding. Signaling or information similar to the encoding start instruction may be used for the instruction. The instruction may include information for identifying start or stop of the encoding/decoding. The information for identifying start or stop of the encoding/decoding may be provided for each type of data to be encoded/decoded. The UE may stop or start the encoding as triggered by the instruction.

The instruction from the CU to the UE may be given via the DU. Signaling or information similar to the encoding start instruction via the DU may be used for an encoding stop instruction via the DU. The instruction may include information for identifying start/stop of the encoding/decoding. The information for identifying start or stop of the encoding/decoding may be provided for each type of data to be encoded/decoded.

The CU may instruct the DU to stop the decoding. The instruction may be an instruction to perform switching of phases of the encoding/decoding. Signaling or information similar to a decoding start instruction from the CU to the DU may be used for the instruction. The instruction may include information for identifying start or stop of the encoding/decoding. The information for identifying start or stop of the encoding/decoding may be provided for each type of data to be encoded/decoded. The DU may stop or start the decoding as triggered by the instruction.

The instruction from the CU to the DU may be included in the encoding stop instruction from the CU to the UE. For example, the instruction may be included in the encoding stop instruction directed to the UE which the CU notifies the DU of. The DU may stop the decoding as triggered by the encoding stop instruction which the CU notifies the UE via the DU of. Consequently, for example, it is possible to reduce the amount of signaling in the communication system.

As another example, the DU may determine to start and/or stop the encoding/decoding. The DU may notify the UE of start and/or stop of encoding. MAC signaling or L1/L2 signaling may be used for the notification.

The DU may determine to perform learning and/or relearning of the encoding/decoding models. The DU may make a request to the CU for the learning and/or the relearning of the encoding/decoding models. As another example, the CU may make the request. The CU may notify the DU of the request. As another example, the UE may make the request. The UE may notify the DU of the request or may notify the CU of the request.

The DU may not make a request to the CU for the learning and/or the relearning of the encoding/decoding models. The DU may instruct the UE to stop encoding or may make a request to the UE for the learning data. The instruction and/or the request from the DU to the UE may be made as triggered by the determination of the learning and/or the relearning of the encoding/decoding models by the DU. Consequently, for example, it is possible to reduce the amount of processing of the CU, and to promptly execute the learning and/or the relearning by the DU.

Learning and/or relearning may be periodically performed as a trigger of a request for learning and/or relearning of the encoding/decoding models, or learning and/or relearning may be performed as triggered by a sudden change in a channel state. A period for performing learning and/or relearning, and/or information (e.g., threshold) for determining a sudden change in the channel state may be determined in a standard, or may be determined by the CU and the CU may notify the UE and/or the DU thereof. For example, the CU may notify the UE of the threshold.

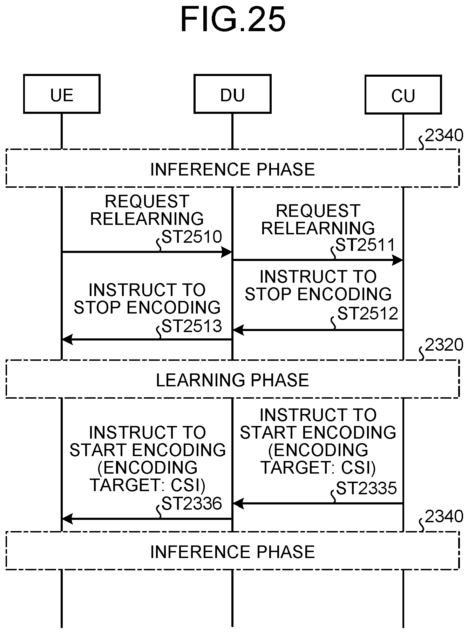

FIG. 25 is a sequence diagram illustrating an example of switching of the operation phases of the encoding/decoding models of the CSI. FIG. 25 illustrates an example in which the operation phase of the encoding/decoding models is switched in the order of the inference phase, the learning phase, and the inference phase. In FIG. 25, processes similar to those in FIG. 23 are denoted by the same numbers as those therein, and a common description will be omitted.

In procedure 2340 illustrated in FIG. 25, the inference phase of the encoding/decoding models is performed. An operation in the inference phase is similar to the operation in the inference phase illustrated in FIG. 23.

Suppose that relearning becomes required during execution of procedure 2340 in the example illustrated in FIG. 25. That is, suppose that a defined relearning condition is satisfied. In that case, in steps ST2510 and ST2511, the UE makes a request to the CU for relearning. RRC signaling, MAC signaling, or L1/L2 signaling may be used for the request. Step ST2510 indicates signaling from the UE to the DU, and step ST2511 indicates signaling from the DU to the CU. In step ST2511, F1 signaling may be used.

In steps ST2512 and ST2513 illustrated in FIG. 25, the CU instructs the UE to stop the encoding. RRC signaling, MAC signaling, or L1/L2 signaling may be used for the instruction. Step ST2512 indicates signaling from the CU to the DU, and step ST2513 indicates signaling from the DU to the UE. In step ST2512, F1 signaling may be used.

In procedure 2320 illustrated in FIG. 25, the learning phase of the encoding/decoding models is performed. An operation in the learning phase is similar to the operation in the learning phase illustrated in FIG. 23.

Steps ST2335 and ST2336 illustrated in FIG. 25 are similar to those in FIG. 23.

In procedure 2340 to be executed subsequent to step ST2336 illustrated in FIG. 25, the inference phase of the encoding/decoding models is performed. An operation in the inference phase is similar to the operation in the inference phase illustrated in FIG. 23.

The encoding/decoding models may be provided to be shared between all DUs under the CU and UEs thereunder. Consequently, for example, it is possible to reduce the amount of processing of the CU, and to reduce memory usage of the CU.

As another example, the encoding/decoding models may be provided for each DU. Consequently, for example, an optimal learning result is obtained on the basis of the channel state of each DU or the like, and as a result, it is possible to reduce the size of signaling to perform a notification from the UE to the DUs and/or the CU.

As another example, the encoding/decoding models may be provided for each DU group. Consequently, for example, an optimal learning result is obtained on the basis of the channel state of each DU group or the like, and as a result, it is possible to reduce the size of signaling to perform a notification from the UE to the DUs and/or the CU.

The encoding/decoding models may be provided to be shared between different UEs under the DUs. Consequently, for example, it is possible to reduce the amount of processing of the CU and/or the DUs, and to reduce memory usage of the CU and/or the DUs.

As another example, the encoding/decoding models may be provided for each UE under the DUs, or may be provided to be shared between a plurality of UEs. Consequently, for example, an optimal learning result is obtained on the basis of channel states between the DUs and the UEs or the like, and as a result, it is possible to reduce the size of signaling to perform a notification from the UEs to the DUs and/or the CU.

The learning of the encoding/decoding models may be performed simultaneously for all DUs and all UEs under the DUs. For example, the CU may instruct the UEs under all DUs to stop the encoding as triggered by a relearning request from a certain UE thereunder. The UEs may transmit the learning data to the DUs or the CU as triggered by the instruction. The DUs and/or the CU may relearn the encoding/decoding models by using the learning data. The CU and/or the DUs may perform a notification or broadcast of information about the encoding model after the relearning to the UEs thereunder. The UEs thereunder may each update the encoding model by using the notification. The CU and/or the DUs may instruct the UEs thereunder to start encoding. The UEs may each resume the encoding of data to be encoded as triggered by the instruction. Consequently, for example, it is possible to avoid complexity in the communication system.

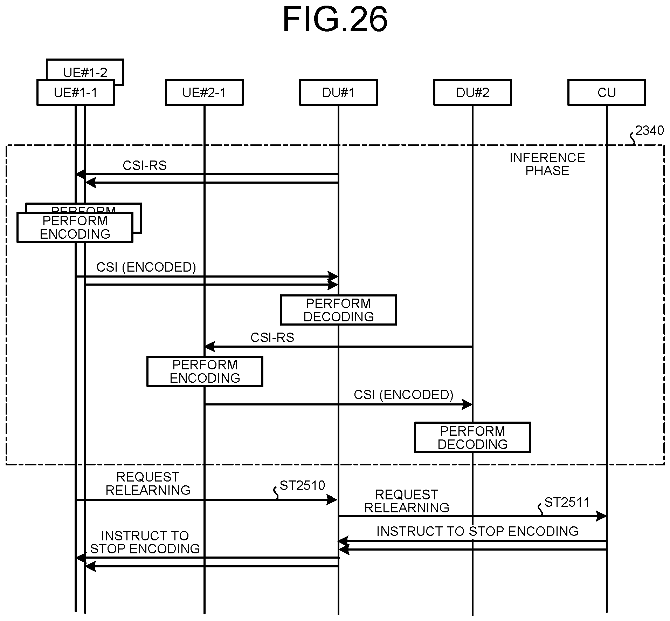

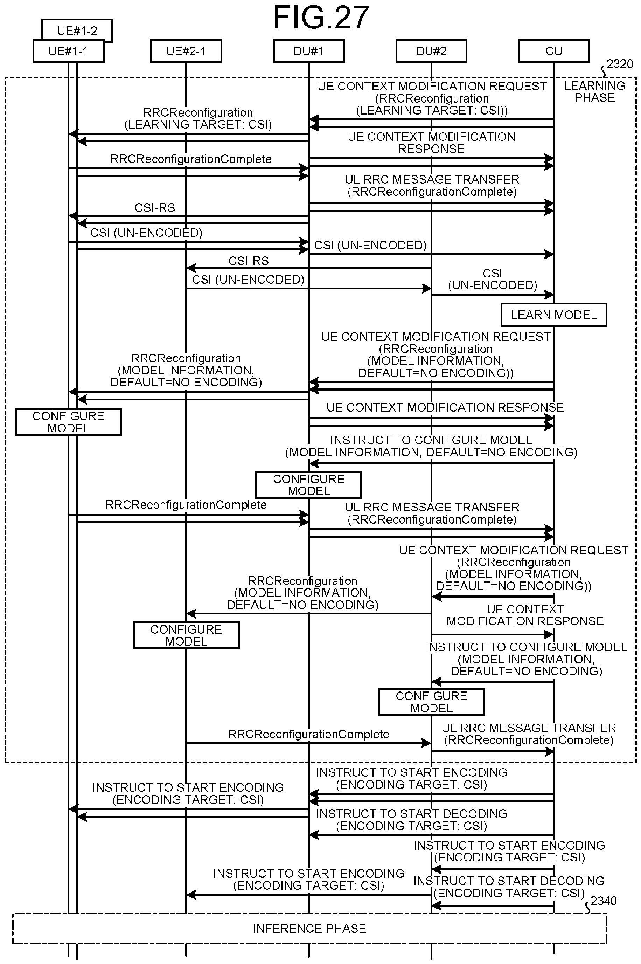

FIGS. 26 and 27 are each a diagram of a sequence illustrating an example of a relearning operation of encoding/decoding models of CSI in DUs and UEs under a CU. FIG. 26 illustrates a first half of the sequence, and FIG. 27 illustrates a second half of the sequence. The examples in FIGS. 26 and 27 each illustrate a case where the CU performs learning. The inference phase 2340 and the learning phase 2320 illustrated in FIGS. 26 and 27 are similar to the inference phase 2340 and the learning phase 2320 illustrated in FIG. 23. In FIGS. 26 and 27, the learning phase 2320 is started as triggered by steps ST2510 and ST2511 in which a relearning request is transmitted from UE #1-1 to the CU, and relearning is performed among DU #1, UE #1-1 connected to DU #1, UE #1-2, DU #2, and UE #2-1 connected to DU #2.

The learning of the encoding/decoding models may be performed simultaneously for some DUs. The above may be performed simultaneously for all UEs under the DUs, or may be performed simultaneously for some UEs. For example, the CU may instruct the DUs and/or the UEs under the DUs to stop the encoding as triggered by a relearning request from a certain UE under the DUs. The UEs may transmit the learning data to the DUs or the CU as triggered by the instruction. The DUs and/or the CU may relearn the encoding/decoding models by using the data. Other DUs and/or UEs thereunder may continue the encoding/decoding. The CU and/or the DUs may perform a notification or broadcast of information about the encoding model after the relearning to the UEs thereunder. The UEs thereunder may each update the encoding model by using the notification. The CU and/or the DUs may instruct the UEs thereunder to start encoding. The UEs may each resume the encoding of data to be encoded as triggered by the instruction. Consequently, for example, it is possible to prevent a decrease in communication efficiency of the communication system.

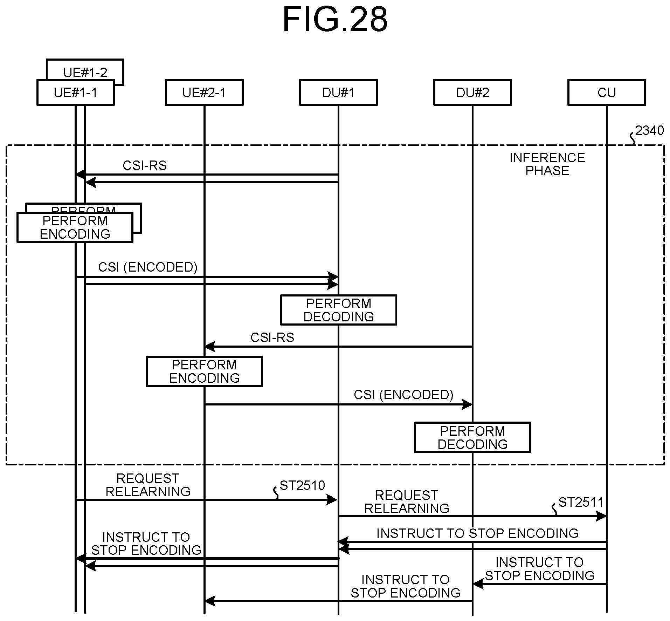

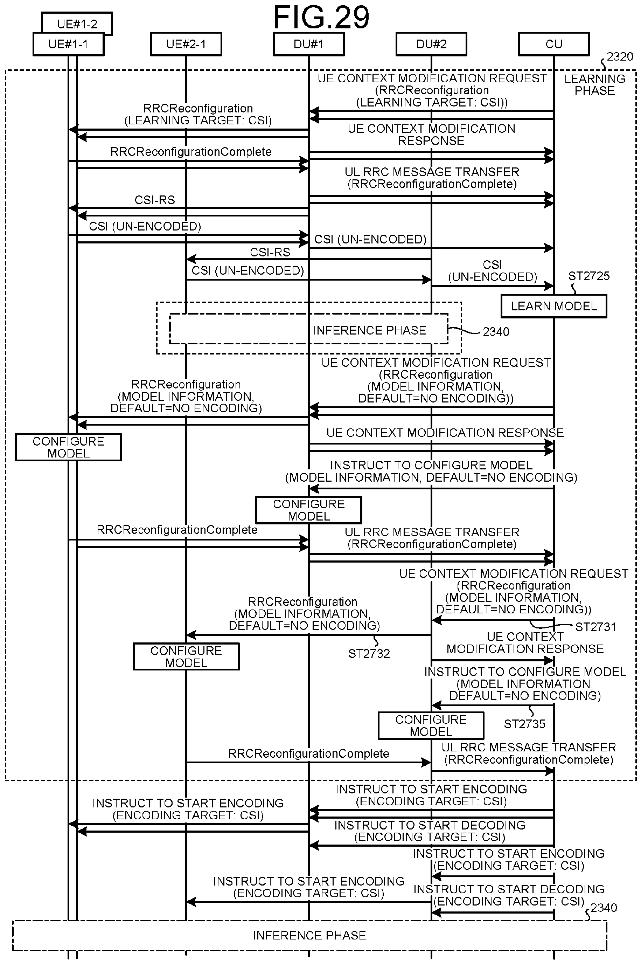

FIGS. 28 and 29 are each a diagram of a sequence illustrating another example of the relearning operation of the encoding/decoding models of the CSI in the DUs and the UEs under the CU. FIG. 28 illustrates a first half of the sequence, and FIG. 29 illustrates a second half of the sequence. The examples in FIGS. 28 and 29 each illustrate a case where the CU performs learning. The inference phase 2340 and the learning phase 2320 illustrated in FIGS. 28 and 29 are similar to the inference phase 2340 and the learning phase 2320 illustrated in FIG. 23. In FIGS. 28 and 29, the learning phase 2320 is started as triggered by steps ST2510 and ST2511 in which a relearning request is transmitted from UE #1-1 to the CU, and relearning is performed among DU #1, UE #1-1 connected to DU #1, and UE #1-2. DU #2 and UE #2-1 connected to DU #2 continue the inference phase 2340. UE #2-1 may update the configuration of the encoding model as triggered by steps ST2731 and ST2732. DU #2 may update the configuration of the decoding model as triggered by step ST2735. The updated encoding/decoding models may be the encoding/decoding models learned by the CU in step ST2725.

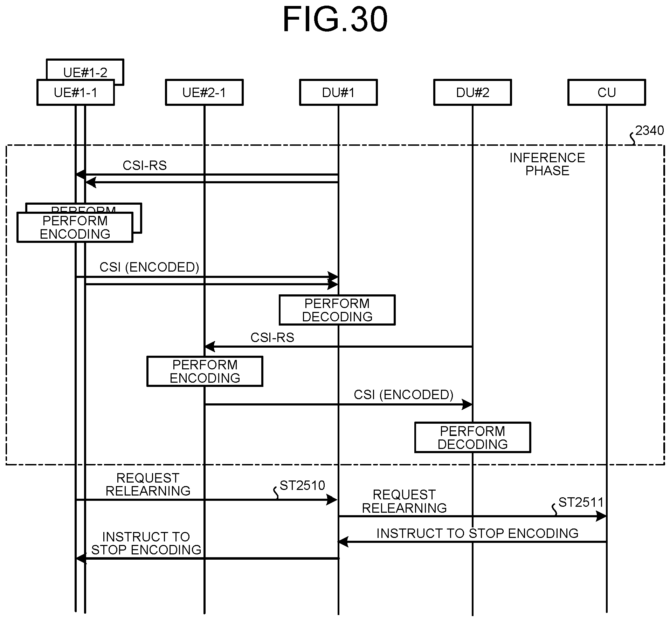

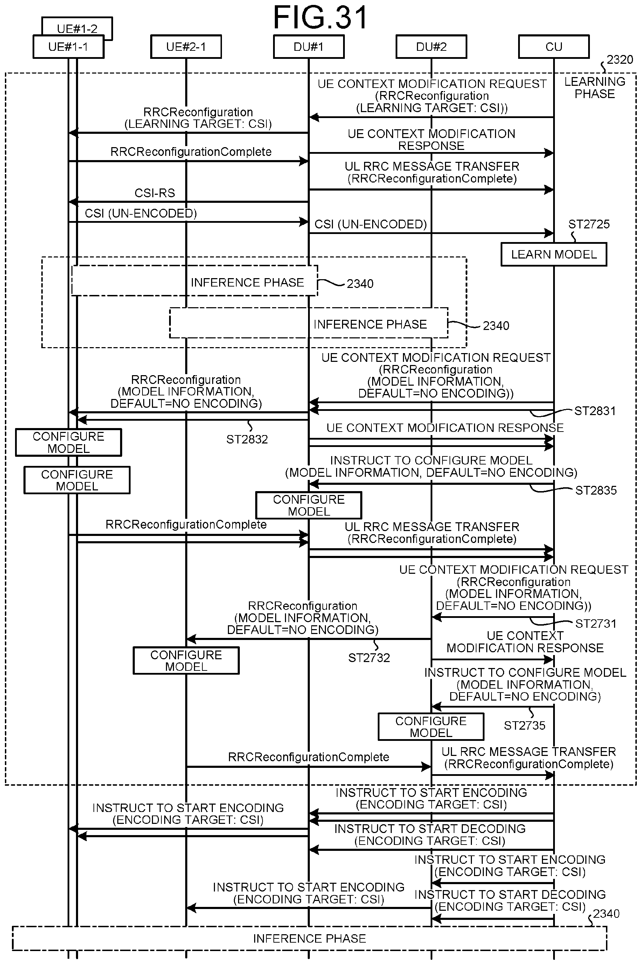

FIGS. 30 and 31 are each a diagram of a sequence illustrating another example of the relearning operation of the encoding/decoding models of the CSI in the DUs and the UEs under the CU. FIG. 30 illustrates a first half of the sequence, and FIG. 31 illustrates a second half of the sequence. The examples in FIGS. 30 and 31 each illustrate a case where the CU performs learning. The inference phase 2340 and the learning phase 2320 illustrated in FIGS. 30 and 31 are similar to the inference phase 2340 and the learning phase 2320 illustrated in FIG. 23. In FIGS. 30 and 31, the learning phase 2320 is started as triggered by steps ST2510 and ST2511 in which a relearning request is transmitted from UE #1-1 to the CU, and relearning is performed among DU #1 and UE #1-1 connected to DU #1. The inference phase 2340 is continued between DU #1 and UE #1-2 connected to DU #1 and between DU #2 and UE #2-1 connected to DU #2. DU #1 may hold the encoding/decoding models to be used between UE #1-2 and DU #1. UE #1-2 may update the configuration of the encoding model as triggered by steps ST2831 and ST2832. UE #2-1 may update the configuration of the encoding model as triggered by steps ST2731 and ST2732. DU #1 may update the decoding model to be used between UE #1-2 and DU #1 as triggered by step ST2835. DU #2 may update the configuration of the decoding model as triggered by step ST2735. The updated encoding/decoding models may be the encoding/decoding models learned by the CU in step ST2725.

Resources (e.g., frequency and/or time resources) for transmitting encoded information may be different from resources for transmitting un-encoded information. For example, a channel and/or a format for transmitting the encoded information may be different from a channel and/or a format for transmitting the un-encoded information. For example, a channel and/or a format for transmitting encoded CSI may be different from a channel for transmitting un-encoded CSI. The channel and/or the format for transmitting encoded CSI may be determined for each type of CSI. For example, channels and formats used for transmission of encoded CSI type 1 (CSI Type I), CSI type 2 (CSI Type II), and CSI type 2 for release 16 of 3GPP may be each determined. The channels and formats for transmitting encoded CSI type 1 (CSI Type I), CSI type 2 (CSI Type II), and CSI type 2 for release 16 of 3GPP may be each determined, for example, as PUCCH format 1, PUSCH, or PUCCH format 3. Consequently, for example, it is possible to improve the efficiency of the communication system.

The CU may determine resources for transmitting the encoded information. For example, the channel and/or the format for transmitting the encoded information may be determined by the CU. The CU may determine the channel and/or the format by using information on the learned encoding/decoding models. The CU may notify the DUs and/or the UEs of information about the channel and/or the format thus determined. Consequently, for example, it is possible to improve the efficiency of the communication system.

The CU may notify the DUs of information about encoding/decoding models used by a surrounding DU. The encoding/decoding models used by the surrounding DU may be configured as encoding/decoding models in the DUs. Consequently, for example, it is possible to avoid complexity regarding learning of the encoding/decoding models.

An interface between DUs may be provided. The notification of the information about the encoding/decoding models may be performed directly between the DUs. For the notification, the interface between DUs may be used. A request for the information about the encoding/decoding models may be made between the DUs. For the request, the interface between DUs may be used. The notification of the information between the DUs may be performed as triggered by the request. Consequently, for example, it is possible to reduce the amount of processing of the CU, and to reduce the amount of signaling in an F1 interface.

As another example, the DUs may determine resources for transmitting the encoded information. For example, the channel and/or the format for transmitting the encoded information may be determined by the DUs. The DUs may determine the channel and/or the format by using information on the learned encoding/decoding models. The DUs may notify the CU of information about the channel and/or the format thus determined. The CU may notify the UEs of the information. Consequently, for example, it is possible to reduce the amount of processing of the CU.

As another example, the DUs may notify the UEs of the information. MAC signaling or L1/L2 signaling may be used for the notification. Consequently, for example, it is possible to further reduce the amount of processing of the CU.

According to the first embodiment, encoding/decoding processes between the base station having a CU/DU split configuration and the UEs can be performed, and as a result, it is possible to reduce the size of signaling between the UEs and the CU and/or the DUs.

### Second Embodiment.

Mobility of a UE having encoding/decoding models may be performed. The mobility may be, for example, handover. The mobility may be mobility to another base station, or may be mobility to a different DU in the same CU, for example, handover to a different DU in the same CU (hereinafter, sometimes referred to as intra-CU inter-DU handover).

However, encoding/decoding models after handover in a case of performing the intra-CU inter-DU handover are not disclosed. Therefore, the UE cannot use the encoding/decoding models after the intra-CU inter-DU handover, and as a result, there arises a problem that communication efficiency is reduced.

The second embodiment discloses a method for solving the above problem.

In order to solve the above problem, in a communication system according to the second embodiment, the encoding/decoding models used in a source DU and a UE are continuously used in a destination DU (target DU) and the UE.

The CU notifies the destination DU of information about the encoding/decoding models used between the source DU and the UE. The notification may include the information about the above (1) to (12). The destination DU configures the encoding/decoding models by using the notification.

For the notification from the CU to the destination DU, for example, an F1 interface may be used. UE CONTEXT SETUP REQUEST may be used. As another example, new F1 signaling may be provided. The new F1 signaling may be used for the notification from the CU to the destination DU.

The CU may inquire of the source DU as to the information about the encoding/decoding models used between the UE and the source DU. The source DU may notify the CU of the information. The notification may include the information about the above (1) to (12).

An F1 interface may be used for the inquiry from the CU to the source DU and/or the notification from the source DU to the CU. For example, UE CONTEXT MODIFICATION REQUEST may be used for the inquiry, and UE CONTEXT MODIFICATION RESPONSE may be used for the notification. As another example, new F1 signaling may be provided. The new F1 signaling may be used for the inquiry and/or the response between the CU and the source DU.

The CU instructs the UE to perform handover to the destination DU which is another DU different from the DU being connected. The instruction may include information about the encoding/decoding models after the handover. Information indicating that the encoding/decoding models are not changed may be included.

The destination DU may notify the UE of the information about the encoding/decoding models after the handover. The notification may be performed via the CU and the source DU. The encoding/decoding models which the source DU has notified the destination DU of may be used to configure the encoding/decoding models in the destination DU. The notification of the encoding/decoding models from the source DU to the destination DU may be performed via the CU.

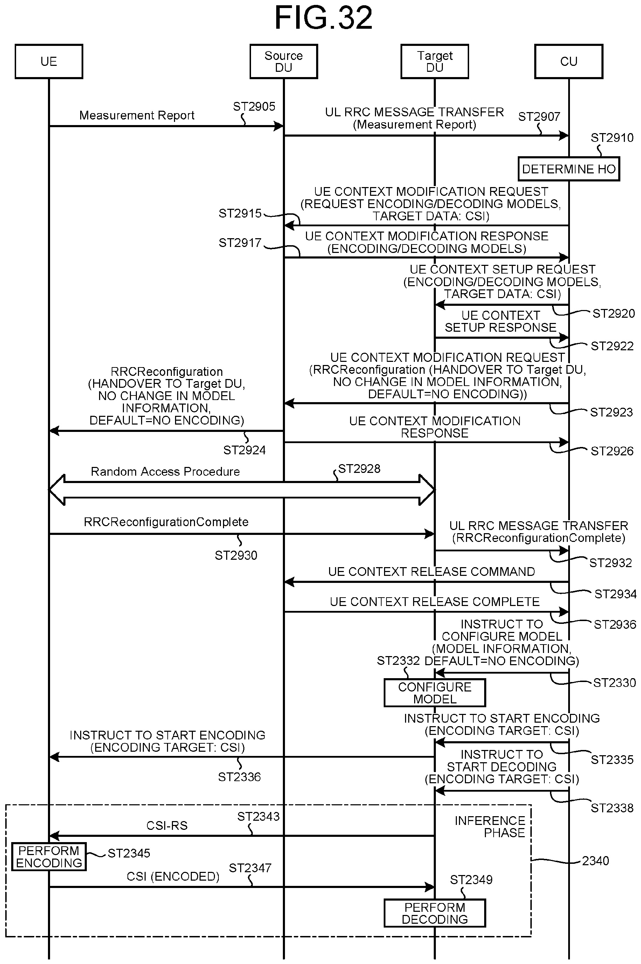

FIG. 32 is a sequence diagram illustrating an example of a configuration of encoding/decoding models in intra-CU inter-DU handover. FIG. 32 illustrates an example in which the destination DU (target DU) uses the encoding/decoding models used by the UE and the source DU as they are. FIG. 32 illustrates an example of a case where data to be encoded/decoded is CSI. In FIG. 32, processes similar to those in FIG. 23 are denoted by the same numbers as those therein, and a common description will be omitted.

In steps ST2905 and ST2907 illustrated in FIG. 32, the UE makes a measurement report to the CU. The report is made via the source DU. RRC signaling for measurement report may be used for the instruction. Step ST2905 indicates signaling from the UE to the source DU, and step ST2907 indicates signaling from the source DU to the CU. In step ST2907, signaling of UL RRC MESSAGE TRANSFER may be used. The signaling of step ST2907 may include the signaling of step ST2905. Information about a measurement result of a signal from the target DU may be included in the signalings of steps ST2905 and ST2907. In step ST2910, the CU determines handover of the UE. In the example illustrated in FIG. 32, the UE performs handover from the source DU to the target DU.

In step ST2915 illustrated in FIG. 32, the CU makes a request to the source DU for the encoding/decoding models. For example, an F1 interface may be used for the request. New F1 signaling may be provided. For the request from the CU to the source DU, the new F1 signaling may be used, existing F1 signaling, for example, UE CONTEXT MODIFICATION REQUEST may be used, or another existing signaling may be used. The request may include information about data to be encoded/decoded. The example illustrated in FIG. 32 includes information indicating that the data to be encoded/decoded is CSI.

In step ST2917 illustrated in FIG. 32, the source DU notifies the CU of information about the encoding/decoding models. For example, an F1 interface may be used for the notification. New F1 signaling may be provided. For the notification from the source DU to the CU, the new F1 signaling may be used, existing F1 signaling, for example, UE CONTEXT MODIFICATION RESPONSE may be used, or another existing signaling may be used. The notification may include the information about the above (1) to (12). The CU acquires the information about the encoding/decoding models by using step ST2917.

In step ST2920 illustrated in FIG. 32, the CU makes a request to the target DU for UE context setup. F1 signaling, for example, UE CONTEXT SETUP REQUEST may be used for the request. The request may include the information about the encoding/decoding models. The information may include, for example, the information about the above (1) to (12). A notification of the information may be performed from the source DU to the target DU via the CU, for example. With the use of the information, the target DU acquires the information about the encoding/decoding models to be used between the UE and the target DU. In step ST2922, the target DU makes a response to the CU with respect to the UE CONTEXT SETUP REQUEST.

In steps ST2923 and ST2924 illustrated in FIG. 32, the CU instructs the UE to perform handover to the target DU. The instruction is given via the source DU. Signaling of RRCReconfiguration may be used for the instruction. Step ST2923 indicates signaling from the CU to the source DU, and step ST2924 indicates signaling from the source DU to the UE. In step ST2923, signaling of UE CONTEXT MODIFICATION REQUEST may be used. The signaling of step ST2923 may include the signaling of step ST2924. The information about the encoding/decoding models may be included in the signalings of steps ST2923 and ST2924. In the example illustrated in FIG. 32, information indicating that there is no change in the encoding/decoding models is included. In addition, information indicating that, regarding whether there is default encoding after the handover, there is no encoding is included. The UE performs handover from the source DU to the target DU as triggered by the instruction. In step ST2926, the source DU transmits, to the CU, a response to step ST2923. For the transmission of the response, for example, signaling of UE CONTEXT MODIFICATION RESPONSE may be used.

In step ST2928 illustrated in FIG. 32, a random access procedure is performed between the UE and the target DU. In steps ST2930 and ST2932, the UE notifies the CU of completion of the handover. Signaling of RRCReconfigurationComplete may be used for the instruction. Step ST2930 indicates signaling from the UE to the target DU, and step ST2932 indicates signaling from the target DU to the CU. In step ST2932, signaling of UL RRC MESSAGE TRANSFER may be used. The signaling of step ST2932 may include the signaling of step ST2930.

In step ST2934 illustrated in FIG. 32, the CU makes a request to the source DU for release of UE context. The source DU releases the UE context as triggered by the request. In step ST2936, the source DU notifies the CU of completion of the release of the UE context.

In steps ST2330 to ST2349 and procedure 2340 illustrated in FIG. 32, operations similar to those in FIG. 23 are performed among the CU, the target DU, and the UE.

Another solution will be disclosed. The UE uses the encoding/decoding models used in the destination DU.

The CU notifies the UE of information about the encoding/decoding models used in the destination DU. The notification may include the information about the above (1) to (12). The UE configures the encoding/decoding models by using the information included in the notification.

For the notification from the CU to the UE, RRC signaling, for example, RRCReconfiguration may be used.

The CU may inquire of the destination DU as to the information about the encoding/decoding models used by the DU. The destination DU may notify the CU of the information. The CU may notify the UE via the source DU of the information.

For the inquiry from the CU to the destination DU, for example, an F1 interface may be used. UE CONTEXT SETUP REQUEST may be used. As another example, new F1 signaling may be provided. The new F1 signaling may be used for the inquiry from the CU to the destination DU.

For the notification from the destination DU to the CU, for example, an F1 interface may be used. UE CONTEXT SETUP RESPONSE may be used. As another example, new F1 signaling may be provided. The new F1 signaling may be used for the notification from the destination DU to the CU.

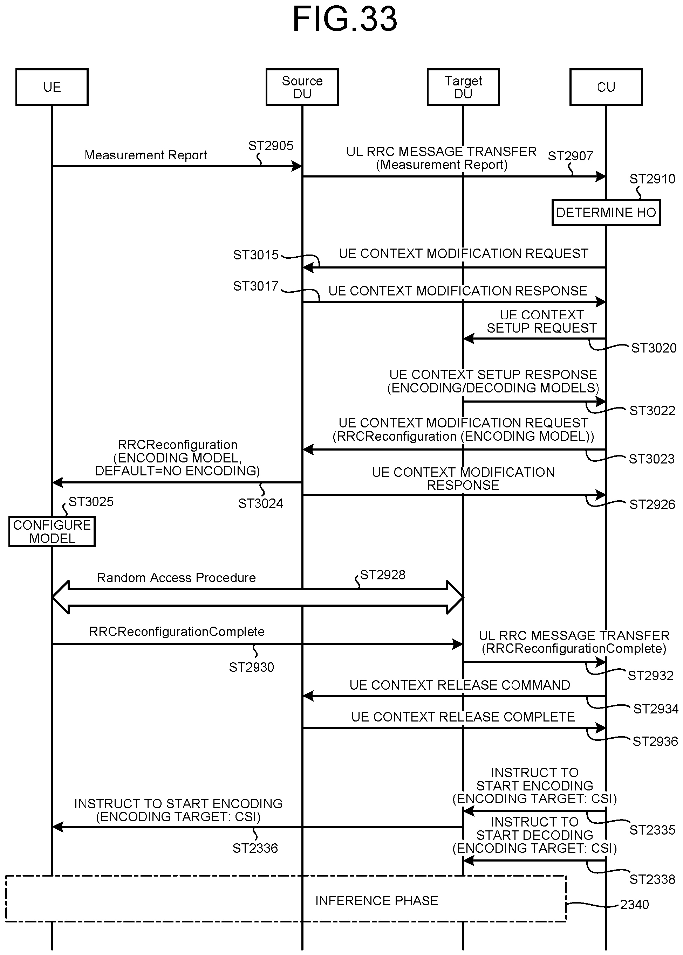

FIG. 33 is a sequence diagram illustrating an example of the configuration of the encoding/decoding models in the intra-CU inter-DU handover. FIG. 33 illustrates an example in which the UE uses the encoding/decoding models used by the destination DU (target DU) as they are. FIG. 33 illustrates an example of a case where data to be encoded/decoded is CSI. In FIG. 33, processes similar to those in FIGS. 23 and 32 are denoted by the same numbers as those therein, and a common description will be omitted.

Steps ST2905, ST2907, and ST2910 illustrated in FIG. 33 are similar to those in FIG. 32.

In step ST3015 illustrated in FIG. 33, the CU makes a request to the source DU for UE context modification. In step ST3017, the source DU makes a response to the CU with respect to the UE CONTEXT MODIFICATION REQUEST.

In step ST3020 illustrated in FIG. 33, the CU makes a request to the target DU for UE context setup. F1 signaling, for example, UE CONTEXT SETUP REQUEST may be used for the request. The request may include a request for the information about the encoding/decoding models. The request may include information about data as a target of the encoding/decoding models.

In step ST3022 illustrated in FIG. 33, the target DU makes a response to the CU with respect to the UE CONTEXT SETUP REQUEST. F1 signaling, for example, UE CONTEXT SETUP RESPONSE may be used for the response. The response may include the information about the encoding/decoding models. The information may include, for example, the information about the above (1) to (12).

In steps ST3023 and ST3024 illustrated in FIG. 33, the CU instructs the UE to perform handover to the target DU. The instruction may be given by using the same signalings as those in steps ST2923 and ST2924 illustrated in FIG. 32. The instruction may include the information about the encoding model. The information may include, for example, the information about the above (1) to (12). The information may include information indicating that, regarding whether there is default encoding after the handover, there is no encoding. In step ST3025, the UE configures the encoding model.

Steps ST2926 to ST2936 illustrated in FIG. 33 are similar to those in FIG. 32.

In steps ST2335 to ST2338 and procedure 2340 illustrated in FIG. 33, operations similar to those in FIG. 23 are performed among the CU, the target DU, and the UE.

Another solution will be disclosed. The encoding/decoding models are learned between the UE and the destination DU.

The CU instructs the UE to relearn the encoding/decoding models. The instruction may include information about the learning data. The instruction may be included in a handover instruction from the CU to the UE. The handover instruction may be included, for example, in signaling of RRCReconfiguration.

The CU may instruct the UE to stop the encoding. The instruction may be given by the source DU to the UE. The UE may stop the encoding as triggered by the instruction.

As another example, the UE may stop the encoding as triggered by the relearning instruction. The DU may stop the decoding as triggered by the relearning instruction from the CU.

The CU instructs the destination DU to relearn the encoding/decoding models between the UE and the destination DU.

For the instruction from the CU to the destination DU, for example, an F1 interface may be used. For example, UE CONTEXT SETUP REQUEST may be used. As another example, new F1 signaling may be provided. The new F1 signaling may be used for the instruction from the CU to the destination DU.

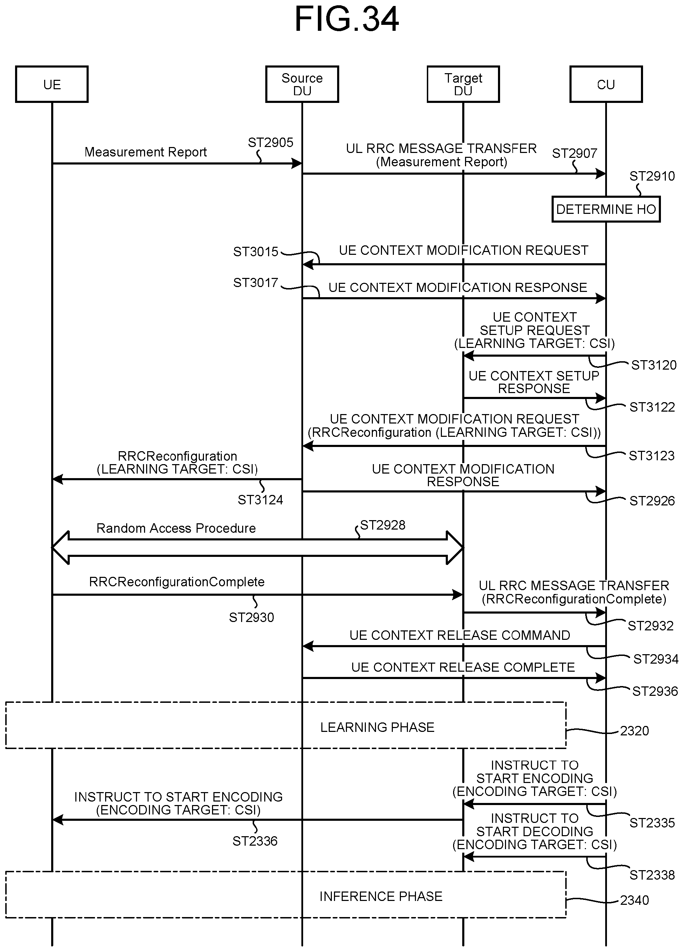

FIG. 34 is a sequence diagram illustrating an example of the configuration of the encoding/decoding models in the intra-CU inter-DU handover. FIG. 34 illustrates an example in which the encoding/decoding models are learned between the UE and the destination DU (target DU). FIG. 34 illustrates an example of a case where data to be encoded/decoded is CSI. In FIG. 34, processes similar to those in FIGS. 23, 32, and 33 are denoted by the same numbers as those therein, and a common description will be omitted.

Steps ST2905 to ST2910 illustrated in FIG. 34 are similar to those in FIG. 32.

Steps ST3015 and ST3017 illustrated in FIG. 34 are similar to those in FIG. 33.

In step ST3120 illustrated in FIG. 34, the CU makes a request to the target DU for UE context setup. F1 signaling, for example, UE CONTEXT SETUP REQUEST may be used for the request. The request may include instruction to learn the encoding/decoding models between the UE and the target DU. The request may include information about the learning data. In the example illustrated in FIG. 34, it is assumed that the learning data is CSI.

In step ST3122 illustrated in FIG. 34, the target DU makes a response to the CU with respect to the UE CONTEXT SETUP REQUEST. F1 signaling, for example, UE CONTEXT SETUP RESPONSE may be included in the response.

In steps ST3123 and ST3124 illustrated in FIG. 33, the CU instructs the UE to perform handover to the target DU. The instruction may be given by using the same signalings as those in steps ST2923 and ST2924 illustrated in FIG. 32. The instruction may include information about the instruction to learn the encoding/decoding models between the target DU and the UE, for example, an instruction to perform a notification of the learning data. The information may include, for example, information about the learning data. In the example illustrated in FIG. 34, it is assumed that the learning data is CSI.

Steps ST2926 to ST2936 illustrated in FIG. 34 are similar to those in FIG. 32.

Procedure 2320, steps ST2335 to ST2338, and procedure 2340 illustrated in FIG. 34 are similar to those in FIG. 23.

The CU may determine the encoding/decoding models to be used by the UE between the destination DU and the UE. For example, with the use of the measurement report from the UE, the CU may determine to use the encoding/decoding models between the source DU and the CU, may determine the encoding/decoding models to be used by the destination DU, or may determine to perform relearning. Consequently, for example, it is possible to select encoding/decoding models capable of improving communication efficiency on the basis of a communication environment between the UE and each DU while enabling the amount of processing of the UE and/or the destination DU to be reduced.

The CU may hold information about the encoding/decoding models used by DUs thereunder. The CU may make a request to the DUs thereunder for information about the encoding/decoding models. The DUs thereunder may notify the CU of the information. The request from the CU to the DUs thereunder may be made as triggered by the measurement report from the UE, or may be made as not triggered by the measurement report. Consequently, for example, the CU can promptly execute the handover of the UE. The CU may determine a DU as a handover destination (destination DU) of the UE, for example, by using the information. For example, the CU may determine, as the handover destination DU, a DU that has the same encoding/decoding models as the encoding/decoding models used by the UE between the source DU and the UE.

During the handover of the UE, encoding/decoding may not be performed. For example, the UE may not perform encoding/decoding as triggered by reception of the handover instruction from the CU, or may perform encoding/decoding or may be enabled to execute a process related to encoding/decoding as triggered by a notification to the CU of completion of the handover. Consequently, for example, it is possible to avoid complexity in the communication system.

In the handover of the UE, the encoding/decoding models may be released, the encoding/decoding may be stopped, or the inference phase may be stopped. Consequently, for example, it is possible to avoid complexity in the communication system.

The method disclosed in the second embodiment may be applied in intra-CU inter-DU mobility. For example, the UE may continue to use, between the DU after cell reselection and the UE, the encoding model before cell reselection. As another example, the UE may use an encoding model corresponding to the decoding model used by the DU after cell reselection. As another example, relearning of the encoding/decoding models may be performed between the UE and the DU after cell reselection. The UE may release the encoding model as triggered by transition to RRC_IDLE and/or RRC_INACTIVE. As another example, the UE may employ, as a reselected cell, a cell under the DU that uses the same encoding/decoding models, or may preferentially reselect the cell in a cell reselection operation. As another example, the encoding/decoding models to be used by the UE after the cell reselection may be determined by the CU, or may be determined by the DU, for example, the destination DU. Consequently, for example, it is possible to reduce the size of signaling in the cell reselection.

The interface between DUs disclosed in the first embodiment may be used. For example, the notification of the encoding/decoding models from the source DU to the target DU (destination DU) may be performed by using the interface between the DUs, or the notification of the encoding/decoding models from the target DU to the source DU may be performed by using the interface between the DUs. Consequently, for example, it is possible to reduce the amount of signaling in the F1 interface.

As another example, a handover request may be made from the source DU to the target DU. For the request, the interface between DUs may be used. The request may include the information about the encoding/decoding models. A response to the handover request may be transmitted from the target DU to the source DU. The response may be an acknowledgement or a reject response. For the response, the interface between DUs may be used. The response may include the information about the encoding/decoding models. Consequently, for example, it is possible to reduce the amount of processing of the CU.

According to the second embodiment, encoding/decoding processes can be performed also after intra-CU inter-DU handover, and as a result, it is possible to reduce the size of signaling between the UE and the CU and/or the DUs.

### First Modification of Second Embodiment.

The first modification discloses a method for handling encoding/decoding models in handover to a different DU under a different CU (hereinafter, sometimes referred to as inter-CU inter-DU handover).

In the inter-CU inter-DU handover, the encoding/decoding models used in the source DU and the UE may continue to be used in the destination DU and the UE. Consequently, for example, encoding/decoding between the UE and the destination DU can be promptly started, and as a result, the size of signaling between the UE and the destination DU can be reduced.

A source CU may notify a destination CU of information about the encoding/decoding models used by the UE. The notification may be included in Xn signaling, for example, signaling of HANDOVER REQUEST. With the use of the notification, the destination CU may configure, for the destination DU, the encoding/decoding models to be used between the destination DU and the UE that executes the handover and moves to under the destination DU.

As another solution, the UE may use the encoding/decoding models used in the destination DU.

In that case, the source CU may make a request to the destination CU for information about the encoding/decoding models used in the destination DU. The request may be included in Xn signaling, for example, signaling of HANDOVER REQUEST. The destination CU may notify the source CU of the information. For the notification, Xn signaling, for example, HANDOVER REQUEST ACKNOWLEDGE may be used. The information may include, for example, the information about the above (1) to (12). The source CU may notify the UE to be caused to execute the inter-CU inter-DU handover of the information. The information may be included in the handover instruction, for example.

As another solution, the destination CU may determine encoding/decoding models to be used by the UE after the inter-CU inter-DU handover.

In that case, the source CU may notify the destination CU of the information about the encoding/decoding models used by the UE. The notification may be included in Xn signaling, for example, signaling of HANDOVER REQUEST. With the use of the information, the destination CU may determine the encoding/decoding models to be used by the UE after the handover. Information about the encoding/decoding models to be used by the destination DU may be used for the determination.

The destination CU may notify the source CU of information about the encoding/decoding models to be used after the handover. The notification may be included in Xn signaling, for example, signaling of HANDOVER REQUEST ACKNOWLEDGE. The information may include, for example, the information about the above (1) to (12), or may be information indicating that the encoding/decoding models used by the UE before the handover are used as they are. The source CU may notify the UE of the information. The notification of the information may be included, for example, in signaling of the handover instruction. With the use of the information, the UE may configure encoding/decoding models after the handover.

The destination CU may notify the destination DU of information about the encoding/decoding models to be used after the handover. The notification may be performed by using F1 signaling. The destination CU may instruct the destination DU to configure the decoding model. The instruction may be given by using F1 signaling. The destination DU may configure the decoding model to be used between the UE and the destination DU by using the information.

As another solution, the source CU may determine the encoding/decoding models to be used by the UE after the inter-CU inter-DU handover.

In that case, the source CU may make a request to the destination CU for information about the encoding/decoding models to be used by the destination DU. The notification may be included in Xn signaling, for example, signaling of HANDOVER REQUEST. The destination CU may notify the source CU of the information. The notification may be included in Xn signaling, for example, signaling of HANDOVER REQUEST ACKNOWLEDGE. The information may include, for example, the information about the above (1) to (12). With the use of the information, the source CU may determine the encoding/decoding models after the handover. The encoding/decoding models between the UE and the source DU may be used for the determination.

The source CU may notify the UE of the information about the encoding/decoding models after the handover. The notification of the information may be included, for example, in signaling of the handover instruction. With the use of the information, the UE may configure the encoding/decoding models after the handover.

The source CU may notify the destination CU of the information. The notification may be performed by using F1 signaling. The destination CU may instruct the destination DU to configure the decoding model. The instruction may be given by using F1 signaling. The destination DU may configure the decoding model to be used between the UE and the destination DU by using the information.

During the handover of the UE, encoding/decoding may not be performed. For example, the UE may not perform encoding/decoding as triggered by reception of the handover instruction from the CU, or may perform encoding/decoding or may be enabled to execute a process related to encoding/decoding as triggered by a notification to the CU of completion of the handover. Consequently, for example, it is possible to avoid complexity in the communication system.

In the handover of the UE, the encoding/decoding models may be released, the encoding/decoding may be stopped, or the inference phase may be stopped. Consequently, for example, it is possible to avoid complexity in the communication system.

The method disclosed in the second embodiment may be applied in inter-CU inter-DU mobility. For example, the UE may continue to use, between the DU after cell reselection and the UE, the encoding model before cell reselection. As another example, the UE may use an encoding model corresponding to the decoding model used by the DU after cell reselection. As another example, relearning of the encoding/decoding models may be performed between the UE and the DU after cell reselection. The UE may release the encoding model as triggered by transition to RRC_IDLE and/or RRC_INACTIVE. As another example, the UE may employ, as a reselected cell, a cell under the DU that uses the same encoding/decoding models, or may preferentially reselect the cell in a cell reselection operation. As another example, the encoding/decoding models to be used by the UE after the cell reselection may be determined by the CU, for example, the destination CU, or may be determined by the DU, for example, the destination DU. Consequently, for example, it is possible to reduce the size of signaling in the cell reselection.

The operation of the UE in the intra-CU inter-DU mobility and the operation of the UE in the inter-CU inter-DU mobility may be different from each other. For example, the encoding model of the UE may be released in the inter-CU inter-DU mobility, or the CU may determine the encoding model of the UE in the intra-CU inter-DU mobility. Consequently, for example, it is possible to improve flexibility in the communication system.

According to the first modification of the second embodiment, encoding/decoding processes can be performed also after inter-CU inter-DU handover, and as a result, it is possible to reduce the size of signaling between the UE and the CUs and/or the DUs.

### Second Modification of Second Embodiment.

The second modification discloses a method for handling encoding/decoding models in DC to different DUs under the same CU (hereinafter, sometimes referred to as intra-CU DC). In the intra-CU DC, for example, communication between a base station and a UE may be performed by using a plurality of DUs. The plurality of DUs may each have an RLC bearer.

The same encoding/decoding models may be used between a master DU (M-DU) and a secondary DU (S-DU). For example, the S-DU may use the same encoding/decoding models as the M-DU. Consequently, for example, encoding/decoding between the UE and the S-DU can be promptly started, and as a result, the size of signaling between the UE and the S-DU can be reduced. The CU may notify the S-DU of information about the encoding/decoding models. The CU may make a request to the M-DU for the information about the encoding/decoding models used between the UE and the M-DU. The M-DU may notify the CU of the information.

The notification of the information about the encoding/decoding models from the CU to the S-DU may be performed by using F1 signaling, for example, UE CONTEXT SETUP REQUEST.

As another example, the M-DU may use the same encoding/decoding models as the S-DU, for example. The CU may make a request to the S-DU for the information about the encoding/decoding models used between the UE and the S-DU. The CU may notify the M-DU of the information about the encoding/decoding models used between the S-DU and the UE.

As another example, learning and/or relearning of the encoding/decoding models between the UE and each of the M-DU and the S-DU may be performed. The learning may be performed by the CU.

The CU instructs the UE to start connection to the S-DU. For example, signaling of RRCReconfiguration may be used for the instruction. The notification from the CU to the UE may include a request for learning data of the encoding/decoding models. The UE may notify the CU of CSI between each of the M-DU and the S-DU and the UE. For example, RRC signaling may be used for the notification. The RRC signaling may be, for example, a measurement report, or new RRC signaling may be provided and used. The CU may learn the encoding/decoding models by using the learning data.

Information about a DU pertaining to the learning data may be included in the request for the learning data from the CU to the UE and/or the DUs. The DU may be, for example, a DU that transmits a CSI-RS in a case where the CSI is the learning data, or may be a DU that transmits a positioning signal in a case where the position information and/or the positioning signal measurement result is the learning data. The DU may be the M-DU or the S-DU. The UE may recognize the DU pertaining to the learning data by using the information. Consequently, for example, the UE can promptly recognize the DU pertaining to the learning data.

The CU may notify the M-DU and/or the S-DU of the encoding/decoding models that have been learned. The CU may notify the UE of the models. For the notification from the CU, for example, the signaling disclosed in the first embodiment may be used. The M-DU, the S-DU and/or the UE may configure the encoding/decoding models by using the notification.

As another example of the DU pertaining to the learning data, a DU that transmits a request for the learning data may be the DU pertaining to the learning data. The CU may transmit the request to the UE via the DU pertaining to the learning data. The UE may recognize a DU that has transmitted the request as the DU pertaining to the learning data. Consequently, for example, it is possible to reduce the size of signaling pertaining to the request.

An encoding start/stop instruction may include information about a DU pertaining to data to be encoded. The DU may be, for example, a DU that transmits a CSI-RS in the case where the CSI is the learning data, or may be a DU that transmits a positioning signal in the case where the position information and/or the positioning signal measurement result is the learning data. The DU may be the M-DU or the S-DU. With the use of the information, the UE may recognize the DU pertaining to the data to be encoded. Consequently, for example, the UE can promptly recognize the DU pertaining to the learning data.

As another example of the DU pertaining to the data to be encoded, a DU that transmits the encoding start/stop instruction may be the DU pertaining to the data to be encoded. The CU may transmit the instruction to the UE via the DU pertaining to the data to be encoded. The UE may recognize the DU that has transmitted the instruction as the DU pertaining to the data to be encoded. Consequently, for example, it is possible to reduce the size of signaling pertaining to the instruction.

Another solution will be disclosed. The M-DU and the S-DU may use different encoding/decoding models. Existing encoding/decoding models of the S-DU may be used between the UE and the S-DU, or encoding/decoding models may be newly learned. Configurations among the UE, the M-DU, the S-DU, and the CU may be similar to those in the above method.

According to the second modification, encoding/decoding processes using the encoding/decoding models can be performed also in intra-CU DC, and as a result, it is possible to reduce the size of signaling between the UE and the M-DU and between the UE and the S-DU.

### Third Modification of Second Embodiment.

An encoding model different for each cell may be used. The encoding model different for each cell may be used, for example, in CA. Consequently, for example, encoding/decoding models based on the channel state in each cell can be learned, and as a result, overhead of communication between a base station and a UE can be reduced. The method disclosed in the first embodiment may be used for learning and/or configuring the encoding/decoding models.

As another example, a cell-common encoding model may be used. The cell-common encoding model may be used, for example, in CA. Consequently, for example, it is possible to reduce the memory usage of the UE. The method disclosed in the first embodiment may be used for learning and/or configuring the encoding/decoding models.

Information about a cell pertaining to the learning data may be included in the request for the learning data from the CU to the DUs and/or the UE. The cell may be, for example, a cell that transmits a CSI-RS in the case where the CSI is the learning data, or may be a cell that transmits a positioning signal in the case where the position information and/or the positioning signal measurement result is the learning data. The UE and/or the DUs may recognize the cell pertaining to the learning data by using the information. Consequently, for example, the UE can promptly recognize the cell pertaining to the learning data.

As another example of the cell pertaining to the learning data, a cell that transmits the request for the learning data may be the cell pertaining to the learning data. The CU may transmit the request to the UE via the cell pertaining to the learning data. The UE may recognize a cell that has transmitted the request as the cell pertaining to the learning data. Consequently, for example, it is possible to reduce the size of signaling pertaining to the request.

The encoding start/stop instruction may include information about a cell pertaining to data to be encoded. The cell may be, for example, a cell that transmits a CSI-RS in the case where the CSI is the learning data, or may be a cell that transmits a positioning signal in the case where the position information and/or the positioning signal measurement result is the learning data. With the use of the information, the DUs and/or the UE may recognize the DU pertaining to the data to be encoded. Consequently, for example, the DUs and/or the UE can promptly recognize the DU pertaining to the learning data.

As another example of the cell pertaining to the data to be encoded, a cell that transmits the encoding start/stop instruction may be the cell pertaining to the data to be encoded. The CU may transmit the instruction to the UE via the cell pertaining to the data to be encoded. The UE may recognize a cell that has transmitted the instruction as the cell pertaining to the data to be encoded. Consequently, for example, it is possible to reduce the size of signaling pertaining to the instruction.

An encoding model different for each BWP may be used. Consequently, for example, encoding/decoding models based on the channel state in each BWP can be learned, and as a result, overhead of communication between the base station and the UE can be reduced.

As another example, a BWP-common encoding model may be used. Consequently, for example, it is possible to avoid complexity in the communication system.

Information about a BWP pertaining to the learning data may be included in the request for the learning data from the CU to the DUs and/or the UE. The BWP may be, for example, a BWP that transmits a CSI-RS in the case where the CSI is the learning data, or may be a BWP that transmits a positioning signal in the case where the position information and/or the positioning signal measurement result is the learning data. The UE and/or the DUs may recognize the BWP pertaining to the learning data by using the information. Consequently, for example, the UE can promptly recognize the BWP pertaining to the learning data.

As another example of the BWP pertaining to the learning data, a BWP that transmits the request for the learning data may be the BWP pertaining to the learning data. The CU may transmit the request to the UE via the BWP pertaining to the learning data. The UE may recognize a BWP that has transmitted the request as the BWP pertaining to the learning data. Consequently, for example, it is possible to reduce the size of signaling pertaining to the request.

The encoding start/stop instruction may include information about a BWP pertaining to data to be encoded. The BWP may be, for example, a BWP that transmits a CSI-RS in the case where the CSI is the learning data, or may be a BWP that transmits a positioning signal in the case where the position information and/or the positioning signal measurement result is the learning data. With the use of the information, the DU and/or the UE may recognize the BWP pertaining to the data to be encoded. Consequently, for example, the DU and/or the UE can promptly recognize the BWP pertaining to the learning data.

As another example of the BWP pertaining to the data to be encoded, a BWP that transmits the encoding start/stop instruction may be the BWP pertaining to the data to be encoded. The CU may transmit the instruction to the UE via the BWP pertaining to the data to be encoded. The UE may recognize a BWP that has transmitted the instruction as the BWP pertaining to the data to be encoded. Consequently, for example, it is possible to reduce the size of signaling pertaining to the instruction.

In packet duplication, encoding/decoding models may be used. For example, encoding/decoding models used in communication with a base station, a DU, and/or a cell used in packet duplication may be used as they are. Consequently, for example, it is possible to avoid complexity in the communication system. As another example, common encoding/decoding models may be used in each of duplicated packets.

According to the third modification, encoding/decoding processes using the encoding/decoding models can be performed also in a case where communication is performed by using a plurality of cells such as CA, and as a result, it is possible to reduce the size of signaling between the UE and each of the DU and the CU.

### Third Embodiment.

Encoding/decoding models may be applied to IAB. For example, encoding/decoding models of CSI may be applied to communication between an IAB-donor DU and an IAB-node, or communication between IAB-nodes. Different encoding/decoding models may be used between the IAB-nodes (including the IAB-donor DU).

In the above description, the following problem occurs. That is, an IAB-donor CU needs to learn each of the encoding/decoding models used by DUs and IAB-nodes thereunder, or to perform a notification thereof. Therefore, there arises a problem that a load of the IAB-donor CU increases in the communication system.

The third embodiment discloses a method for solving the above problem.

In order to solve the above problem, in a communication system according to the third embodiment, common encoding/decoding models are used under the IAB-donor CU. The method disclosed in the first embodiment may be used for learning and/or configuring the encoding/decoding models. For example, the IAB-donor CU may make a request to an IAB-node and/or a UE for learning data. The request may be made via the IAB-donor CU and/or an IAB-node. The UE and/or the IAB-node may notify the IAB-donor CU of the learning data. The notification may be performed via the IAB-donor DU and/or a parent IAB-node (an IAB-node present between an IAB-node and the IAB-donor CU, and directly connected to the IAB-node).

The IAB-donor CU may notify an IAB-donor DU of the encoding/decoding models. The IAB-donor DU may perform the notification to an IAB-node and/or a UE. The IAB-node may perform the notification to a child IAB-node (an IAB-node present between an IAB-node and the UE, and directly connected to the IAB-node) and/or the UE. The notification may include information about a final destination. The IAB-donor DU and/or the IAB-node may perform the notification by duplicating the notification that has been received. Consequently, for example, it is possible to reduce the amount of signaling in the communication system.

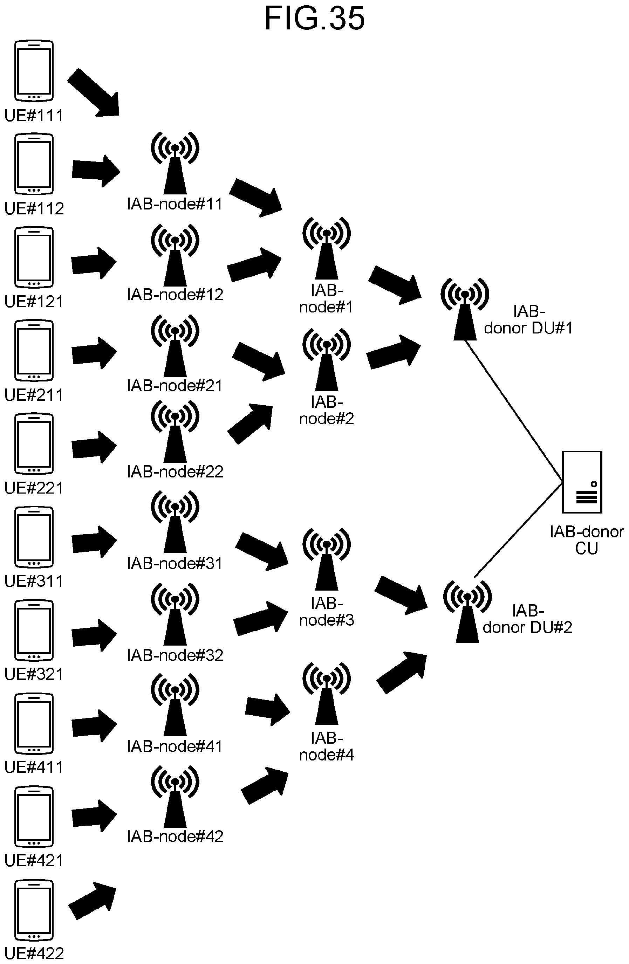

FIG. 35 is a diagram illustrating an example of encoding/decoding models used in IAB-donor DUs, IAB-nodes, and UEs under an IAB-donor CU. Arrows in FIG. 35 indicate encoding/decoding models. In the example illustrated in FIG. 35, the same encoding/decoding models are used in the IAB-donor CU and thereunder.

The IAB-donor CU may learn the encoding/decoding models used between the IAB-donor DUs and/or the IAB-nodes, and the IAB-nodes, child IAB-nodes and/or the UEs which are under the IAB-donor CU. The learning may be performed by an IAB-donor CU for C-plane (sometimes referred to as an IAB-donor CU-CP). Consequently, for example, it is possible to reduce the amount of processing of an IAB-donor CU for U-plane (sometimes referred to as an IAB-donor CU-UP) described later. As another example, the learning may be performed by the IAB-donor CU-UP. Consequently, for example, it is possible to reduce the amount of processing of the IAB-donor CU-CP.

As another example, common encoding/decoding models may be used under each of the IAB-donor DUs. That is, different encoding/decoding models may be used between different IAB-donor DUs. The learning of the encoding/decoding models may be performed by the IAB-donor DUs or the IAB-donor CU.

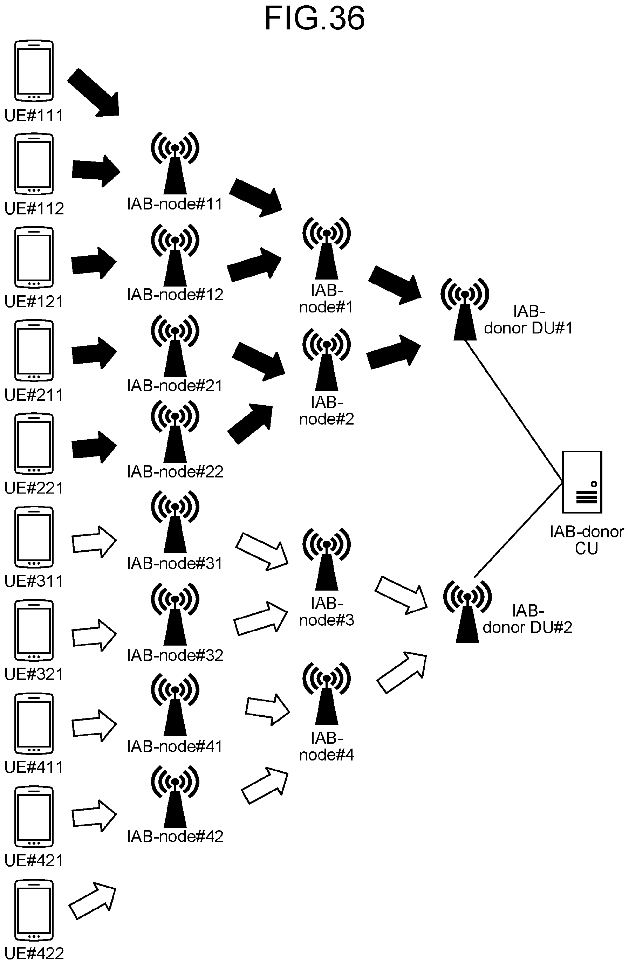

FIG. 36 is a diagram illustrating examples of encoding/decoding models used in the IAB-donor DUs, the IAB-nodes, and the UEs under the IAB-donor CU. Black arrows and white arrows in FIG. 36 indicate different encoding/decoding models. In the examples illustrated in FIG. 36, the same encoding/decoding models are used in the IAB-nodes and the UEs under IAB-donor DU #1. In the IAB-nodes and the UEs under IAB-donor DU #2, encoding/decoding models different from those in the IAB-nodes and the UEs under IAB-donor DU #1 are used.

The IAB-donor DUs may learn encoding/decoding models used between the IAB-donor DUs and/or the IAB-nodes thereunder and the IAB-nodes, the child IAB-nodes and/or the UEs. For example, the IAB-donor DUs may make a request to IAB-nodes and/or UEs for learning data. The UEs and/or the IAB-nodes may notify the IAB-donor DUs of the learning data.

As another example, the same encoding/decoding models may be used under each of IAB-nodes directly connected to the IAB-donor DUs (corresponding to IAB-node #1 to IAB-node #4 in the case of the configuration illustrated in FIG. 36). The encoding/decoding models may be the same encoding/decoding models as those used between the IAB-donor DUs and the IAB-nodes directly connected to the IAB-donor DUs.

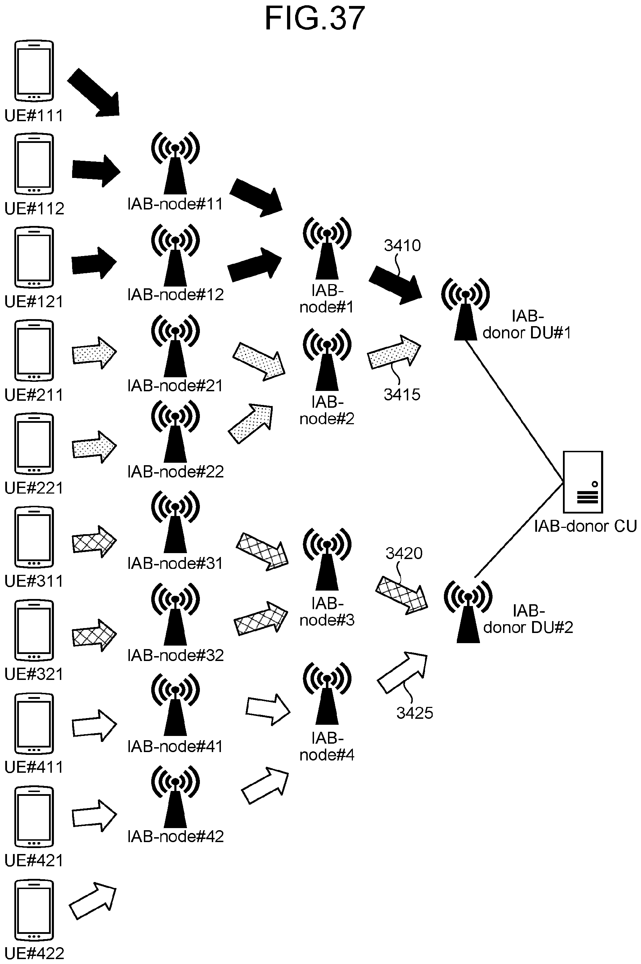

FIG. 37 is a diagram illustrating examples of encoding/decoding models used in the IAB-donor DUs, the IAB-nodes, and the UEs under the IAB-donor CU. Arrows 3410, 3415, 3420, and 3425 in FIG. 37 indicate different encoding/decoding models. In the examples illustrated in FIG. 37, the same encoding/decoding models as the encoding/decoding models indicated by arrow 3410 are used in IAB-donor DU #1 and IAB-node #1, and the IAB-nodes and the UEs under IAB-node #1. The same encoding/decoding models as the encoding/decoding models indicated by arrow 3415 are used in IAB-donor DU #1 and IAB-node #2, and the IAB-nodes and the UEs under IAB-node #2. The same encoding/decoding models as the encoding/decoding models indicated by arrow 3420 are used in IAB-donor DU #2 and IAB-node #3, and the IAB-nodes and the UEs under IAB-node #3. The same encoding/decoding models as the encoding/decoding models indicated by arrow 3425 are used in IAB-donor DU #2 and IAB-node #4, and the IAB-nodes and the UEs under IAB-node #4.

The IAB-nodes directly connected to the IAB-donor DUs may learn encoding/decoding models used between the IAB-nodes directly connected to the IAB-donor DUs and/or the IAB-nodes thereunder and the child IAB-nodes and/or the UEs. For example, the IAB-nodes may make a request to the child IAB-nodes and/or the UEs for learning data. The UEs and/or the child IAB-nodes may notify the IAB-nodes of the learning data.

As another example, common encoding/decoding models may be used between IAB-nodes and/or UEs connected to the same IAB-donor DU, and between IAB-nodes and/or UEs connected to the same IAB-node.

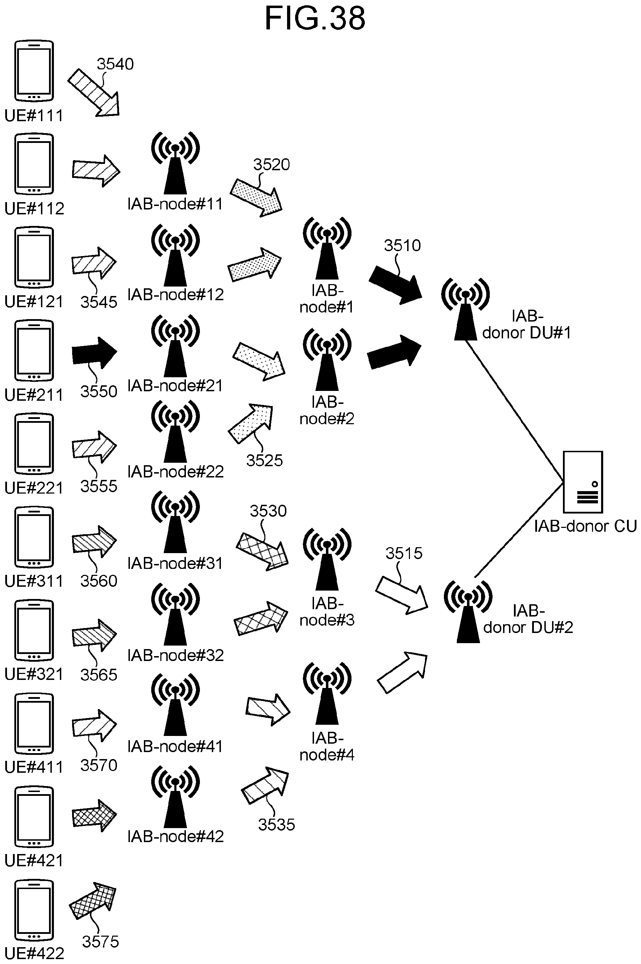

FIG. 38 is a diagram illustrating examples of encoding/decoding models used in the IAB-donor DUs, the IAB-nodes, and the UEs under the IAB-donor CU. Arrows 3510 to 3575 in FIG. 38 indicate different encoding/decoding models. In the examples illustrated in FIG. 38, the same encoding/decoding models as the encoding/decoding models indicated by arrow 3510 are used between IAB-donor DU #1 and IAB-node #1, and between IAB-donor DU #1 and IAB-node #2. Similarly, the same encoding/decoding models as the encoding/decoding models indicated by arrow 3520 are used between IAB-node #1 and IAB-node #11, and between IAB-node #1 and IAB-node #12. The same encoding/decoding models as the encoding/decoding models indicated by arrow 3540 are used between IAB-node #11 and UE #111, and between IAB-node #11 and UE #112.

As another example, the same encoding/decoding models may be used between the IAB-donor DUs and/or IAB-nodes. Different encoding/decoding models may be used for each UE between the IAB-donor DUs or IAB-nodes and the UEs. For example, the same encoding/decoding models may be used between devices that do not move, or in a case where at least one device moves, different encoding/decoding models may be used for each device that moves. Consequently, for example, optimal encoding/decoding models can be learned on the basis of channel states between the UEs and the IAB-nodes or the like while enabling the amount of processing of the IAB-donor CU to be reduced, and as a result, the amount of signaling in the communication system can be reduced.

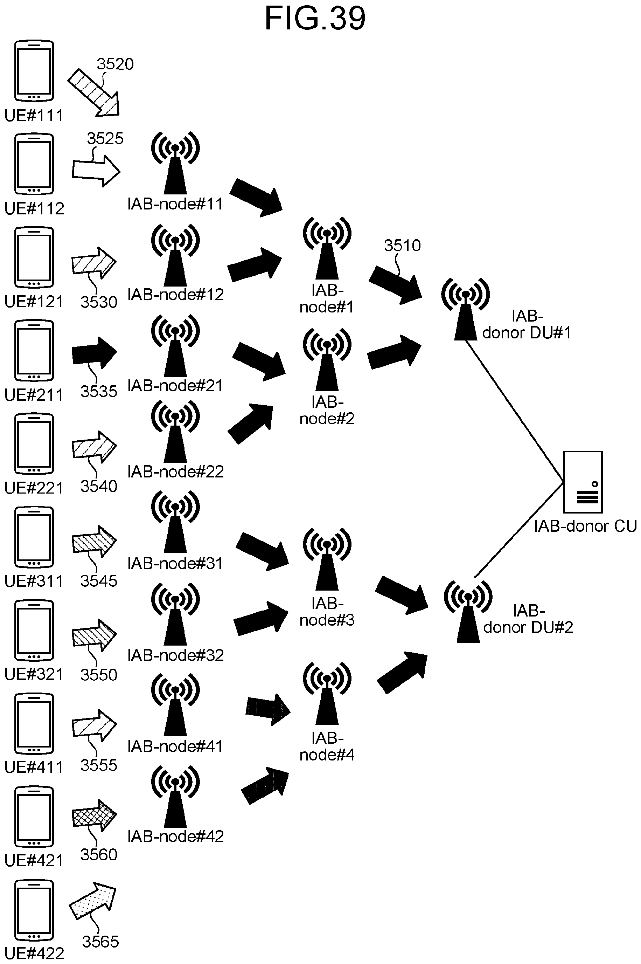

FIG. 39 is a diagram illustrating examples of encoding/decoding models used in the IAB-donor DUs, the IAB-nodes, and the UEs under the IAB-donor CU. Arrows 3510 to 3565 in FIG. 39 indicate different encoding/decoding models. In the examples illustrated in FIG. 39, the same encoding/decoding models as the encoding/decoding models indicated by arrow 3510 are used between the IAB-donor DUs and the IAB-nodes. Different encoding/decoding models indicated by arrows 3520 to 3565 are used between respective UEs and the IAB-nodes.

As another example, an IAB-node group including one or a plurality of IAB-nodes may be present. The IAB-nodes in the group may connect to the same IAB-node and/or IAB-donor DU in the uplink direction. The IAB-donor CU may notify the IAB-donor DU of information about the group, for example, information for identifying the group. The IAB-nodes in the group may use the same encoding/decoding models between the IAB-node and/or the IAB-donor DU connected in the uplink direction and the IAB-nodes.

As another example, the same encoding/decoding models may be used in a path from an IAB-donor DU to a UE. For example, a path ID in IAB and the encoding/decoding models may be associated with each other, or a combination of the path ID in IAB and a UE and the encoding/decoding models may be associated with each other.

Priority of the encoding/decoding models to be used may be determined. For example, in a case where a plurality of paths in the IAB pass through the same IAB-node, encoding/decoding models to be used in the IAB-node may be determined. The priority may be determined in a standard (e.g., determined by path ID) or may be determined by the IAB-donor CU and the IAB-donor CU may notify the IAB-node thereof. Consequently, for example, the use of different encoding/decoding models between IAB-nodes can be prevented, and as a result, malfunction in the communication system can be prevented.

Learning of the encoding/decoding models may be performed for each of the paths between IAB-nodes. Consequently, for example, it is possible to improve flexibility in the communication system.

Another solution will be disclosed. The IAB-donor CU may not manage the encoding/decoding models. The IAB-donor DUs and/or IAB-nodes may manage the encoding/decoding models. Consequently, for example, it is possible to reduce the amount of processing of the IAB-donor CU.

The above methods may be used in combination. For example, different encoding/decoding models may be used between different IAB-donor DUs, and different encoding/decoding models may be used between respective UEs and the IAB-donor DUs. Consequently, for example, it is possible to improve flexibility in the communication system.

According to the third embodiment, the amount of processing of the IAB-donor CU can be reduced in application to the encoding/decoding models to the IAB base stations.

A statement of "gNB or cell" in the present disclosure means that it may either be a gNB or a cell unless otherwise specified.

The above-described embodiments and modifications thereof are merely examples, and the embodiments and modifications thereof can be freely combined. In addition, any component of the embodiments and modifications thereof can be appropriately changed or omitted.

For example, in the above-described embodiments and modifications thereof, the subframe is an example of a time unit of communication in the fifth generation communication system. The subframe may be a scheduling unit. In the above-described embodiments and modifications thereof, the processes described as those performed on a per subframe basis may be performed on a per TTI basis, on a per slot basis, on a per subslot basis, or on a per mini-slot basis.

For example, the methods disclosed in the above-described embodiments and modifications thereof may be applied not only to a vehicle-to-everything (V2X) service but also to a service using the SL communication. For example, the methods may be applied to the SL communication used in various services such as proximity-based service, public safety, communication between wearable terminals, and device-to-device communication in a factory.

While the present disclosure has been described in detail, the above description is in all aspects illustrative and not restrictive. It is understood that numerous modifications not illustrated can be devised.

### Reference Signs List

200, 210 communication system; 202 communication terminal device (user equipment); 203, 207, 213, 217, 223-1, 224-1, 224-2, 226-1, 226-2, 750 base station device (base station); 204 MME/S-GW unit (MME unit); 204a MME; 214 AMF/SMF/UPF unit (5GC unit); 218 central unit; 219 distributed unit; 301, 403 protocol processing unit; 302 application unit; 303, 404 transmission data buffer unit; 304, 405 encoder unit; 305, 406 modulation unit; 306, 407 frequency conversion unit; 307-1 to 307-4, 408-1 to 408-4 antenna; 308, 409 demodulation unit; 309, 410 decoder unit; 310, 411, 506, 526 control unit; 401 EPC communication unit; 402 other-base-station communication unit; 412 5GC communication unit; 501 PDN GW communication unit; 502, 522 base station communication unit; 503, 523 user plane communication unit; 504 HeNBGW communication unit; 505, 525 control plane control unit; 505-1, 525-1 NAS security unit; 505-2 SAE bearer control unit; 505-3, 525-3 idle state mobility management unit; 521 data network communication unit; 525-2 PDU session control unit; 527 session management unit; 751-1 to 751-8 beam; 810 learning device; 811, 831, 861 data acquisition unit; 812 model generation unit; 820, 850 learned model storage unit; 830 inference device (encoding device); 832 encoding unit; 840 transmission unit; 860 inference device (decoding device); 862 decoding unit; 870 communication control unit.

## Claims

1. A communication system comprising:
a communication terminal capable of encoding data by using an encoding model that encodes and outputs data that has been input; and
a base station including a central unit and one or more distributed units, the distributed units decoding data encoded with the encoding model by using a decoding model that, when encoded data is input, decodes and outputs the data, wherein
the central unit or the distributed units perform machine learning by using learning data including data transmitted by the communication terminal without performing encoding to generate the encoding model and the decoding model, and notify the communication terminal of a learning result of the encoding model.

2. The communication system according to claim 1, wherein
the central unit performs machine learning on each of the distributed units by using learning data including data transmitted by the communication terminal without performing encoding to generate the encoding model and the decoding model for each of the distributed units, notifies each of the distributed units of a learning result of a corresponding decoding model, and notifies each of the communication terminals communicating with one of the distributed units of a learning result of an encoding model corresponding to a decoding model used by the distributed unit with which the communication terminal communicates.

3. The communication system according to claim 1, wherein
the distributed units are grouped on a basis of a defined condition, and
the central unit performs machine learning on each of groups of the distributed units by using learning data including data transmitted by the communication terminal without performing encoding to generate the encoding model and the decoding model for each of the groups, notifies each of the distributed units of a learning result of a corresponding decoding model, and notifies each of the communication terminals communicating with one of the distributed units of a learning result of an encoding model corresponding to a decoding model used by the distributed unit with which the communication terminal communicates.

4. The communication system according to claim 1, wherein
each of the distributed units performs machine learning by using learning data including data transmitted by the communication terminal being communicating with the distributed unit without performing encoding to generate an encoding model and a decoding model, and notifies the communication terminal being communicating with the distributed unit of a learning result of the encoding model.

5. The communication system according to any one of claims 1 to 4, wherein
the central unit or the distributed units that have performed the machine learning relearn the encoding model and the decoding model when a defined relearning condition is satisfied, and notify the communication terminals that communicate with the distributed units using the relearned decoding model of a relearning result of the encoding model.

6. The communication system according to any one of claims 1 to 5, wherein
in a case where the communication terminal that encodes data by using the encoding model executes handover to switch a connection destination from a first distributed unit to a second distributed unit,
the first distributed unit notifies the second distributed unit of information about the decoding model used in communication with the communication terminal that executes handover, and
the communication terminal continues to use an encoding model used in communication with the first distributed unit also in communication with the second distributed unit after execution of handover.

7. The communication system according to any one of claims 1 to 5, wherein
in a case where the communication terminal that encodes data by using the encoding model executes handover to switch a connection destination from a first distributed unit to a second distributed unit,
the second distributed unit notifies the first distributed unit of information about the encoding model to be used by the communication terminal,
the first distributed unit notifies the communication terminal of the information about the encoding model that the second distributed unit has notified the first distributed unit of, and
the communication terminal constructs an encoding model to be used in communication with the second distributed unit after execution of handover on a basis of the information about the encoding model that the first distributed unit has notified the communication terminal of.

8. The communication system according to any one of claims 1 to 7, wherein
in dual connectivity in which the communication terminal is connected to a master distributed unit that is any one of the distributed units, and is connected to a secondary distributed unit that is any one of the distributed units and is different from the master distributed unit,
the communication terminal uses a same encoding model in communication with each of the master distributed unit and the secondary distributed unit, and
the master distributed unit and the secondary distributed unit use a same decoding model in communication with the communication terminal.

9. The communication system according to any one of claims 1 to 7, wherein
in dual connectivity in which the communication terminal is connected to a master distributed unit that is any one of the distributed units, and is connected to a secondary distributed unit that is any one of the distributed units and is different from the master distributed unit,
the communication terminal uses a different encoding model in communication with each of the master distributed unit and the secondary distributed unit, and
the master distributed unit and the secondary distributed unit use different decoding models in communication with the communication terminal.

10. A communication system comprising:
a first base station to operate as a donor of integrated access and backhaul that realizes, by wireless communication, both an access link that connects a communication terminal and a base station and a backhaul link that connects base stations, the first base station including a central unit and a distributed unit;
one or more second base stations to operate as nodes of the integrated access and backhaul; and
a communication terminal connected to the first base station or the second base stations and capable of encoding data by using an encoding model that encodes and outputs data that has been input, wherein
in a case where data encoded with the encoding model is received, the distributed unit and the second base stations decode the encoded data by using a decoding model that, when encoded data is input, decodes and outputs the data, and
the central unit or the distributed unit performs machine learning by using learning data including data transmitted by the communication terminal without performing encoding to generate the encoding model and the decoding model, notifies the communication terminal of a learning result of the encoding model, and notifies the second base stations of a learning result of the encoding model and the decoding model.

11. The communication system according to claim 10, wherein
the communication terminal and the second base stations encode data by using a same encoding model and transmit the data, and
all of the distributed unit and the second base stations use a same decoding model to decode data encoded by using the encoding model.
